# EUROPEAN PATENT APPLICATION

(11) **EP 4 800 462 A1**
(43) Date of publication of application: **02.09.2026**
(21) Application number: 24882533.3
(22) Date of filing: 28.10.2024
(51) Int. Cl.: G02C 7/06, G02B 27/02, G02C 11/00, G02F 1/19

(54) **LENS CONTROL DEVICE, GLASSES, EYEWEAR, LENS CONTROL METHOD, AND LENS CONTROL PROGRAM**

(30) Priority: 27.10.2023 JP 2023185035
(71) Applicant: Vixion Inc., Tokyo 103-0012 (JP)
(72) Inventor: UCHIUMI, Toshiharu, Tokyo 103-0012 (JP); TAKIZAWA, Shigeru, Tokyo 103-0012 (JP)
(74) Representative: AWA Sweden AB
(86) International application number: PCT/JP2024/038418
(87) International publication number: WO 2025/089427

(57) **Abstract**

To enable automatic control of the focal length of a variable-focus lens once the focus is set, in the lens control device of the present embodiment, in setting mode, the device acquires the detection distance and the focal length of the variable-focus lens when the user operates the device in manual control mode to focus on the viewed object, calculates the difference between the acquired focal length of the variable-focus lens and the focal length of the focal length identification information relative to the detection distance as a correction value, generates new identification information corrected based on the correction value, and stores it in the memory unit, and in usage mode, controls the variable-focus lens to a focal length corresponding to the distance to any viewed object based on the newly stored identification information.

## Description

### Technical Field

Embodiments described herein relate generally to a lens control device, a lens control method, and a lens control program applicable to eyeglasses, eyewear, and the like comprising variable-focus lenses for the eyes.

### Background Art

Patent Literature 1 discloses a configuration of eyeglasses using variable-focus lenses. These eyeglasses, by positioning a variable-focus lens in front of each of the user's eyes and allowing the user to adjust the focal length of each variable-focus lens to match an object being viewed (focusing), enable the user to see the object being viewed at any distance clearly. These eyeglasses are designed so that a pair of variable-focus lenses are held in position in front of the user's left and right eyes, respectively, by a frame, and each of the earpieces attached to the left and right sides of the frame is provided with a wheel-type operation unit. When the user turns the right-side wheel, the focal length of the variable-focus lens for the right eye changes, and when the user turns the left-side wheel, the focal length of the variable-focus lens for the left eye changes. That is, by turning the left and right wheels while looking at the object being viewed to adjust the focus processing of each variable-focus lens and bring it into focus, the user is able to make the object visible. However, users wearing these glasses must readjust the focal length of the variable-focus lenses each time they change their viewing target to an object at a different distance.

On the other hand, Patent Literature 2 discloses a lens control device capable of controlling the focal length of a variable-focus lens according to the viewing distance. If this lens control device is applied to the aforementioned variable-focus lens glasses, when the user views any object, the distance to that object is detected, and the variable-focus lens is automatically controlled to a focal length corresponding to the distance to the object. Therefore, the user is spared the cumbersome task of readjusting the focal length each time the viewed object changes.

### Citation List

### Patent Literature

Patent Literature 1: JP 2009-543148A
Patent Literature 2: JP 2023-040850A

### Summary of Invention

### Technical Problem

In variable-focus lens eyeglasses using a conventional lens control device with the above configuration, it is necessary to create in advance and store in a storage unit focal length identification information indicating the correspondence between the viewing distance and the focal length of the variable-focus lens. In contrast, since users' visual acuity varies from person to person, when a user wears such variable-focus lens eyeglasses, the focal length identification information must be created and stored individually as an initial setting. The setting of this focal length identification information is desirable to be done precisely across the entire viewing distance range, which posed the problem of requiring users to perform cumbersome adjustment operations.

### Solution to Problem

According to one embodiment according to the present invention, a lens control device which controls a focal length of a variable-forcus lens for an eye includes a storage unit that stores focal length identification information for identifying, in accordance with a distance from a mounting position of a variable-focus lens for an eye to a viewed object, a focal length of the variable-focus lens, and a control unit that selectively executes an automatic control mode, in which the focal length of the variable-focus lens is controlled based on a detection distance from a distance detection unit detecting a distance from the variable-focus lens to the viewed object and the focal length identification information in the storage unit, and a manual control mode, in which the focal length of the variable-focus lens is controlled based on a command operation performed on an operation unit. The control unit has a setting mode that acquires a detection distance from the distance detection unit and a focal length of the variable-focus lens when the operation unit is command operated to bring the viewed object into focus in the manual control mode, calculates a difference between a focal length of the variable-focus lens at the time of the acquired focusing operation and a focal length of the focal length identification information corresponding to the detection distance as a correction value, generates new focal length identification information by correcting, modifying, or updating the focal length identification information based on the correction value, and stores it in the storage unit, and a usage mode that controls the variable-focus lens to a focal length corresponding to a distance to any viewed object detected by the distance detection unit based on new focal length identification information stored in the setting mode.

Herein, the control unit is characterized in that, in the setting mode, it generates new focal length identification information that has been corrected, modified, or updated based on the correction value for at least one distance of a viewed object that differs from the detection distance of the focal length identification information, and stores it in the storage unit.

Furthermore, the control unit is characterized in that, in the setting mode, it uses the same correction value for the correction, modification, or update for a distance to any viewed object.

Furthermore, the control unit is characterized in that, it includes at least one of the focal length identification information including adding a refractive power such that, when the lens refractive power at a position where the distance to the viewed object is approximately 100 cm is taken as a reference, the lens refractive power at a distance of 10 cm to the observed object falls within the range of 6.96 D to 6.56 D,
the focal length identification information that includes adding a refractive power such that, when the lens refractive power at a position where the distance to the viewed object is approximately 100 cm is taken as a reference, the lens refractive power at a distance of approximately 50 cm to the viewed object falls within the range of 0.99 D to 0.59 D,
the focal length identification information that includes adding a refractive power such that, when the lens refractive power at a position where the distance to the viewed object is approximately 80 cm is taken as a reference, the lens refractive power at a distance of approximately 10 cm to the viewed object falls within the range of 6.65 D to 6.25 D,
the focal length identification information that includes adding a refractive power such that, when the lens refractive power at a position where the distance to the viewed object is approximately 80 cm is taken as a reference, the lens refractive power at a distance of approximately 50 cm to the viewed object falls within the range of 0.68 D to 0.28 D, and
the focal length identification information that includes adding a refractive power such that, when the lens refractive power at a position where the distance to the viewed object is approximately 60 cm is taken as a reference, the lens refractive power at a distance of approximately 10 cm to the viewed object falls within the range of 6.49 D to 6.09 D.

Furthermore, the focal length identification information is characterized by including at least one of the following requirements, the requirement includes using the lens refractive power at a position where a distance to the viewed object is approximately X [cm] is taken as a reference, the lens refractive power at a distance of Y [cm] to the viewed object falls within the range of A to B [D],
X:100, Y:1, A:21.22, B:21.62,
X:100, Y:2, A:19.49, B:19.89,
X:100, Y:3, A:17.77, B:18.17,
X:100, Y:4, A:17.77, B:18.17,
X:100, Y:5, A:12.69, B:13.09,
X:100, Y:6, A:10.35, B:10.75,
X:100, Y:7, A:9.36, B:9.76,
X:100, Y:8, A:8.37, B:8.77,
X:100, Y:9, A:7.38, B:7.78,
X:100, Y:10, A:6.56, B:6.96,
X:100, Y:11, A:5.75, B:6.15,
X:100, Y:12, A:5.26, B:5.66,
X:100, Y:13, A:4.77, B:5.17,
X:100, Y:14, A:4.29, B:4.69,
X:100, Y:15, A:3.96, B:4.36,
X:100, Y:16, A:3.64, B:4.04,
X:100, Y:17, A:3.32, B:3.72,
X:100, Y:18, A:3.16, B:3.56,
X:100, Y:19, A:3.00, B:3.40,
X:100, Y:20, A:2.83, B:3.23,
X:100, Y:21, A:2.67, B:3.07,
X:100, Y:22, A:2.51, B:2.91,
X:100, Y:23, A:2.35, B:2.75,
X:100, Y:24, A:2.19, B:2.59,
X:100, Y:25, A:2.19, B:2.59,
X:100, Y:26, A:2.03, B:2.43,
X:100, Y:27, A:2.03, B:2.43,
X:100, Y:28, A:1.87, B:2.27,
X:100, Y:29, A:1.71, B:2.11,
X:100, Y:30, A:1.71, B:2.11,
X:100, Y:31, A:1.55, B:1.95,
X:100, Y:32, A:1.55, B:1.95,
X:100, Y:33, A:1.39, B:1.79,
X:100, Y:34, A:1.23, B:1.63,
X:100, Y:35, A:1.23, B:1.63,
X:100, Y:36, A:1.07, B:1.47,
X:100, Y:37, A:1.07, B:1.47,
X:100, Y:38, A:0.91, B:1.31,
X:100, Y:39, A:0.91, B:1.31,
X:100, Y:40, A:0.91, B:1.31,
X:100, Y:41, A:0.91, B:1.31,
X:100, Y:42, A:0.75, B:1.15,
X:100, Y:43, A:0.75, B:1.15,
X:100, Y:44, A:0.75, B:1.15,
X:100, Y:45, A:0.75, B:1.15,
X:100, Y:46, A:0.59, B:0.99,
X:100, Y:47, A:0.59, B:0.99,
X:100, Y:48, A:0.59, B:0.99,
X:100, Y:49, A:0.59, B:0.99,
X:100, Y:50, A:0.59, B:0.99,
X:100, Y:51, A:0.44, B:0.84,
X:100, Y:52, A:0.44, B:0.84,
X:100, Y:53, A:0.44, B:0.84,
X:100, Y:54, A:0.44, B:0.84,
X:100, Y:55, A:0.44, B:0.84,
X:100, Y:56, A:0.44, B:0.84,
X:100, Y:57, A:0.44, B:0.84,
X:100, Y:58, A:0.44, B:0.84,
X:100, Y:59, A:0.28, B:0.68,
X:100, Y:60, A:0.28, B:0.68,
X:100, Y:61, A:0.28, B:0.68,
X:100, Y:62, A:0.28, B:0.68,
X:100, Y:63, A:0.28, B:0.68,
X:100, Y:64, A:0.28, B:0.68,
X:100, Y:65, A:0.28, B:0.68,
X:100, Y:66, A:0.28, B:0.68,
X:100, Y:67, A:0.28, B:0.68,
X:100, Y:68, A:0.28, B:0.68,
X:100, Y:69, A:0.28, B:0.68,
X:100, Y:70, A:0.28, B:0.68,
X:100, Y:71, A:0.28, B:0.68,
X:100, Y:72, A:0.28, B:0.68,
X:100, Y:73, A:0.12, B:0.52,
X:100, Y:74, A:0.12, B:0.52,
X:100, Y:75, A:0.12, B:0.52,
X:100, Y:76, A:0.12, B:0.52,
X:100, Y:77, A:0.12, B:0.52,
X:100, Y:78, A:0.12, B:0.52,
X:100, Y:79, A:0.12, B:0.52,
X:100, Y:80, A:0.12, B:0.52,
X:100, Y:81, A:0.12, B:0.52,
X:100, Y:82, A:0.12, B:0.52,
X:100, Y:83, A:0.12, B:0.52,
X:100, Y:84, A:0.12, B:0.52,
X:100, Y:85, A:0.12, B:0.52,
X:100, Y:86, A:-0.04, B:0.36,
X:100, Y:87, A:-0.04, B:0.36,
X:100, Y:88, A:-0.04, B:0.36,
X:100, Y:89, A:-0.04, B:0.36,
X:100, Y:90, A:-0.04, B:0.36,
X:100, Y:91, A:-0.04, B:0.36,
X:100, Y:92, A:-0.04, B:0.36,
X:100, Y:93, A:-0.04, B:0.36,
X:100, Y:94, A:-0.04, B:0.36,
X:100, Y:95, A:-0.04, B:0.36,
X:100, Y:96, A:-0.04, B:0.36,
X:100, Y:97, A:-0.04, B:0.36,
X:100, Y:98, A:-0.04, B:0.36,
X:100, Y:99, A:-0.20, B:0.20,
X:100, Y:100, A:-0.20, B:0.20,
X:90, Y:1, A:21.06, B:21.46,
X:90, Y:2, A:19.33, B:19.73,
X:90, Y:3, A:17.61, B:18.01,
X:90, Y:4, A:17.61, B:18.01,
X:90, Y:5, A:12.53, B:12.93,
X:90, Y:6, A:10.19, B:10.59,
X:90, Y:7, A:9.20, B:9.60,
X:90, Y:8, A:8.21, B:8.61,
X:90, Y:9, A:7.22, B:7.62,
X:90, Y:10, A:6.40, B:6.80,
X:90, Y:11, A:5.59, B:5.99,
X:90, Y:12, A:5.10, B:5.50,
X:90, Y:13, A:4.61, B:5.01,
X:90, Y:14, A:4.13, B:4.53,
X:90, Y:15, A:3.80, B:4.20,
X:90, Y:16, A:3.48, B:3.88,
X:90, Y:17, A:3.16, B:3.56,
X:90, Y:18, A:3.00, B:3.40,
X:90, Y:19, A:2.84, B:3.24,
X:90, Y:20, A:2.68, B:3.08,
X:90, Y:21, A:2.52, B:2.92,
X:90, Y:22, A:2.35, B:2.75,
X:90, Y:23, A:2.19, B:2.59,
X:90, Y:24, A:2.03, B:2.43,
X:90, Y:25, A:2.03, B:2.43,
X:90, Y:26, A:1.87, B:2.27,
X:90, Y:27, A:1.87, B:2.27,
X:90, Y:28, A:1.71, B:2.11,
X:90, Y:29, A:1.55, B:1.95,
X:90, Y:30, A:1.55, B:1.95,
X:90, Y:31, A:1.39, B:1.79,
X:90, Y:32, A:1.39, B:1.79,
X:90, Y:33, A:1.23, B:1.63,
X:90, Y:34, A:1.07, B:1.47,
X:90, Y:35, A:1.07, B:1.47,
X:90, Y:36, A:0.91, B:1.31,
X:90, Y:37, A:0.91, B:1.31,
X:90, Y:38, A:0.75, B:1.15,
X:90, Y:39, A:0.75, B:1.15,
X:90, Y:40, A:0.75, B:1.15,
X:90, Y:41, A:0.75, B:1.15,
X:90, Y:42, A:0.60, B:1.00,
X:90, Y:43, A:0.60, B:1.00,
X:90, Y:44, A:0.60, B:1.00,
X:90, Y:45, A:0.60, B:1.00,
X:90, Y:46, A:0.44, B:0.84,
X:90, Y:47, A:0.44, B:0.84,
X:90, Y:48, A:0.44, B:0.84,
X:90, Y:49, A:0.44, B:0.84,
X:90, Y:50, A:0.44, B:0.84,
X:90, Y:51, A:0.28, B:0.68,
X:90, Y:52, A:0.28, B:0.68,
X:90, Y:53, A:0.28, B:0.68,
X:90, Y:54, A:0.28, B:0.68,
X:90, Y:55, A:0.28, B:0.68,
X:90, Y:56, A:0.28, B:0.68,
X:90, Y:57, A:0.28, B:0.68,
X:90, Y:58, A:0.28, B:0.68,
X:90, Y:59, A:0.12, B:0.52,
X:90, Y:60, A:0.12, B:0.52,
X:90, Y:61, A:0.12, B:0.52,
X:90, Y:62, A:0.12, B:0.52,
X:90, Y:63, A:0.12, B:0.52,
X:90, Y:64, A:0.12, B:0.52,
X:90, Y:65, A:0.12, B:0.52,
X:90, Y:66, A:0.12, B:0.52,
X:90, Y:67, A:0.12, B:0.52,
X:90, Y:68, A:0.12, B:0.52,
X:90, Y:69, A:0.12, B:0.52,
X:90, Y:70, A:0.12, B:0.52,
X:90, Y:71, A:0.12, B:0.52,
X:90, Y:72, A:0.12, B:0.52,
X:90, Y:73, A:-0.04, B:0.36,
X:90, Y:74, A:-0.04, B:0.36,
X:90, Y:75, A:-0.04, B:0.36,
X:90, Y:76, A:-0.04, B:0.36,
X:90, Y:77, A:-0.04, B:0.36,
X:90, Y:78, A:-0.04, B:0.36,
X:90, Y:79, A:-0.04, B:0.36,
X:90, Y:80, A:-0.04, B:0.36,
X:90, Y:81, A:-0.04, B:0.36,
X:90, Y:82, A:-0.04, B:0.36,
X:90, Y:83, A:-0.04, B:0.36,
X:90, Y:84, A:-0.04, B:0.36,
X:90, Y:85, A:-0.04, B:0.36,
X:90, Y:86, A:-0.20, B:0.20,
X:90, Y:87, A:-0.20, B:0.20,
X:90, Y:88, A:-0.20, B:0.20,
X:90, Y:89, A:-0.20, B:0.20,
X:90, Y:90, A:-0.20, B:0.20,
X:90, Y:91, A:-0.20, B:0.20,
X:90, Y:92, A:-0.20, B:0.20,
X:90, Y:93, A:-0.20, B:0.20,
X:90, Y:94, A:-0.20, B:0.20,
X:90, Y:95, A:-0.20, B:0.20,
X:90, Y:96, A:-0.20, B:0.20,
X:90, Y:97, A:-0.20, B:0.20,
X:90, Y:98, A:-0.20, B:0.20,
X:90, Y:99, A:-0.36, B:0.04,
X:90, Y:100, A:-0.36, B:0.0,
X:80, Y:1, A:20.90, B:21.30,
X:80, Y:2, A:19.17, B:19.57,
X:80, Y:3, A:17.45, B:17.85,
X:80, Y:4, A:17.45, B:17.85,
X:80, Y:5, A:12.37, B:12.77,
X:80, Y:6, A:10.04, B:10.44,
X:80, Y:7, A:9.04, B:9.44,
X:80, Y:8, A:8.05, B:8.45,
X:80, Y:9, A:7.06, B:7.46,
X:80, Y:10, A:6.25, B:6.65,
X:80, Y:11, A:5.43, B:5.83,
X:80, Y:12, A:4.94, B:5.34,
X:80, Y:13, A:4.45, B:4.85,
X:80, Y:14, A:3.97, B:4.37,
X:80, Y:15, A:3.65, B:4.05,
X:80, Y:16, A:3.32, B:3.72,
X:80, Y:17, A:3.00, B:3.40,
X:80, Y:18, A:2.84, B:3.24,
X:80, Y:19, A:2.68, B:3.08,
X:80, Y:20, A:2.52, B:2.92,
X:80, Y:21, A:2.36, B:2.76,
X:80, Y:22, A:2.20, B:2.60,
X:80, Y:23, A:2.04, B:2.44,
X:80, Y:24, A:1.87, B:2.27,
X:80, Y:25, A:1.87, B:2.27,
X:80, Y:26, A:1.71, B:2.11,
X:80, Y:27, A:1.71, B:2.11,
X:80, Y:28, A:1.55, B:1.95,
X:80, Y:29, A:1.39, B:1.79,
X:80, Y:30, A:1.39, B:1.79,
X:80, Y:31, A:1.23, B:1.63,
X:80, Y:32, A:1.23, B:1.63,
X:80, Y:33, A:1.07, B:1.47,
X:80, Y:34, A:0.91, B:1.31,
X:80, Y:35, A:0.91, B:1.31,
X:80, Y:36, A:0.76, B:1.16,
X:80, Y:37, A:0.76, B:1.16,
X:80, Y:38, A:0.60, B:1.00,
X:80, Y:39, A:0.60, B:1.00,
X:80, Y:40, A:0.60, B:1.00,
X:80, Y:41, A:0.60, B:1.00,
X:80, Y:42, A:0.44, B:0.84,
X:80, Y:43, A:0.44, B:0.84,
X:80, Y:44, A:0.44, B:0.84,
X:80, Y:45, A:0.44, B:0.84,,
X:80, Y:46, A:0.28, B:0.68,
X:80, Y:47, A:0.28, B:0.68,
X:80, Y:48, A:0.28, B:0.68,
X:80, Y:49, A:0.28, B:0.68,
X:80, Y:50, A:0.28, B:0.68,
X:80, Y:51, A:0.12, B:0.52,
X:80, Y:52, A:0.12, B:0.52,
X:80, Y:53, A:0.12, B:0.52,
X:80, Y:54, A:0.12, B:0.52,
X:80, Y:55, A:0.12, B:0.52,
X:80, Y:56, A:0.12, B:0.52,
X:80, Y:57, A:0.12, B:0.52,
X:80, Y:58, A:0.12, B:0.52,
X:80, Y:59, A:-0.04, B:0.36,
X:80, Y:60, A:-0.04, B:0.36,
X:80, Y:61, A:-0.04, B:0.36,
X:80, Y:62, A:-0.04, B:0.36,
X:80, Y:63, A:-0.04, B:0.36,
X:80, Y:64, A:-0.04, B:0.36,
X:80, Y:65, A:-0.04, B:0.36,
X:80, Y:66, A:-0.04, B:0.36,
X:80, Y:67, A:-0.04, B:0.36,
X:80, Y:68, A:-0.04, B:0.36,
X:80, Y:69, A:-0.04, B:0.36,
X:80, Y:70, A:-0.04, B:0.36,
X:80, Y:71, A:-0.04, B:0.36,
X:80, Y:72, A:-0.04, B:0.36,
X:80, Y:73, A:-0.02, B:0.20,
X:80, Y:74, A:-0.02, B:0.20,
X:80, Y:75, A:-0.02, B:0.20,
X:80, Y:76, A:-0.02, B:0.20,
X:80, Y:77, A:-0.02, B:0.20,
X:80, Y:78, A:-0.02, B:0.20,
X:80, Y:79, A:-0.02, B:0.20,
X:80, Y:80, A:-0.02, B:0.20,
X:80, Y:81, A:-0.02, B:0.20,
X:80, Y:82, A:-0.02, B:0.20,
X:80, Y:83, A:-0.02, B:0.20,
X:80, Y:84, A:-0.02, B:0.20,
X:80, Y:85, A:-0.02, B:0.20,
X:80, Y:86, A:-0.36, B:0.04,
X:80, Y:87, A:-0.36, B:0.04,
X:80, Y:88, A:-0.36, B:0.04,
X:80, Y:89, A:-0.36, B:0.04,
X:80, Y:90, A:-0.36, B:0.04,
X:80, Y:91, A:-0.36, B:0.04,
X:80, Y:92, A:-0.36, B:0.04,
X:80, Y:93, A:-0.36, B:0.04,
X:80, Y:94, A:-0.36, B:0.04,
X:80, Y:95, A:-0.36, B:0.04,
X:80, Y:96, A:-0.36, B:0.04,
X:80, Y:97, A:-0.36, B:0.04,
X:80, Y:98, A:-0.36, B:0.04,
X:80, Y:99, A:-0.52, B:-0.12,
X:80, Y:100, A:-0.52, B:-0.12,
X:70, Y:1, A:20.74, B:21.14,
X:70, Y:2, A:19.01, B:19.41,
X:70, Y:3, A:17.29, B:17.69,
X:70, Y:4, A:17.29, B:17.69,
X:70, Y:5, A:12.21, B:12.61,
X:70, Y:6, A:9.88, B:10.28,
X:70, Y:7, A:8.88, B:9.28,
X:70, Y:8, A:7.89, B:8.29,
X:70, Y:9, A:6.91, B:7.31,
X:70, Y:10, A:6.09, B:6.49,
X:70, Y:11, A:5.27, B:5.67,
X:70, Y:12, A:4.78, B:5.18,
X:70, Y:13, A:4.30, B:4.70,
X:70, Y:14, A:3.81, B:4.21,
X:70, Y:15, A:3.49, B:3.89,
X:70, Y:16, A:3.16, B:3.56,
X:70, Y:17, A:2.84, B:3.24,
X:70, Y:18, A:2.68, B:3.08,
X:70, Y:19, A:2.52, B:2.92,
X:70, Y:20, A:2.36, B:2.76,
X:70, Y:21, A:2.20, B:2.60,
X:70, Y:22, A:2.04, B:2.44,
X:70, Y:23, A:1.88, B:2.28,
X:70, Y:24, A:1.72, B:2.12,
X:70, Y:25, A:1.72, B:2.12,
X:70, Y:26, A:1.56, B:1.96,
X:70, Y:27, A:1.56, B:1.96,
X:70, Y:28, A:1.40, B:1.80,
X:70, Y:29, A:1.24, B:1.64,
X:70, Y:30, A:1.24, B:1.64,
X:70, Y:31, A:1.08, B:1.48,
X:70, Y:32, A:1.08, B:1.48,
X:70, Y:33, A:0.92, B:1.32,
X:70, Y:34, A:0.76, B:1.16,
X:70, Y:35, A:0.76, B:1.16,
X:70, Y:36, A:0.60, B:1.00,
X:70, Y:37, A:0.60, B:1.00,
X:70, Y:38, A:0.44, B:0.84,
X:70, Y:39, A:0.44, B:0.84,
X:70, Y:40, A:0.44, B:0.84,
X:70, Y:41, A:0.44, B:0.84,
X:70, Y:42, A:0.28, B:0.68,
X:70, Y:43, A:0.28, B:0.68,
X:70, Y:44, A:0.28, B:0.68,
X:70, Y:45, A:0.28, B:0.68,
X:70, Y:46, A:0.12, B:0.52,
X:70, Y:47, A:0.12, B:0.52,
X:70, Y:48, A:0.12, B:0.52,
X:70, Y:49, A:0.12, B:0.52,
X:70, Y:50, A:0.12, B:0.52,
X:70, Y:51, A:-0.04, B:0.36,
X:70, Y:52, A:-0.04, B:0.36,
X:70, Y:53, A:-0.04, B:0.36,
X:70, Y:54, A:-0.04, B:0.36,
X:70, Y:55, A:-0.04, B:0.36,
X:70, Y:56, A:-0.04, B:0.36,
X:70, Y:57, A:-0.04, B:0.36,
X:70, Y:58, A:-0.04, B:0.36,
X:70, Y:59, A:-0.20, B:0.20,
X:70, Y:60, A:-0.20, B:0.20,
X:70, Y:61, A:-0.20, B:0.20,
X:70, Y:62, A:-0.20, B:0.20,
X:70, Y:63, A:-0.20, B:0.20,
X:70, Y:64, A:-0.20, B:0.20,
X:70, Y:65, A:-0.20, B:0.20,
X:70, Y:66, A:-0.20, B:0.20,
X:70, Y:67, A:-0.20, B:0.20,
X:70, Y:68, A:-0.20, B:0.20,
X:70, Y:69, A:-0.20, B:0.20,
X:70, Y:70, A:-0.20, B:0.20,
X:70, Y:71, A:-0.20, B:0.20,
X:70, Y:72, A:-0.20, B:0.20,
X:70, Y:73, A:-0.36, B:0.04,
X:70, Y:74, A:-0.36, B:0.04,
X:70, Y:75, A:-0.36, B:0.04,
X:70, Y:76, A:-0.36, B:0.04,
X:70, Y:77, A:-0.36, B:0.04,
X:70, Y:78, A:-0.36, B:0.04,
X:70, Y:79, A:-0.36, B:0.04,
X:70, Y:80, A:-0.36, B:0.04,
X:70, Y:81, A:-0.36, B:0.04,
X:70, Y:82, A:-0.36, B:0.04,
X:70, Y:83, A:-0.36, B:0.04,
X:70, Y:84, A:-0.36, B:0.04,
X:70, Y:85, A:-0.36, B:0.04,
X:70, Y:86, A:-0.52, B:-0.12,
X:70, Y:87, A:-0.52, B:-0.12,
X:70, Y:88, A:-0.52, B:-0.12,
X:70, Y:89, A:-0.52, B:-0.12,
X:70, Y:90, A:-0.52, B:-0.12,
X:70, Y:91, A:-0.52, B:-0.12,
X:70, Y:92, A:-0.52, B:-0.12,
X:70, Y:93, A:-0.52, B:-0.12,
X:70, Y:94, A:-0.52, B:-0.12,
X:70, Y:95, A:-0.52, B:-0.12,
X:70, Y:96, A:-0.52, B:-0.12,
X:70, Y:97, A:-0.52, B:-0.12,
X:70, Y:98, A:-0.52, B:-0.12,
X:70, Y:99, A:-0.68, B:-0.28,
X:70, Y:100, A:-0.68, B:-0.28,
X:60, Y:1, A:20.74, B:21.14,
X:60, Y:2, A:19.01, B:19.41,
X:60, Y:3, A:17.29, B:17.69,
X:60, Y:4, A:17.29, B:17.69,
X:60, Y:5, A:12.21, B:12.61,
X:60, Y:6, A:9.88, B:10.28,
X:60, Y:7, A:8.88, B:9.28,
X:60, Y:8, A:7.89, B:8.29,
X:60, Y:9, A:6.91, B:7.31,
X:60, Y:10, A:6.09, B:6.49,
X:60, Y:11, A:5.27, B:5.67,
X:60, Y:12, A:4.78, B:5.18,
X:60, Y:13, A:4.30, B:4.70,
X:60, Y:14, A:3.81, B:4.21,
X:60, Y:15, A:3.49, B:3.89,
X:60, Y:16, A:3.16, B:3.56,
X:60, Y:17, A:2.84, B:3.24,
X:60, Y:18, A:2.68, B:3.08,
X:60, Y:19, A:2.52, B:2.92,
X:60, Y:20, A:2.36, B:2.76,
X:60, Y:21, A:2.20, B:2.60,
X:60, Y:22, A:2.04, B:2.44,
X:60, Y:23, A:1.88, B:2.28,
X:60, Y:24, A:1.72, B:2.12,
X:60, Y:25, A:1.72, B:2.12,
X:60, Y:26, A:1.56, B:1.96,
X:60, Y:27, A:1.56, B:1.96,
X:60, Y:28, A:1.40, B:1.80,
X:60, Y:29, A:1.24, B:1.64,
X:60, Y:30, A:1.24, B:1.64,
X:60, Y:31, A:1.08, B:1.48,
X:60, Y:32, A:1.08, B:1.48,
X:60, Y:33, A:0.92, B:1.32,
X:60, Y:34, A:0.76, B:1.16,
X:60, Y:35, A:0.76, B:1.16,
X:60, Y:36, A:0.60, B:1.00,
X:60, Y:37, A:0.60, B:1.00,
X:60, Y:38, A:0.44, B:0.84,
X:60, Y:39, A:0.44, B:0.84,
X:60, Y:40, A:0.44, B:0.84,
X:60, Y:41, A:0.44, B:0.84,
X:60, Y:42, A:0.28, B:0.68,
X:60, Y:43, A:0.28, B:0.68,
X:60, Y:44, A:0.28, B:0.68,
X:60, Y:45, A:0.28, B:0.68,
X:60, Y:46, A:0.12, B:0.52,
X:60, Y:47, A:0.12, B:0.52,
X:60, Y:48, A:0.12, B:0.52,
X:60, Y:49, A:0.12, B:0.52,
X:60, Y:50, A:0.12, B:0.52,
X:60, Y:51, A:-0.04, B:0.36,
X:60, Y:52, A:-0.04, B:0.36,
X:60, Y:53, A:-0.04, B:0.36,
X:60, Y:54, A:-0.04, B:0.36,
X:60, Y:55, A:-0.04, B:0.36,
X:60, Y:56, A:-0.04, B:0.36,
X:60, Y:57, A:-0.04, B:0.36,
X:60, Y:58, A:-0.04, B:0.36,
X:60, Y:59, A:-0.20, B:0.20,
X:60, Y:60, A:-0.20, B:0.20,
X:60, Y:61, A:-0.20, B:0.20,
X:60, Y:62, A:-0.20, B:0.20,
X:60, Y:63, A:-0.20, B:0.20,
X:60, Y:64, A:-0.20, B:0.20,
X:60, Y:65, A:-0.20, B:0.20,
X:60, Y:66, A:-0.20, B:0.20,
X:60, Y:67, A:-0.20, B:0.20,
X:60, Y:68, A:-0.20, B:0.20,
X:60, Y:69, A:-0.20, B:0.20,
X:60, Y:70, A:-0.20, B:0.20,
X:60, Y:71, A:-0.20, B:0.20,
X:60, Y:72, A:-0.20, B:0.20,
X:60, Y:73, A:-0.36, B:0.04,
X:60, Y:74, A:-0.36, B:0.04,
X:60, Y:75, A:-0.36, B:0.04,
X:60, Y:76, A:-0.36, B:0.04,
X:60, Y:77, A:-0.36, B:0.04,
X:60, Y:78, A:-0.36, B:0.04,
X:60, Y:79, A:-0.36, B:0.04,
X:60, Y:80, A:-0.36, B:0.04,
X:60, Y:81, A:-0.36, B:0.04,
X:60, Y:82, A:-0.36, B:0.04,
X:60, Y:83, A:-0.36, B:0.04,
X:60, Y:84, A:-0.36, B:0.04,
X:60, Y:85, A:-0.36, B:0.04,
X:60, Y:86, A:-0.52, B:-0.12,
X:60, Y:87, A:-0.52, B:-0.12,
X:60, Y:88, A:-0.52, B:-0.12,
X:60, Y:89, A:-0.52, B:-0.12,
X:60, Y:90, A:-0.52, B:-0.12,
X:60, Y:91, A:-0.52, B:-0.12,
X:60, Y:92, A:-0.52, B:-0.12,
X:60, Y:93, A:-0.52, B:-0.12,
X:60, Y:94, A:-0.52, B:-0.12,
X:60, Y:95, A:-0.52, B:-0.12,
X:60, Y:96, A:-0.52, B:-0.12,
X:60, Y:97, A:-0.52, B:-0.12,
X:60, Y:98, A:-0.52, B:-0.12,
X:60, Y:99, A:-0.68, B:-0.28,
X:60, Y:100, A:-0.68, B:-0.28,
X:50, Y:1, A:20.42, B:20.82,
X:50, Y:2, A:18.69, B:19.09,
X:50, Y:3, A:16.98, B:17.38,
X:50, Y:4, A:16.98, B:17.38,
X:50, Y:5, A:11.89, B:12.29,
X:50, Y:6, A:9.56, B:9.96,
X:50, Y:7, A:8.56, B:8.96,
X:50, Y:8, A:7.57, B:7.97,
X:50, Y:9, A:6.59, B:6.99,
X:50, Y:10, A:5.77, B:6.17,
X:50, Y:11, A:4.95, B:5.35,
X:50, Y:12, A:4.46, B:4.86,
X:50, Y:13, A:3.98, B:4.38,
X:50, Y:14, A:3.49, B:3.89,
X:50, Y:15, A:3.17, B:3.57,
X:50, Y:16, A:2.85, B:3.25,
X:50, Y:17, A:2.52, B:2.92,
X:50, Y:18, A:2.36, B:2.76,
X:50, Y:19, A:2.20, B:2.60,
X:50, Y:20, A:2.04, B:2.44,
X:50, Y:21, A:1.88, B:2.28,
X:50, Y:22, A:1.72, B:2.12,
X:50, Y:23, A:1.56, B:1.96,
X:50, Y:24, A:1.40, B:1.80,
X:50, Y:25, A:1.40, B:1.80,
X:50, Y:26, A:1.24, B:1.64,
X:50, Y:27, A:1.24, B:1.64,
X:50, Y:28, A:1.08, B:1.48,
X:50, Y:29, A:0.92, B:1.32,
X:50, Y:30, A:0.92, B:1.32,
X:50, Y:31, A:0.76, B:1.16,
X:50, Y:32, A:0.76, B:1.16,
X:50, Y:33, A:0.60, B:1.00,
X:50, Y:34, A:0.44, B:0.84,
X:50, Y:35, A:0.44, B:0.84,
X:50, Y:36, A:0.28, B:0.68,
X:50, Y:37, A:0.28, B:0.68,
X:50, Y:38, A:0.12, B:0.52,
X:50, Y:39, A:0.12, B:0.52,
X:50, Y:40, A:0.12, B:0.52,
X:50, Y:41, A:0.12, B:0.52,
X:50, Y:42, A:-0.04, B:0.36,
X:50, Y:43, A:-0.04, B:0.36,
X:50, Y:44, A:-0.04, B:0.36,
X:50, Y:45, A:-0.04, B:0.36,
X:50, Y:46, A:-0.20, B:0.20,
X:50, Y:47, A:-0.20, B:0.20,
X:50, Y:48, A:-0.20, B:0.20,
X:50, Y:49, A:-0.20, B:0.20,
X:50, Y:50, A:-0.20, B:0.20,
X:50, Y:51, A:-0.36, B:0.04,
X:50, Y:52, A:-0.36, B:0.04,
X:50, Y:53, A:-0.36, B:0.04,
X:50, Y:54, A:-0.36, B:0.04,
X:50, Y:55, A:-0.36, B:0.04,
X:50, Y:56, A:-0.36, B:0.04,
X:50, Y:57, A:-0.36, B:0.04,
X:50, Y:58, A:-0.36, B:0.04,
X:50, Y:59, A:-0.52, B:-0.12,
X:50, Y:60, A:-0.52, B:-0.12,
X:50, Y:61, A:-0.52, B:-0.12,
X:50, Y:62, A:-0.52, B:-0.12,
X:50, Y:63, A:-0.52, B:-0.12,
X:50, Y:64, A:-0.52, B:-0.12,
X:50, Y:65, A:-0.52, B:-0.12,
X:50, Y:66, A:-0.52, B:-0.12,
X:50, Y:67, A:-0.52, B:-0.12,
X:50, Y:68, A:-0.52, B:-0.12,
X:50, Y:69, A:-0.52, B:-0.12,
X:50, Y:70, A:-0.52, B:-0.12,
X:50, Y:71, A:-0.52, B:-0.12,
X:50, Y:72, A:-0.52, B:-0.12,
X:50, Y:73, A:-0.68, B:-0.28,
X:50, Y:74, A:-0.68, B:-0.28,
X:50, Y:75, A:-0.68, B:-0.28,
X:50, Y:76, A:-0.68, B:-0.28,
X:50, Y:77, A:-0.68, B:-0.28,
X:50, Y:78, A:-0.68, B:-0.28,
X:50, Y:79, A:-0.68, B:-0.28,
X:50, Y:80, A:-0.68, B:-0.28,
X:50, Y:81, A:-0.68, B:-0.28,
X:50, Y:82, A:-0.68, B:-0.28,
X:50, Y:83, A:-0.68, B:-0.28,
X:50, Y:84, A:-0.68, B:-0.28,
X:50, Y:85, A:-0.68, B:-0.28,
X:50, Y:86, A:-0.84, B:-0.44,
X:50, Y:87, A:-0.84, B:-0.44,
X:50, Y:88, A:-0.84, B:-0.44,
X:50, Y:89, A:-0.84, B:-0.44,
X:50, Y:90, A:-0.84, B:-0.44,
X:50, Y:91, A:-0.84, B:-0.44,
X:50, Y:92, A:-0.84, B:-0.44,
X:50, Y:93, A:-0.84, B:-0.44,
X:50, Y:94, A:-0.84, B:-0.44,
X:50, Y:95, A:-0.84, B:-0.44,
X:50, Y:96, A:-0.84, B:-0.44,
X:50, Y:97, A:-0.84, B:-0.44,
X:50, Y:98, A:-0.84, B:-0.44,
X:50, Y:99, A:-0.99, B:-0.59,
X:50, Y:100, A:-0.99, B:-0.59,
X:40, Y:1, A:20.10, B:20.50,
X:40, Y:2, A:18.37, B:18.77,
X:40, Y:3, A:16.66, B:17.06,
X:40, Y:4, A:16.66, B:17.06,
X:40, Y:5, A:11.58, B:11.98,
X:40, Y:6, A:9.24, B:9.64,
X:40, Y:7, A:8.24, B:8.64,
X:40, Y:8, A:7.25, B:7.65,
X:40, Y:9, A:6.27, B:6.67,
X:40, Y:10, A:5.45, B:5.85,
X:40, Y:11, A:4.63, B:5.03,
X:40, Y:12, A:4.15, B:4.55,
X:40, Y:13, A:3.66, B:4.06,
X:40, Y:14, A:3.17, B:3.57,
X:40, Y:15, A:2.85, B:3.25,
X:40, Y:16, A:2.53, B:2.93,
X:40, Y:17, A:2.20, B:2.60,
X:40, Y:18, A:2.04, B:2.44,
X:40, Y:19, A:1.88, B:2.28,
X:40, Y:20, A:1.72, B:2.12,
X:40, Y:21, A:1.56, B:1.96,
X:40, Y:22, A:1.40, B:1.80,
X:40, Y:23, A:1.24, B:1.64,
X:40, Y:24, A:1.08, B:1.48,
X:40, Y:25, A:1.08, B:1.48,
X:40, Y:26, A:0.92, B:1.32,
X:40, Y:27, A:0.92, B:1.32,
X:40, Y:28, A:0.76, B:1.16,
X:40, Y:29, A:0.60, B:1.00,
X:40, Y:30, A:0.60, B:1.00,
X:40, Y:31, A:0.44, B:0.84,
X:40, Y:32, A:0.44, B:0.84,
X:40, Y:33, A:0.28, B:0.68,
X:40, Y:34, A:0.12, B:0.52,
X:40, Y:35, A:0.12, B:0.52,
X:40, Y:36, A:-0.04, B:0.36,
X:40, Y:37, A:-0.04, B:0.36,
X:40, Y:38, A:-0.20, B:0.20,
X:40, Y:39, A:-0.20, B:0.20,
X:40, Y:40, A:-0.20, B:0.20,
X:40, Y:41, A:-0.20, B:0.20,
X:40, Y:42, A:-0.36, B:0.04,
X:40, Y:43, A:-0.36, B:0.04,
X:40, Y:44, A:-0.36, B:0.04,
X:40, Y:45, A:-0.36, B:0.04,
X:40, Y:46, A:-0.52, B:-0.12,
X:40, Y:47, A:-0.52, B:-0.12,
X:40, Y:48, A:-0.52, B:-0.12,
X:40, Y:49, A:-0.52, B:-0.12,
X:40, Y:50, A:-0.52, B:-0.12,
X:40, Y:51, A:-0.68, B:-0.28,
X:40, Y:52, A:-0.68, B:-0.28,
X:40, Y:53, A:-0.68, B:-0.28,
X:40, Y:54, A:-0.68, B:-0.28,
X:40, Y:55, A:-0.68, B:-0.28,
X:40, Y:56, A:-0.68, B:-0.28,
X:40, Y:57, A:-0.68, B:-0.28,
X:40, Y:58, A:-0.68, B:-0.28,
X:40, Y:59, A:-0.84, B:-0.44,
X:40, Y:60, A:-0.84, B:-0.44,
X:40, Y:61, A:-0.84, B:-0.44,
X:40, Y:62, A:-0.84, B:-0.44,
X:40, Y:63, A:-0.84, B:-0.44,
X:40, Y:64, A:-0.84, B:-0.44,
X:40, Y:65, A:-0.84, B:-0.44,
X:40, Y:66, A:-0.84, B:-0.44,
X:40, Y:67, A:-0.84, B:-0.44,
X:40, Y:68, A:-0.84, B:-0.44,
X:40, Y:69, A:-0.84, B:-0.44,
X:40, Y:70, A:-0.84, B:-0.44,
X:40, Y:71, A:-0.84, B:-0.44,
X:40, Y:72, A:-0.84, B:-0.44,
X:40, Y:73, A:-1.00, B:-0.60,
X:40, Y:74, A:-1.00, B:-0.60,
X:40, Y:75, A:-1.00, B:-0.60,
X:40, Y:76, A:-1.00, B:-0.60,
X:40, Y:77, A:-1.00, B:-0.60,
X:40, Y:78, A:-1.00, B:-0.60,
X:40, Y:79, A:-1.00, B:-0.60,
X:40, Y:80, A:-1.00, B:-0.60,
X:40, Y:81, A:-1.00, B:-0.60,
X:40, Y:82, A:-1.00, B:-0.60,
X:40, Y:83, A:-1.00, B:-0.60,
X:40, Y:84, A:-1.00, B:-0.60,
X:40, Y:85, A:-1.00, B:-0.60,
X:40, Y:86, A:-1.15, B:-0.75,
X:40, Y:87, A:-1.15, B:-0.75,
X:40, Y:88, A:-1.15, B:-0.75,
X:40, Y:89, A:-1.15, B:-0.75,
X:40, Y:90, A:-1.15, B:-0.75,
X:40, Y:91, A:-1.15, B:-0.75,
X:40, Y:92, A:-1.15, B:-0.75,
X:40, Y:93, A:-1.15, B:-0.75,
X:40, Y:94, A:-1.15, B:-0.75,
X:40, Y:95, A:-1.15, B:-0.75,
X:40, Y:96, A:-1.15, B:-0.75,
X:40, Y:97, A:-1.15, B:-0.75,
X:40, Y:98, A:-1.15, B:-0.75,
X:40, Y:99, A:-1.31, B:-0.91,
X:40, Y:100, A:-1.31, B:-0.91,
X:30, Y:1, A:19.30, B:19.70,
X:30, Y:2, A:17.58, B:17.98,
X:30, Y:3, A:15.86, B:16.26,
X:30, Y:4, A:15.86, B:16.26,
X:30, Y:5, A:10.78, B:11.18,
X:30, Y:6, A:8.44, B:8.84,
X:30, Y:7, A:7.45, B:7.85,
X:30, Y:8, A:6.46, B:6.86,
X:30, Y:9, A:5.47, B:5.87,
X:30, Y:10, A:4.65, B:5.05,
X:30, Y:11, A:3.84, B:4.24,
X:30, Y:12, A:3.35, B:3.75,
X:30, Y:13, A:2.86, B:3.26,
X:30, Y:14, A:2.37, B:2.77,
X:30, Y:15, A:2.05, B:2.45,
X:30, Y:16, A:1.73, B:2.13,
X:30, Y:17, A:1.41, B:1.81,
X:30, Y:18, A:1.24, B:1.64,
X:30, Y:19, A:1.08, B:1.48,
X:30, Y:20, A:0.92, B:1.32,
X:30, Y:21, A:0.76, B:1.16,
X:30, Y:22, A:0.60, B:1.00,
X:30, Y:23, A:0.44, B:0.84,
X:30, Y:24, A:0.28, B:0.68,
X:30, Y:25, A:0.28, B:0.68,
X:30, Y:26, A:0.12, B:0.52,
X:30, Y:27, A:0.12, B:0.52,
X:30, Y:28, A:-0.04, B:0.36,
X:30, Y:29, A:-0.20, B:0.20,
X:30, Y:30, A:-0.20, B:0.20,
X:30, Y:31, A:-0.36, B:0.04,
X:30, Y:32, A:-0.36, B:0.04,
X:30, Y:33, A:-0.52, B:-0.12,
X:30, Y:34, A:-0.68, B:-0.28,
X:30, Y:35, A:-0.68, B:-0.28,
X:30, Y:36, A:-0.84, B:-0.44,
X:30, Y:37, A:-0.84, B:-0.44,
X:30, Y:38, A:-1.00, B:-0.60,
X:30, Y:39, A:-1.00, B:-0.60,
X:30, Y:40, A:-1.00, B:-0.60,
X:30, Y:41, A:-1.00, B:-0.60,
X:30, Y:42, A:-1.16, B:-0.76,
X:30, Y:43, A:-1.16, B:-0.76,
X:30, Y:44, A:-1.16, B:-0.76,
X:30, Y:45, A:-1.16, B:-0.76,
X:30, Y:46, A:-1.32, B:-0.92,
X:30, Y:47, A:-1.32, B:-0.92,
X:30, Y:48, A:-1.32, B:-0.92,
X:30, Y:49, A:-1.32, B:-0.92,
X:30, Y:50, A:-1.32, B:-0.92,
X:30, Y:51, A:-1.48, B:-1.08,
X:30, Y:52, A:-1.48, B:-1.08,
X:30, Y:53, A:-1.48, B:-1.08,
X:30, Y:54, A:-1.48, B:-1.08,
X:30, Y:55, A:-1.48, B:-1.08,
X:30, Y:56, A:-1.48, B:-1.08,
X:30, Y:57, A:-1.48, B:-1.08,
X:30, Y:58, A:-1.48, B:-1.08,
X:30, Y:59, A:-1.64, B:-1.24,
X:30, Y:60, A:-1.64, B:-1.24,
X:30, Y:61, A:-1.64, B:-1.24,
X:30, Y:62, A:-1.64, B:-1.24,
X:30, Y:63, A:-1.64, B:-1.24,
X:30, Y:64, A:-1.64, B:-1.24,
X:30, Y:65, A:-1.64, B:-1.24,
X:30, Y:66, A:-1.64, B:-1.24,
X:30, Y:67, A:-1.64, B:-1.24,
X:30, Y:68, A:-1.64, B:-1.24,
X:30, Y:69, A:-1.64, B:-1.24,
X:30, Y:70, A:-1.64, B:-1.24,
X:30, Y:71, A:-1.64, B:-1.24,
X:30, Y:72, A:-1.64, B:-1.24,
X:30, Y:73, A:-1.79, B:-1.39,
X:30, Y:74, A:-1.79, B:-1.39,
X:30, Y:75, A:-1.79, B:-1.39,
X:30, Y:76, A:-1.79, B:-1.39,
X:30, Y:77, A:-1.79, B:-1.39,
X:30, Y:78, A:-1.79, B:-1.39,
X:30, Y:79, A:-1.79, B:-1.39,
X:30, Y:80, A:-1.79, B:-1.39,
X:30, Y:81, A:-1.79, B:-1.39,
X:30, Y:82, A:-1.79, B:-1.39,
X:30, Y:83, A:-1.79, B:-1.39,
X:30, Y:84, A:-1.79, B:-1.39,
X:30, Y:85, A:-1.79, B:-1.39,
X:30, Y:86, A:-1.95, B:-1.55,
X:30, Y:87, A:-1.95, B:-1.55,
X:30, Y:88, A:-1.95, B:-1.55,
X:30, Y:89, A:-1.95, B:-1.55,
X:30, Y:90, A:-1.95, B:-1.55,
X:30, Y:91, A:-1.95, B:-1.55,
X:30, Y:92, A:-1.95, B:-1.55,
X:30, Y:93, A:-1.95, B:-1.55,
X:30, Y:94, A:-1.95, B:-1.55,
X:30, Y:95, A:-1.95, B:-1.55,
X:30, Y:96, A:-1.95, B:-1.55,
X:30, Y:97, A:-1.95, B:-1.55,
X:30, Y:98, A:-1.95, B:-1.55,
X:30, Y:99, A:-2.11, B:-1.71,
X:30, Y:100, A:-2.11, B:-1.71,
X:20, Y:1, A:18.18, B:18.58,
X:20, Y:2, A:16.45, B:16.85,
X:20, Y:3, A:14.74, B:15.14,
X:20, Y:4, A:14.74, B:15.14,
X:20, Y:5, A:9.65, B:10.05,
X:20, Y:6, A:7.32, B:7.72,
X:20, Y:7, A:6.32, B:6.72,
X:20, Y:8, A:5.33, B:5.73,
X:20, Y:9, A:4.35, B:4.75,
X:20, Y:10, A:3.53, B:3.93,
X:20, Y:11, A:2.71, B:3.11,
X:20, Y:12, A:2.22, B:2.62,
X:20, Y:13, A:1.74, B:2.14,
X:20, Y:14, A:1.25, B:1.65,
X:20, Y:15, A:0.93, B:1.33,
X:20, Y:16, A:0.61, B:1.01,
X:20, Y:17, A:0.28, B:0.68,
X:20, Y:18, A:0.12, B:0.52,
X:20, Y:19, A:-0.04, B:0.36,
X:20, Y:20, A:-0.20, B:0.20,
X:20, Y:21, A:-0.36, B:0.04,
X:20, Y:22, A:-0.52, B:-0.12,
X:20, Y:23, A:-0.68, B:-0.28,
X:20, Y:24, A:-0.84, B:0.44,
X:20, Y:25, A:-0.84, B:0.44,
X:20, Y:26, A:-1.00, B:-0.60,
X:20, Y:27, A:-1.00, B:-0.60,
X:20, Y:28, A:-1.16, B:-0.76,
X:20, Y:29, A:-1.32, B:-0.92,
X:20, Y:30, A:-1.32, B:-0.92,
X:20, Y:31, A:-1.48, B:-1.08,
X:20, Y:32, A:-1.48, B:-1.08,
X:20, Y:33, A:-1.64, B:-1.24,
X:20, Y:34, A:-1.80, B:-1.40,
X:20, Y:35, A:-1.80, B:-1.40,
X:20, Y:36, A:-1.96, B:-1.56,
X:20, Y:37, A:-1.96, B:-1.56,
X:20, Y:38, A:-2.12, B:-1.72,
X:20, Y:39, A:-2.12, B:-1.72,
X:20, Y:40, A:-2.12, B:-1.72,
X:20, Y:41, A:-2.12, B:-1.72,
X:20, Y:42, A:-2.28, B:-1.88,
X:20, Y:43, A:-2.28, B:-1.88,
X:20, Y:44, A:-2.28, B:-1.88,
X:20, Y:45, A:-2.28, B:-1.88,
X:20, Y:46, A:-2.44, B:-2.04,
X:20, Y:47, A:-2.44, B:-2.04,
X:20, Y:48, A:-2.44, B:-2.04,
X:20, Y:49, A:-2.44, B:-2.04,
X:20, Y:50, A:-2.44, B:-2.04,
X:20, Y:51, A:-2.60, B:-2.20,
X:20, Y:52, A:-2.60, B:-2.20,
X:20, Y:53, A:-2.60, B:-2.20,
X:20, Y:54, A:-2.60, B:-2.20,
X:20, Y:55, A:-2.60, B:-2.20,
X:20, Y:56, A:-2.60, B:-2.20,
X:20, Y:57, A:-2.60, B:-2.20,
X:20, Y:58, A:-2.60, B:-2.20,
X:20, Y:59, A:-2.76, B:-2.36,
X:20, Y:60, A:-2.76, B:-2.36,
X:20, Y:61, A:-2.76, B:-2.36,
X:20, Y:62, A:-2.76, B:-2.36,
X:20, Y:63, A:-2.76, B:-2.36,
X:20, Y:64, A:-2.76, B:-2.36,
X:20, Y:65, A:-2.76, B:-2.36,
X:20, Y:66, A:-2.76, B:-2.36,
X:20, Y:67, A:-2.76, B:-2.36,
X:20, Y:68, A:-2.76, B:-2.36,
X:20, Y:69, A:-2.76, B:-2.36,
X:20, Y:70, A:-2.76, B:-2.36,
X:20, Y:71, A:-2.76, B:-2.36,
X:20, Y:72, A:-2.76, B:-2.36,
X:20, Y:73, A:-2.92, B:-2.52,
X:20, Y:74, A:-2.92, B:-2.52,
X:20, Y:75, A:-2.92, B:-2.52,
X:20, Y:76, A:-2.92, B:-2.52,
X:20, Y:77, A:-2.92, B:-2.52,
X:20, Y:78, A:-2.92, B:-2.52,
X:20, Y:79, A:-2.92, B:-2.52,
X:20, Y:80, A:-2.92, B:-2.52,
X:20, Y:81, A:-2.92, B:-2.52,
X:20, Y:82, A:-2.92, B:-2.52,
X:20, Y:83, A:-2.92, B:-2.52,
X:20, Y:84, A:-2.92, B:-2.52,
X:20, Y:85, A:-2.92, B:-2.52,
X:20, Y:86, A:-3.08, B:-2.68,
X:20, Y:87, A:-3.08, B:-2.68,
X:20, Y:88, A:-3.08, B:-2.68,
X:20, Y:89, A:-3.08, B:-2.68,
X:20, Y:90, A:-3.08, B:-2.68,
X:20, Y:91, A:-3.08, B:-2.68,
X:20, Y:92, A:-3.08, B:-2.68,
X:20, Y:93, A:-3.08, B:-2.68,
X:20, Y:94, A:-3.08, B:-2.68,
X:20, Y:95, A:-3.08, B:-2.68,
X:20, Y:96, A:-3.08, B:-2.68,
X:20, Y:97, A:-3.08, B:-2.68,
X:20, Y:98, A:-3.08, B:-2.68,
X:20, Y:99, A:-3.23, B:-2.83,
X:20, Y:100, A:-3.23, B:-2.83,
X:10, Y:1, A:14.45, B:14.85,
X:10, Y:2, A:12.72, B:13.12,
X:10, Y:3, A:11.01, B:11.41,
X:10, Y:4, A:11.01, B:11.41,
X:10, Y:5, A:5.93, B:6.33,
X:10, Y:6, A:3.59, B:3.99,
X:10, Y:7, A:2.59, B:2.99,
X:10, Y:8, A:1.60, B:2.00,
X:10, Y:9, A:0.62, B:1.02,
X:10, Y:10, A:-0.20, B:0.20,
X:10, Y:11, A:-1.02, B:-0.62,
X:10, Y:12, A:-1.50, B:-1.10,
X:10, Y:13, A:-1.99, B:-1.59,
X:10, Y:14, A:-2.48, B:-2.08,
X:10, Y:15, A:-2.80, B:-2.40,
X:10, Y:16, A:-3.12, B:-2.72,
X:10, Y:17, A:-3.45, B:-3.05,
X:10, Y:18, A:-3.61, B:-3.21,
X:10, Y:19, A:-3.77, B:-3.37,
X:10, Y:20, A:-3.93, B:-3.53,
X:10, Y:21, A:-4.09, B:-3.69,
X:10, Y:22, A:-4.25, B:-3.85,
X:10, Y:23, A:-4.41, B:-4.01,
X:10, Y:24, A:-4.57, B:-4.17,
X:10, Y:25, A:-4.57, B:-4.17,
X:10, Y:26, A:-4.73, B:-4.33,
X:10, Y:27, A:-4.73, B:-4.33,
X:10, Y:28, A:-4.89, B:-4.49,
X:10, Y:29, A:-5.05, B:-4.65,
X:10, Y:30, A:-5.05, B:-4.65,
X:10, Y:31, A:-5.21, B:-4.81,
X:10, Y:32, A:-5.21, B:-4.81,
X:10, Y:33, A:-5.37, B:-4.97,
X:10, Y:34, A:-5.53, B:-5.13,
X:10, Y:35, A:-5.53, B:-5.13,
X:10, Y:36, A:-5.69, B:-5.29,
X:10, Y:37, A:-5.69, B:-5.29,
X:10, Y:38, A:-5.85, B:-5.45,
X:10, Y:39, A:-5.85, B:-5.45,
X:10, Y:40, A:-5.85, B:-5.45,
X:10, Y:41, A:-5.85, B:-5.45,
X:10, Y:42, A:-6.01, B:-5.61,
X:10, Y:43, A:-6.01, B:-5.61,
X:10, Y:44, A:-6.01, B:-5.61,
X:10, Y:45, A:-6.01, B:-5.61,
X:10, Y:46, A:-6.17, B:-5.77,
X:10, Y:47, A:-6.17, B:-5.77,
X:10, Y:48, A:-6.17, B:-5.77,
X:10, Y:49, A:-6.17, B:-5.77,
X:10, Y:50, A:-6.17, B:-5.77,
X:10, Y:51, A:-6.33, B:-5.93,
X:10, Y:52, A:-6.33, B:-5.93,
X:10, Y:53, A:-6.33, B:-5.93,
X:10, Y:54, A:-6.33, B:-5.93,
X:10, Y:55, A:-6.33, B:-5.93,
X:10, Y:56, A:-6.33, B:-5.93,
X:10, Y:57, A:-6.33, B:-5.93,
X:10, Y:58, A:-6.33, B:-5.93,
X:10, Y:59, A:-6.49, B:-6.09,
X:10, Y:60, A:-6.49, B:-6.09,
X:10, Y:61, A:-6.49, B:-6.09,
X:10, Y:62, A:-6.49, B:-6.09,
X:10, Y:63, A:-6.49, B:-6.09,
X:10, Y:64, A:-6.49, B:-6.09,
X:10, Y:65, A:-6.49, B:-6.09,
X:10, Y:66, A:-6.49, B:-6.09,
X:10, Y:67, A:-6.49, B:-6.09,
X:10, Y:68, A:-6.49, B:-6.09,
X:10, Y:69, A:-6.49, B:-6.09,
X:10, Y:70, A:-6.49, B:-6.09,
X:10, Y:71, A:-6.49, B:-6.09,
X:10, Y:72, A:-6.49, B:-6.09,
X:10, Y:73, A:-6.65, B:-6.25,
X:10, Y:74, A:-6.65, B:-6.25,
X:10, Y:75, A:-6.65, B:-6.25,
X:10, Y:76, A:-6.65, B:-6.25,
X:10, Y:77, A:-6.65, B:-6.25,
X:10, Y:78, A:-6.65, B:-6.25,
X:10, Y:79, A:-6.65, B:-6.25,
X:10, Y:80, A:-6.65, B:-6.25,
X:10, Y:81, A:-6.65, B:-6.25,
X:10, Y:82, A:-6.65, B:-6.25,
X:10, Y:83, A:-6.65, B:-6.25,
X:10, Y:84, A:-6.65, B:-6.25,
X:10, Y:85, A:-6.65, B:-6.25,
X:10, Y:86, A:-6.80, B:-6.40,
X:10, Y:87, A:-6.80, B:-6.40,
X:10, Y:88, A:-6.80, B:-6.40,
X:10, Y:89, A:-6.80, B:-6.40,
X:10, Y:90, A:-6.80, B:-6.40,
X:10, Y:91, A:-6.80, B:-6.40,
X:10, Y:92, A:-6.80, B:-6.40,
X:10, Y:93, A:-6.80, B:-6.40,
X:10, Y:94, A:-6.80, B:-6.40,
X:10, Y:95, A:-6.80, B:-6.40,
X:10, Y:96, A:-6.80, B:-6.40,
X:10, Y:97, A:-6.80, B:-6.40,
X:10, Y:98, A:-6.80, B:-6.40,
X:10, Y:99, A:-6.96, B:-6.56, and
X:10, Y:100, A:-6.96, B:-6.56

Here, "at least one" means, for example, selecting at least one or more from A, B, ..., Z, and allows for the arbitrary selection of two or more elements from A to Z, with the total number of elements not exceeding 26. Note that, the present invention is not necessarily limited to this upper limit, and it is also preferable to implement the invention using elements that exceed the upper limit.

Furthermore, the focal length information is characterized by including a plurality of pieces of focal length identification information using temperature as a parameter.

In the present lens control device, focal length identification information for identifying the focal length of the variable-focus lens (optimal focal length) tailored to the user based on the distance to a viewed object (viewing distance) is stored in the storage unit. Then, during use by the user, the distance to the viewed object being viewed by the user through the variable-focus lens is detected by a distance detection unit, and based on that detection result and the focal length identification information stored in the storage unit, the focal length of the variable-focus lens is automatically controlled so that it matches the user's optimal focal length. Consequently, even if the viewing distance to the viewed object changes during use, the focal length of the variable-focus lens is automatically changed to be adjusted to (focused on) the viewed object to keep the viewed object in focus.

Here, the focal length identification information stored in the storage unit must be tailored to each individual user. Therefore, ideally, it would be necessary to determine the user's optimal focal length at each viewing distance while varying the distance to the object being viewed (viewing distance) for each user, and to identify the relationship between the viewing distance and the optimal focal length across a predetermined range of distances. However, such a task involves determining the user's optimal focal length for numerous viewing distances. For example, with only three measurement points, the accuracy of refractive power control at other distances is low, making it difficult to achieve focus at all distances; therefore, in practice, ten or more measurement points are conventionally preferred. While a larger number of measurement points is preferable, the task of determining the optimal focal length using many measurement points is extremely cumbersome for the user.

Therefore, the present lens control device updates the focal length identification information stored in the storage unit to suit each individual user as follows. That is, first, the distance to the viewed object (viewing distance) and the user's optimal focal length are acquired, then, a correction value (including a correction value that sets this difference to zero) to minimize the difference between the acquired focal length and the focal length corresponding to the viewing distance in the focal length identification information stored in the storage unit is obtained. Then, by the amount of this correction value, the focal length of the focal length identification information over a predetermined distance range, including other viewing distances besides the current viewing distance, is added or subtracted (corrected, changed, or updated) by an amount equivalent to the correction value. The new focal length identification information obtained by adding or subtracting this focal length has the same general pattern of changes in the optimal focal length corresponding to viewing distances within the predetermined distance range as the focal length identification information stored in the storage unit; however, each focal length corresponding to each viewing distance within the predetermined distance range is increased or decreased by the amount of the correction value. According to this, by performing the relatively simple task of determining the user's optimal focal length corresponding to a very small number of viewing distances, such as one or a few points, the focal length identification information stored in the storage unit for distances different from the determined suitable focal length can be updated to the new focal length identification information that is tailored to the current user.

Therefore, according to the present lens control device, focal length identification information tailored to individual users can be obtained without requiring the user to perform cumbersome tasks, and the focal length of the variable-focus lens can be set with high precision to suit the individual user's eye, visual acuity, or refractive power according to the distance to the viewed object, allowing for its use.

In the present lens control device, the update processing may be executed using detection results from the distance detection unit as the distance information to the object being viewed.

In a case where the distance to the viewed object is grasped in advance, such as in a case where the viewed object is positioned at a predetermined distance, the update processing can be executed by inputting that distance. However, in a case where the distance to the viewed object is not grasped in advance, it is necessary to grasp the distance to the viewed object by other means.

In the present lens control device, by using the detection results from the distance detection unit, which are utilized for automatically controlling the focal length of the variable-focus lens when used by a user, the distance to the viewed object is grasped, and the update processing is executed. Therefore, even in a case where the distance to the viewed object is not grasped in advance, the distance to the viewed object can be easily acquired, and the update processing can be executed.

Furthermore, in the lens control device, the predetermined distance range may be the entire range of distances included in the focal length identification information stored in the storage unit.

In the present lens control device, across the entire distance range included in the focal length identification information, each focal length corresponding to each viewing distance can be corrected, changed, or updated by the amount of the correction value. Consequently, simply by performing the simple task of determining the user's optimal focal length corresponding to at least one viewing distance, the focal length identification information stored in the storage unit can be updated to new focal length identification information in which the focal lengths across the entire distance range are suited to the user.

Furthermore, in the lens control device, the update processing unit may acquire the distance to the viewed object positioned within a distance range where the rate of change of the focal length with respect to distance is below or equal to a predetermined threshold, and execute the update processing.

In a distance range where the rate of change of the optimal focal length with respect to viewing distance is relatively large (e.g., a range with short viewing distances), the difference in optimal focal length due to errors in the viewing distance of the viewed object is significant. In this case, since the error in the correction value becomes large, it becomes difficult to obtain new focal length identification information suited to the user.

In the present lens control device, the correction value is obtained based on the optimal focal length corresponding to the distance to the viewed object positioned within a distance range where the rate of change of the focal length with respect to distance is equal to or below a predetermined threshold. Therefore, a correction value with a small error can be obtained, making it easy to obtain new focal length identification information suited to the user.

Another aspect of the present invention is an ocular lens device comprising a variable-focus lens for the eye and a lens control device for controlling the variable focus lens, wherein the device includes a distance detection unit for detecting the distance to a viewed object, and the lens control device is the lens control device described above.

As the present ocular lens device, for example, items worn and used by users, such as eyeglasses or contact lenses, may be mentioned. By using the present ocular lens device as an item worn by the user in this manner, the focal length of the variable-focus lens is automatically controlled during the user's daily life while wearing the item (e.g., while watching television, playing video games, using a computer or tablet, or reading a book). As a result, in the case of viewing viewed objects positioned at various distances in daily life, the user can view each viewed object in a state of sharp focus (or a state in which the lens is adjusted to an appropriate refractive power and/or focal length).

The aforementioned ocular lens device may include a focal length determination unit that determines the focal length of the variable-focus lens at which the focus is aligned when the user of the variable-focus lens views the viewed object, and the update processing may be executed using the determination result of the focal length determination unit.

In a case where the focal length of the variable-focus lens at which the user's focus is aligned with the viewed object (optimal focal length) is grasped in advance, the update processing can be executed by inputting these optimal focal lengths. However, in a case where these optimal focal lengths are not grasped in advance, it is necessary to determine these optimal focal lengths by other means.

The present ocular lens device comprises the focal length determination unit that determines the focal length (optimal focal length) of the variable-focus lens at which the focus is aligned when the user of the variable-focus lens views the viewed object. Then, using the determination result from this focal length determination unit, the user's optimal focal length for the viewed object is grasped, and the update processing is executed. Therefore, even in a case where these optimal focal lengths are not grasped in advance, the update processing can be executed.

Also, the ocular lens device may comprise an operation unit that accepts user operations to change the focal length of the variable-focus lens, and the focal length determination unit may determine the focal length based on the operation results of the operation unit.

According to the present ocular lens device, the focal length determination unit can easily grasp the user's optimal focal length for the viewed object based on the operation results of the operation unit that accepts user operation for changing the focal length of the variable-focus lens.

A further other aspect of the present invention is an eyeglass that is equipped with the ocular lens device, and the variable-focus lens is held in the eyeglass frame.

If the ocular lens device is used as eyeglasses, as described above, the user can adjust the focal length of the variable-focus lens so that it is automatically controlled and adapted to the user during daily life while wearing the eyeglasses.

A further other aspect of the present invention is a control method for controlling the focal length of a variable-focus lens for the eye comprising a control process that controls the focal length of the variable-focus lens based on the detection result of a distance detection unit that detects the distance to the viewed object, and the focal length identification information stored in a storage unit that stores focal length identification information for identifying the focal length of the variable-focus lens according to the distance to the viewed object, and an update process that is performed to update the focal length identification information stored in the storage unit with new focal length identification information obtained by correcting, changing, or updating each focal length corresponding to a predetermined distance range including the obtained focal length and other distances by a correction value that reduces the difference between the obtained focal length and the focal length corresponding to that distance in the focal length identification information stored in the storage unit.

According to the present control method, as in the case of the lens control device described above, without requiring the user to perform cumbersome tasks, the focal length of the variable-focus lens can be adjusted with high precision to match the focus of each individual user (or to the focal length and/or refractive power at which each individual user can see clearly) in accordance with the distance to the viewed object.

A further other aspect of the present invention is a program to operate the computer of a lens control device that controls the focal length of a variable-focus lens for the eye a lens control program used for a lens control device comprising a storage unit that stores focal length identification information for identifying, in accordance with a distance from a mounting position of a variable-focus lens for an eye to a viewed object, a focal length of the variable-focus lens, and a control unit that selectively executes an automatic control mode, in which the focal length of the variable-focus lens is controlled based on a detection distance from a distance detection unit detecting a distance from the variable-focus lens to the viewed object and the focal length identification information in the storage unit, and a manual control mode, in which the focal length of the variable-focus lens is controlled based on a command operation performed on an operation unit, a program for executing processing of the control unit by a computer comprising a setting mode and a usage mode, wherein the setting mode causes to execute processing comprising a step of acquiring a detection distance from the distance detection unit and a focal length of the variable-focus lens when the operation unit is command operated to bring the viewed object into focus in the manual control mode, a step of calculating a difference between a focal length of the variable-focus lens at the time of the acquired focusing operation and a focal length of the focal length identification information corresponding to the detection distance as a correction value, and a step of generating focal length identification information that has been corrected, modified, or updated based on the correction value, and storing it in the storage unit, and the usage mode causes to execute processing comprising a step of controlling the variable-focus lens to a focal length corresponding to a distance to any viewed object detected by the distance detection unit from the updated focal length identification information.

According to the present program, as in the case of the lens control device described above, without requiring the user to perform cumbersome tasks, the focal length of the variable-focus lens can be set with high precision and ease to match the focus of each individual user (by adjusting the focus and/or focal length and/or refractive power of the variable-focus lens so that the user can see clearly) in accordance with the distance to the viewed object, and used. Advantageous Effects of Invention

According to the present invention, without requiring the user to perform cumbersome tasks, the focal length of the variable-focus lens can be set with high precision and ease to match the focus of each individual user in accordance with the distance to the viewed object, and used.

### Brief Description of Drawings

FIG. 1 is a perspective view showing an external configuration of eyeglasses on which a lens control device according to an embodiment is mounted.
FIG. 2 is a perspective view showing an external configuration of the eyeglasses shown in FIG. 1 when a front cover is removed from an eyeglass frame.
FIG. 3 is a plan view showing an external configuration of the eyeglasses shown in FIG. 1 in a case of being viewed from below.
FIG. 4 is a front view schematically showing a basic configuration of the eyeglasses shown in FIG. 1.
FIG. 5 is a plan view schematically showing a basic configuration of the eyeglasses shown in FIG. 1.
FIG. 6 is a block diagram showing a configuration of a lens control device of the eyeglasses shown in FIG. 1.
FIG. 7 is an explanatory diagram showing an example of table data, which is focal length identification information stored in a storage unit of the lens control device shown in FIG. 5.
FIG. 8 is a flowchart showing a processing flow of the lens control device shown in FIG. 6.
FIG. 9 is a diagram showing a list of relative refractive power ranges for each viewing distance corresponding to a reference viewing distance, as change values (relative values from each reference point) from each reference viewing distance of the focal length identification information.

### Mode for Carrying Out the Invention

In the following, embodiments will be described with reference to the drawings. It should be noted that the disclosure is merely an example, and the invention is not limited by the content described in the following embodiments. Modifications that a person skilled in the art could readily conceive are naturally included within the scope of the disclosure. To clarify the explanation, the drawings may sometimes schematically represent the size, shape, and other characteristics of parts by modifying them from those of the actual embodiment. In multiple drawings, corresponding elements may be assigned the same reference numbers, and detailed descriptions may be omitted.

In the following, the present invention is described relating to an embodiment applied to eyeglasses as an ocular lens device comprising a lens control device.

Note that the ocular lens device to which the present invention can be applied is not limited to eyeglasses but may also be other items worn or used by a wearer (hereinafter also referred to as a "user").

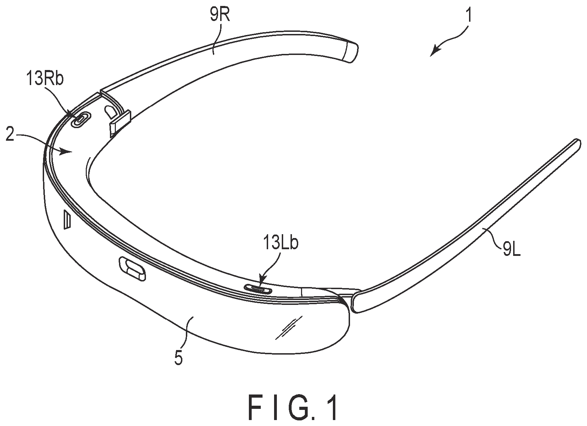

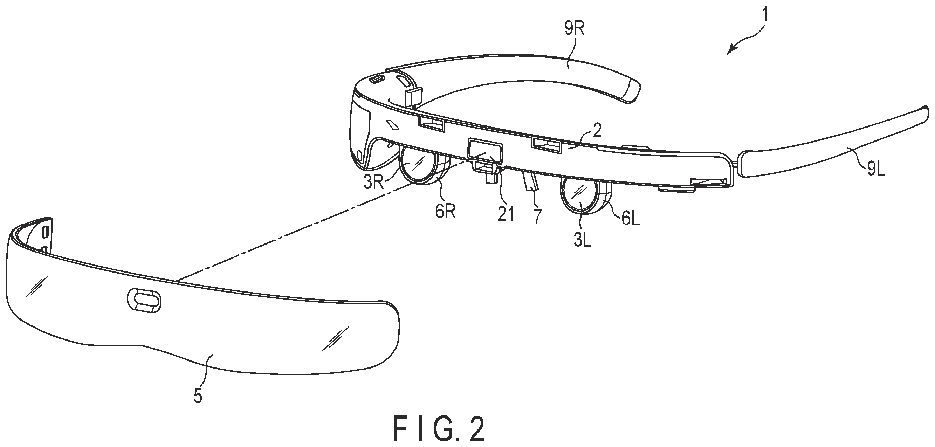

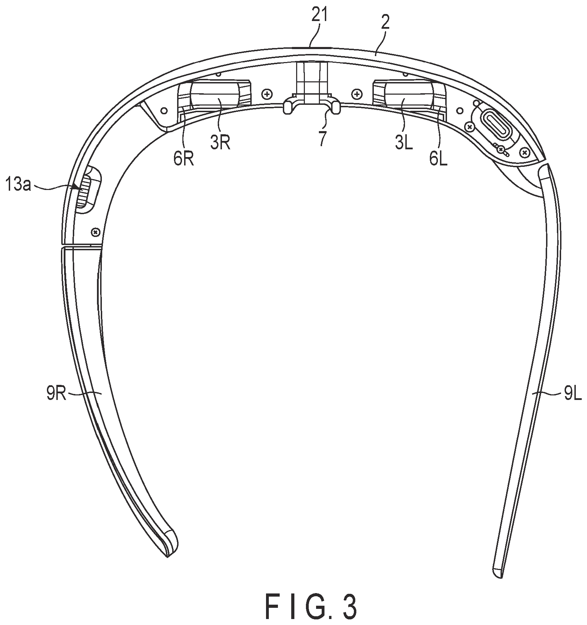

FIG. 1 is a perspective view showing an external configuration of eyeglasses on which the lens control device according to an embodiment is mounted, FIG. 2 is a perspective view showing an external configuration of the eyeglasses shown in FIG. 1 when a front cover is removed from an eyeglass frame, and FIG. 3 is a plan view showing an external configuration of the eyeglasses shown in FIG. 1 in a case of being viewed from below.

Eyeglasses 1 of the present embodiment shown in FIG. 1 comprise an eyeglass frame 2 and a protective cover 5 covering the front surface of the lenses of the eyeglass frame 2, and, on both sides of the eyeglass frame 2, have temple portions 9L and 9R mounted so as to be rotatable inward. The eyeglass frame 2 and the protective cover 5 are detachable, as shown in FIG. 2.

On the eyeglass frame 2, as shown in FIG. 2 and FIG. 3, a pair of left and right variable-focus lenses 3L and 3R is mounted in a structure that allows its position to be adjusted by lens holding portions 6L and 6R, respectively, a nose pad portion 7 is attached to the lower central portion, and a distance detection unit 21 for detecting the distance to the viewed object is provided on the central front.

Also, on the eyeglass frame 2, as shown in FIG. 1, button portions 13La and 13Ra for button operation are provided on the upper left and right portions, and as shown in FIG. 3, a dial portion 13b for dial operation is provided on the lower right portion.

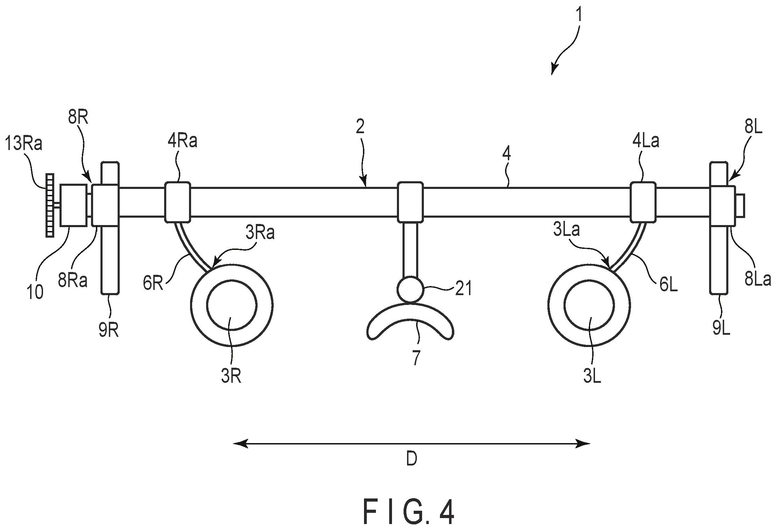

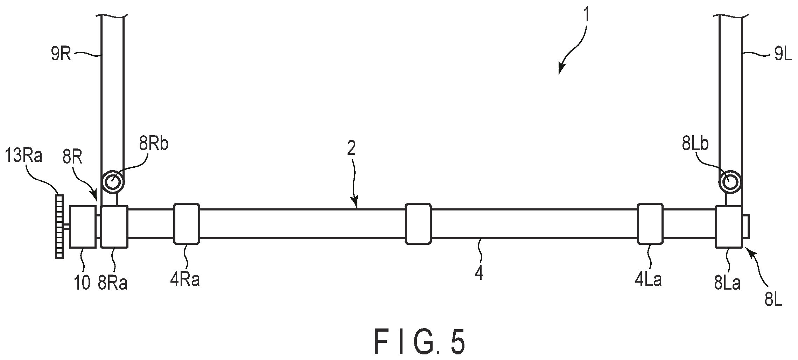

FIG. 4 is a front view schematically showing a basic configuration of the eyeglasses 1 shown in FIG. 1, and FIG. 5 is a plan view schematically showing a basic configuration of the eyeglasses 1 shown in FIG. 1.

The eyeglasses 1 in the present embodiment comprise the eyeglass frame 2, the pair of left and right variable-focus lenses 3L and 3R, and a control device 10 that functions as a lens control device to control the focal length of the variable-focus lenses 3L and 3R.

The eyeglass frame 2 comprises a bridge portion 4, the pair of left and right lens holding portions 6L and 6R, the nose pad portion 7, a pair of left and right arm portions 8L and 8R, and the pair of left and right temple portions 9L and 9R.

The bridge portion 4 is arranged at a position above and out of the wearer's field of view when worn and serves as a member supporting the left and right lens holding portions 6L and 6R, which hold the variable-focus lenses 3L and 3R. The bridge portion 4 extends in the left-right direction across the left and right arm portions 8L and 8R, and the arm portions 8L and 8R are attached to both end portions of the bridge portion 4 in the left-right direction. It is preferable that the bridge portion 4 comprises an inter-lens distance adjustment portion that connects the lens holding portion 6R (or 6L) so that the lens holding portion 6L (or 6R) can move in the left-right direction, thereby allowing adjustment of an inter-lens distance D of the pair of variable-focus lenses 3L and 3R held by the lens holding portions 6L and 6R in the left-right direction.

Note that the inter-lens distance D can be defined, for example, by the distance between reference positions on the variable-focus lenses 3L and 3R (e.g., the center positions of the variable-focus lenses 3L and 3R). Here, the reference positions of the variable-focus lenses 3L and 3R are, for example, equal to the optical center positions of the variable-focus lenses 3L and 3R, and the inter-lens distance D is equal to the distance between the optical centers of each of the variable-focus lens 3L and 3R.

The lens holding portions 6L and 6R are members that hold the variable-focus lenses 3L and 3R, and their shape is elongated (linear). Specifically, the lens holding portions 6L and 6R of the present embodiment are formed by plastically deformable wire members.

The lens holding portions 6L and 6R extend from the bridge portion 4 of the eyeglass frame 2, and hold the variable-focus lenses 3L and 3R by connecting their tips to connection positions 3La and 3Ra on the outer edges of the variable-focus lenses 3L and 3R. Also, the lens holding portions 6L and 6R are supported relative to the bridge portion 4 via sliding portions 4La and 4Ra, and the inter-lens distance adjustment portion is configured by the sliding portions 4La and 4Ra. Specifically, the sliding portions 4La and 4Ra are members that hold the lens holding portions 6L and 6R so that they can slide in the left-right direction relative to the bridge portion 4. In the present embodiment, the sliding portions 4La and 4Ra are hollow members, into which hollow portions the bridge portion 4 is inserted, and are attached to the bridge portion 4 in a slidable manner along the longitudinal direction of the bridge portion 4.

By providing the inter-lens distance adjustment portion, the inter-lens distance D of the variable-focus lenses 3L and 3R can be adjusted to match a user's interpupillary distance PD in the emmetropic state. In a case where the variable-focus lenses 3L and 3R are smaller than conventional eyeglass lenses, as in the present embodiment, it is advantageous to be able to adjust the inter-lens distance D of the variable-focus lenses 3L and 3R for each user to match their interpupillary distance PD.

Note that, in the present embodiment, the connection positions 3La and 3Ra of the variable-focus lenses 3L and 3R, to which the lens holding portions 6L and 6R are connected, are each positioned, as shown in FIG. 4, on the outer side (the side farther from the nose, i.e., the ear side) of a vertical imaginary line passing through the optical axes of the variable-focus lenses 3L and 3R, and on the upper side of a horizontal imaginary line passing through the optical axes of the variable-focus lenses 3L and 3R. By configuring the lens holding portions 6L and 6R to be connected at these positions, even if the lens holding portions 6L and 6R enter the wearer's field of view, the lens holding portions 6L and 6R are less likely to be perceived as an obstruction.

The nose pad portion 7 is held by the bridge portion 4 and is a member that contacts the user's nose when the user wears the eyeglasses 1, thereby positioning the position of the eyeglasses 1.

The arm portions 8L and 8R are members that connect the bridge portion 4 to the temple portions 9L and 9R. In the present embodiment, the arm portions 8L and 8R comprise mounting portions 8La and 8Ra attached to end portions of the bridge portion 4, and hinge portions 8Lb and 8Rb that rotatably support the temple portions 9L and 9R.

The temple portions 9L and 9R are members that are hooked over the user's ears when the user wears the eyeglasses 1. In the present embodiment, the left and right temple portions 9, 9 are configured so that they can each be folded toward the center of the eyeglasses 1 in the left-right direction by the hinge portion 8b provided on the arm portions 8L and 8R.

The variable-focus lenses 3L and 3R in the present embodiment are not limited to a specific configuration, provided they have a function to change the focal length under electrical control. However, it is preferable that the variable-focus lenses 3L and 3R be shape-variable lenses in which the focal length changes as the shape of the refractive surface changes. Among shape-variable lenses, liquid lenses (also known as electro-wetting devices, etc.) are preferred, in which the interface between two types of liquids serves as the refractive surface, and the focal length can be changed by electrically controlling the wettability of the liquids to alter the shape of the interface. With liquid lenses, high-speed and highly flexible control of the focal length is possible.

The variable-focus lenses 3L and 3R of the present embodiment employ liquid lenses, for example, with a lens portion diameter of approximately 5 mm to 12 mm.

In particular, the variable-focus lenses 3L and 3R of the present embodiment can be deformed into negative lenses (equivalent to concave lenses), plano lenses (no refractive power), or positive lenses (equivalent to convex lenses) by controlling a voltage to be applied respectively. Therefore, the eyeglasses 1 of the present embodiment can be used as eyeglasses for nearsighted users by setting the variable-focus lenses 3L and 3R as concave lenses (negative lenses), and can be used as eyeglasses for farsighted users by setting the variable-focus lenses 3L and 3R as positive lenses (equivalent to convex lenses).

The variable-focus lenses 3L and 3R of the present embodiment can vary the focal length within a range of, for example, -15D to +15D in diopter equivalent (reciprocal of focal length). By using variable-focus lenses 3L and 3R with such a wide range of focal length variation, it is possible to accommodate users for whom standard vision correction is difficult without custom-made lenses (high-cost lenses requiring more than a week from order to completion when custom-made), for example.

Also, in the present embodiment, for example, the variable-focus lenses 3L and 3R can perform control to change the position or direction of the optical center (also known as the optical axis) by applying a voltage to a portion of electrodes arranged at approximately equal angles around the periphery of the lenses.

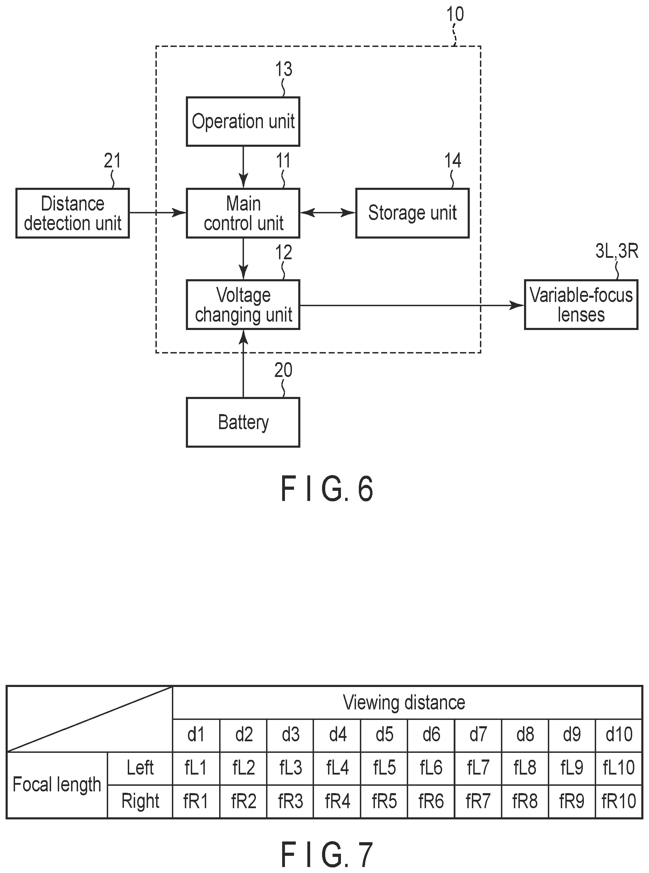

FIG. 6 is a block diagram showing the configuration of a lens control device 10 in the present embodiment.

The lens control device 10 in the present embodiment comprises a main control unit 11, a voltage changing unit 12, an operation unit 13, and a storage unit 14. The lens control device 10 is connected to electrodes (not shown) of the two variable-focus lenses 3L and 3R, a battery 20 serving as a power source for supplying voltage, and a distance detection unit 21 that detects the distance to a viewed object being viewed through the variable-focus lenses 3L and 3R.

The main control unit 11 is configured, for example, by a control board (arithmetic processing unit) mounted with various calculation devices and various storage devices, and controls the eyeglass 1, which is an ocular lens device, by executing predetermined control commands (also referred to as programs) stored in non-volatile or volatile storage devices. Specifically, in the present embodiment, the main control unit 11 functions as a control unit (control means) that controls the variable-focus lenses 3L and 3R, and that measures the distance to the viewed object (or the direction the face is facing, or the direction in front of the user) detected by the distance detection unit 21 and, based on (the measured value), varies the focal length of the variable-focus lenses 3L and 3R.

The voltage changing unit 12, under the control of the main control unit 11, changes the voltage applied from the battery 20 to groups of electrodes arranged at equal angles around each of the variable-focus lenses 3L and 3R. The voltage changing unit 12 can change the voltage applied to each group of electrodes individually. However, the voltage changing unit 12 may be controllable in such a way as to partially change only a part of the electrode groups (e.g., only a pair of opposing electrodes).

The operation unit 13, in response to the user's operation, outputs a signal including the content of the user's operation to the main control unit 11. As user's operations accepted by the operation unit 13, there are, for example, operations to start or stop supplying power (power supply), execution instructions for the main control unit 11, and instructions to change control contents of the main control unit 11. In particular, the operation unit 13 in the present embodiment accepts user's operations for changing the focal lengths of the two variable-focus lenses 3L and 3R.

The operation unit 13 is configured by a type of operating device suitable for the content of the user operation to be accepted (such as a mechanical switch button or a sensor such as an electrostatic touch panel, a rotary operation unit such as a dial that transmits signals such as pulses, or a slide-type operation unit). The operation unit 13 of the present embodiment is configured by a rotary-type dial portion 13a (FIG. 3, FIG. 4, and FIG. 5) and button-type button portions 13Lb and 13Rb (FIG. 1).

The rotary-type dial portion 13a, as shown in FIG. 3, FIG. 4, and FIG. 5, is provided on the side of the right arm portion 8R and is configured rotatably about a rotational axis. The rotational axis of the dial portion 13a may be arranged parallel to the left-right direction in which the user's eyes are arranged; however, it is preferrable to arrange it vertically when in a user's wearing state as this makes the dial easier to turn and eliminates structural elements on the side of the eyeglass body. For example, the dial portion 13a is such that, when rotated counterclockwise, it accepts a command operation to shorten the focal length of the variable-focus lens 3L for the left eye, and when rotated clockwise, it accepts a command operation to lengthen the focal length of the variable-focus lens 3L for the left eye. Also, by reversing the direction of a pulse counter in the dial portion 13a, the dial portion 13a can accept a command operation to shorten the focal length of the variable-focus lens 3R for the right eye when rotated clockwise, and can accept a command operation to lengthen the focal length of the variable-focus lens 3R for the right eye when rotated counterclockwise.

A plurality of button-type button portions 13Lb and 13Rb can be arranged at any desired position. For example, the button portion 13Rb on the right side in the wearing state shown in FIG. 1 and FIG. 4 allows switching between functions (a manual mode function for fixed refractive power and an autofocus mode function) by a pressing operation. Also, by pressing the button portion 13Lb on the left side in the wearing state, a function to adjust the refractive power of the left and right lenses differently can be selected during initial adjustment of the refractive power of lenses (also known as calibration).

In the present embodiment, the button portion 13 accepts switching operations to change the operating mode of the main control unit 11, as well as user-determined command operations, etc.

In the present embodiment, the switching operation performed by the button portion 13 is an operation to switch between a setting mode and a usage mode. The setting mode is an operating mode for setting focal length identification information used during an automatic control mode described below, and it sets the user's optimal focal length based on the viewing distance detected by the distance detection unit 21. The usage mode is an operating mode for controlling the focal lengths of the variable-focus lenses 3L and 3R via the automatic control mode or a manual control mode described below.

In the present embodiment, the user-determined command operation via the button portion 13 involves, for example, while changing the focal length of each of the variable-focus lenses 3L and 3R by the operation to the dial portions 13La and 13Ra, adjusting it to become the focal length that suits the user, and retaining, by the storage unit 14, the value of the focal length identification information when the suitable focal length is determined.

The storage unit 14 stores programs and data used by the control device 10. In particular, in the present embodiment, as data used for controlling the focal lengths of the variable-focus lenses 3L and 3R in the automatic control mode, the value of the focal length identification information used to identify the focal lengths of the variable-focus lenses 3L and 3R based on the distance to the viewed object is stored, and, when the user changes or there is a change in the physical condition of even the same user, and the eye state changes, information is updated as needed.

The focal length identification information is, for example, information indicating the relationship between the viewing distance to the viewed object (the detection result of the distance detection unit 21) and the user's respective optimal focal lengths for the two variable-focus lenses 3L and 3R (the focal length suited to the user corresponding to each viewing distance). Such information, for example, as shown in FIG. 7, can be stored in the storage unit 14 as table data describing the correspondence between the viewing distance and the focal lengths of the two variable-focus lenses 3, 3.

In particular, in the present embodiment, during the setting mode, the distance to a viewed object when being viewed by the user, and the focal length of the variable-focus lenses 3L and 3R at which the user's focus is aligned with the viewed object are acquired. Then, a correction value (focal length or refractive power: focal length and refractive power are inversely related and represent the same physical quantity) is calculated to minimize the difference between the acquired focal length and the focal length corresponding to the distance in the focal length identification information stored in the storage unit 14. Subsequently, new focal length identification information is generated by adding or subtracting a focal length or refractive power substantially identical to the correction value to or from each focal length corresponding to a predetermined distance range, including the distance and other distances, by the amount of the correction value, and the focal length identification information stored in the storage unit 14 is updated by this new focal length identification information.

The new focal length identification information updated in this manner has the same general pattern of changes in the optimal focal length corresponding to viewing distances within the predetermined distance range as the focal length identification information stored in the storage unit 14; however, each focal length corresponding to each viewing distance within the predetermined distance range is corrected, modified, or updated by adding or subtracting the aforementioned correction value.

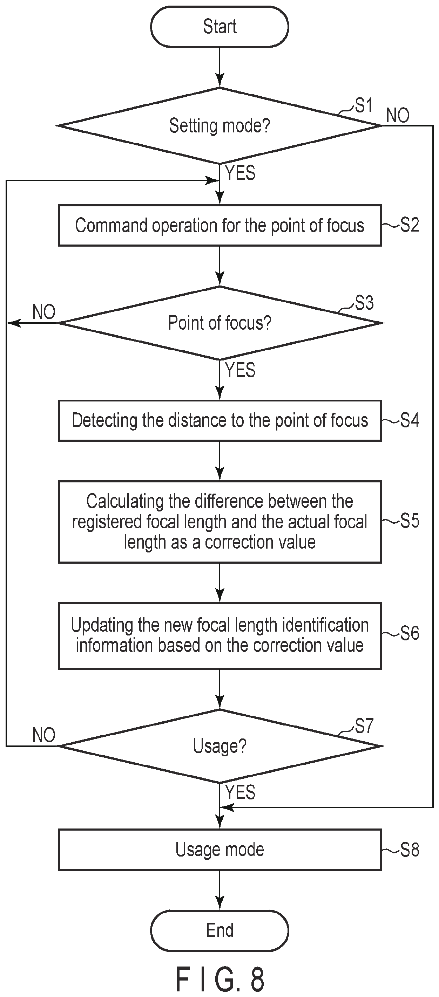

FIG. 8 is a flowchart showing a processing flow of the lens control device 10 shown in FIG. 6, particularly performed by the main control unit 11. First, the main control unit 11 determines whether or not it is in the setting mode upon power-up or from a user's selection operation (step S1); if it is not in setting mode (YES), it proceeds to the usage mode described in step S8; and if it is in the setting mode (YES), it responds to the user's command operations in the manual control mode to control the focal lengths of the variable-focus lenses 3L and 3R so that the focus is aligned with the viewed object (becomes the point of focus) (step S2, S3). Next, the distance detection unit 21 detects the distance to the viewed object at the point of focus (step S4), calculates the difference between the focal length in the focal length identification information at the point of focus (registered focal length) and the detected focal length (actual focal length) as a correction value (step S5), generates new focal length identification information by correcting, modifying, or updating the focal length identification information stored in storage unit 14 based on the correction value, and stores this new focal length identification information in the storage unit 14 (step S6). Here, it is determined whether or not the usage mode has been specified (step S7); in a case where a reset (or additional setting) is required (NO), it returns to step S2 of the point of focus command operation; and in a case where the usage mode has been specified (YES), it transitions to the usage mode and operates in the automatic control mode, performing control based on the new focal length identification information stored in the storage unit 14 (step S8). Here, in the aforementioned setting mode, new focal length identification information, corrected, modified, or updated based on the correction value for at least one or more viewed object distances different from the detection distance of the focal length identification information, is generated and stored in the storage unit. Also, in the setting mode, for correction, modification, or update, the same correction value may be used for the distance to any viewed object.

According to the present embodiment, simply by determining the user's optimal focal length corresponding to a minimum of one viewing distance, which is few, the focal length identification information stored in the storage unit 14 can be updated to new focal length identification information suited to that user. Therefore, according to the present lens control device, focal length identification information suited to individual users can be obtained without requiring the user to perform cumbersome tasks when determining the user's optimal focal length corresponding to the viewing distance. As a result, since focal length identification information suited to individual users can be generated, the focal lengths of the two variable-focus lenses 3L and 3R can be adjusted to the optimal focal length for each user via the automatic control mode during the usage mode.

Note that the focal length identification information stored in the storage unit 14 prior to being updated may be the focal length identification information pre-stored in the storage unit 14 at the time of shipment, the focal length identification information updated by a previous user, or the focal length identification information updated by the same user in the past. The focal length identification information pre-stored in the storage unit 14 at the time of shipment may be created based on the results of measuring the optimal focal length for each viewing distance across the distance range of the focal length identification information for one or more subjects (persons other than the user). The subjects may be one or more persons with standard vision, or a plurality of persons with different visual acuity or varying degrees of refractive error.

The battery 20 functions as a power source for the control device 10 and outputs a voltage supplied to each electrode of the variable-focus lenses 3L and 3R. The battery 20 may be a primary cell or a secondary cell. It may also be provided with a power generation function, such as a solar panel.

The distance detection unit 21 is not limited to its configuration as long as it can detect the distance to a viewed object present in an area in front of the variable-focus lenses 3L and 3R (viewing area); however, a configuration in which it is arranged on the eyeglass frame 2, particularly a configuration in which it is arranged in the vicinity of the variable-focus lenses 3L and 3R, is preferred. The distance detection unit 21 in the present embodiment, as shown in FIG. 2 and FIG. 4, is arranged on the nose pad portion 7; however, it may also be arranged on the bridge portion 4 or the arm portions 8L and 8R, etc. However, since it is preferable that the distance detection unit 21 be located in a position where it is less likely to be covered by the user's hair (bangs) when wearing the eyeglasses 1, it is preferable to position it as low as possible on the front surface of the eyeglasses 1 (the nose pad portion 7) as shown in the present embodiment.

The distance measurement method in the distance detection unit 21 is not particularly limited, and existing distance measurement methods, such as a laser method or an ultrasonic method, can be widely adopted. Note that, in a case where it is difficult for a single distance detection unit to cover a range of viewing distances (from near distance to far distance) desired to be detected by the distance detection unit 21, a plurality of distance detection units may be arranged such that their effective detection distance ranges (distance ranges where high-precision detection is possible) differ from one another.

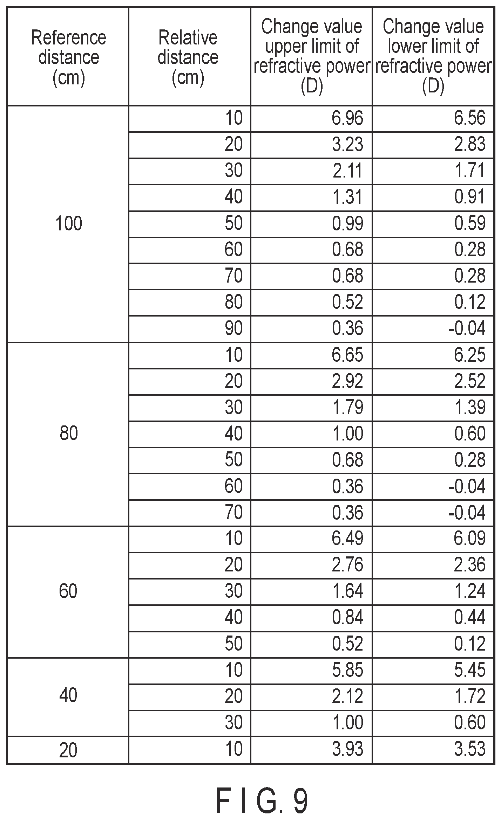

The focal length identification information of the present invention will be described with reference to FIG. 9. FIG. 9 is a diagram showing a list of change values (relative values from each reference point) from each reference distance of the focal length identification information.

FIG. 9 is a diagram showing a list (a table) of relative refractive power ranges for each viewing distance corresponding to a reference viewing distance, as change values (relative values from each reference point) from each reference viewing distance of the focal length identification information. Although the focal length identification information indicates the relationship between the distance to the target and the optimal focal length, the values during use vary from user to user so as to suit individual users; however, the relative values (change amounts or rates of change) remain virtually unchanged even in a case where the user differs. That is, while the values on the graph showing the relationship between the distance to the viewed object (viewing distance) and the optimal focal length (refractive power per distance) differ from person to person, performing a control based on the focal length identification information that keeps the rate of change (or change amount) in refractive power unchanged among distances to different viewed objects (viewing distances) allows an unspecified number of users to achieve clear vision. Therefore, in the present invention, it is preferable to perform control based on the initially set focal length identification information. Furthermore, based on this insight, refractive power adjustment can be performed at at least one viewing distance, which was achieved by performing control based on the focal length identification information having the aforementioned characteristics.

Specifically, in the control processing of the main control unit 11, in the case where the distance to a viewed object when the user views the viewed object through the variable-focus lens, and the focal length of the variable-focus lens at which the user's focus is aligned with the viewed object are acquired; the difference between the acquired focal length and the focal length corresponding to that distance in the focal length identification information stored in the storage unit is corrected; other distances to the viewed object is controlled by applying the correction value; and update processing is executed to update the focal length identification information stored in the storage unit with new focal length identification information in which each focal length corresponding to a predetermined distance range, including the distance and other distances, has been corrected, modified, or updated to be substantially equal to the correction value, as shown by measurement data in FIG. 9, refractive power adjustment can be performed at least one viewing distance by comprising at least one of:
the focal length identification information including adding a refractive power such that, when the lens refractive power at a position where the distance to the viewed object is approximately 100 cm is taken as a reference, the lens refractive power at a distance of approximately 50 cm to the viewed object falls within the range of 0.99 D to 0.59 D;
the focal length identification information including adding a refractive power such that, when the lens refractive power at a position where the distance to the viewed object is approximately 80 cm is taken as a reference, the lens refractive power at a distance of approximately 10 cm to the viewed object falls within the range of 6.65 D to 6.25 D;
the focal length identification information, when the lens refractive power at a position where the distance to the viewed object is approximately 80 cm is taken as a reference, adding a refractive power such that the lens refractive power at a distance of approximately 50 cm to the viewed object falls within the range of 0.68 D to 0.28 D; and
the focal length identification information, when the lens refractive power at a position where the distance to the viewed object is approximately 80 cm is taken as a reference, adding a refractive power such that the lens refractive power at a distance of approximately 50 cm to the viewed object falls within the range of 0.68 D to 0.28 D; and
the focal length identification information including adding a refractive power such that, when the lens refractive power at a position where the distance to the viewed object is approximately 60 cm is taken as a reference, the lens refractive power at a distance of approximately 10 cm to the viewed object falls within the range of 6.49 D to 6.09 D.

However, the range of each lens refractive power is at least one or more and includes two or more (e.g., all combinations of distances). It is even possible to technically support cases including one element or all elements of two or more (the case of all combinations is preferable as an actual product control characteristic).

Note that FIG. 9 shows a table in a case where viewing distances are at 20 cm intervals and refractive power range is ±0.2 D; however, in a case of further improving accuracy, it is advisable to subdivide the focal length identification information and prepare a table that adds up the refractive powers such that the lens refractive powers at viewing distance Y (e.g., Y = 1, 20, ..., 100 [cm]) to an arbitrary viewed object fall within a predetermined range (width) (±Z [D]) when the lens refractive power at viewing distance X (e.g., X = 10, 20, ..., 100 [cm]) to a reference viewed object is used as the reference. As a specific example, an example is shown.

### (Example)

As an example, the temperature is 20°C, the intervals are 1 cm, and the range of upper and lower limits of the refractive power are shown. Here, when the focal length identification information includes adding refractive powers such that, when the lens refractive power at a position where a distance to the viewed object is approximately X [cm] is taken as a reference, the lens refractive power at a distance of Y [cm] to the viewed object falls within the range of A to B [D], it comprises at least one of the following.

X:100, Y:1, A:21.22, B:21.62,
X:100, Y:2, A:19.49, B:19.89,
X:100, Y:3, A:17.77, B:18.17,
X:100, Y:4, A:17.77, B:18.17,
X:100, Y:5, A:12.69, B:13.09,
X:100, Y:6, A:10.35, B:10.75,
X:100, Y:7, A:9.36, B:9.76,
X:100, Y:8, A:8.37, B:8.77,
X:100, Y:9, A:7.38, B:7.78,
X:100, Y:10, A:6.56, B:6.96,
X:100, Y:11, A:5.75, B:6.15,
X:100, Y:12, A:5.26, B:5.66,
X:100, Y:13, A:4.77, B:5.17,
X:100, Y:14, A:4.29, B:4.69,
X:100, Y:15, A:3.96, B:4.36,
X:100, Y:16, A:3.64, B:4.04,
X:100, Y:17, A:3.32, B:3.72,
X:100, Y:18, A:3.16, B:3.56,
X:100, Y:19, A:3.00, B:3.40,
X:100, Y:20, A:2.83, B:3.23,
X:100, Y:21, A:2.67, B:3.07,
X:100, Y:22, A:2.51, B:2.91,
X:100, Y:23, A:2.35, B:2.75,
X:100, Y:24, A:2.19, B:2.59,
X:100, Y:25, A:2.19, B:2.59,
X:100, Y:26, A:2.03, B:2.43,
X:100, Y:27, A:2.03, B:2.43,
X:100, Y:28, A:1.87, B:2.27,
X:100, Y:29, A:1.71, B:2.11,
X:100, Y:30, A:1.71, B:2.11,
X:100, Y:31, A:1.55, B:1.95,
X:100, Y:32, A:1.55, B:1.95,
X:100, Y:33, A:1.39, B:1.79,
X:100, Y:34, A:1.23, B:1.63,
X:100, Y:35, A:1.23, B:1.63,
X:100, Y:36, A:1.07, B:1.47,
X:100, Y:37, A:1.07, B:1.47,
X:100, Y:38, A:0.91, B:1.31,
X:100, Y:39, A:0.91, B:1.31,
X:100, Y:40, A:0.91, B:1.31,
X:100, Y:41, A:0.91, B:1.31,
X:100, Y:42, A:0.75, B:1.15,
X:100, Y:43, A:0.75, B:1.15,
X:100, Y:44, A:0.75, B:1.15,
X:100, Y:45, A:0.75, B:1.15,
X:100, Y:46, A:0.59, B:0.99,
X:100, Y:47, A:0.59, B:0.99,
X:100, Y:48, A:0.59, B:0.99,
X:100, Y:49, A:0.59, B:0.99,
X:100, Y:50, A:0.59, B:0.99,
X:100, Y:51, A:0.44, B:0.84,
X:100, Y:52, A:0.44, B:0.84,
X:100, Y:53, A:0.44, B:0.84,
X:100, Y:54, A:0.44, B:0.84,
X:100, Y:55, A:0.44, B:0.84,
X:100, Y:56, A:0.44, B:0.84,
X:100, Y:57, A:0.44, B:0.84,
X:100, Y:58, A:0.44, B:0.84,
X:100, Y:59, A:0.28, B:0.68,
X:100, Y:60, A:0.28, B:0.68,
X:100, Y:61, A:0.28, B:0.68,
X:100, Y:62, A:0.28, B:0.68,
X:100, Y:63, A:0.28, B:0.68,
X:100, Y:64, A:0.28, B:0.68,
X:100, Y:65, A:0.28, B:0.68,
X:100, Y:66, A:0.28, B:0.68,
X:100, Y:67, A:0.28, B:0.68,
X:100, Y:68, A:0.28, B:0.68,
X:100, Y:69, A:0.28, B:0.68,
X:100, Y:70, A:0.28, B:0.68,
X:100, Y:71, A:0.28, B:0.68,
X:100, Y:72, A:0.28, B:0.68,
X:100, Y:73, A:0.12, B:0.52,
X:100, Y:74, A:0.12, B:0.52,
X:100, Y:75, A:0.12, B:0.52,
X:100, Y:76, A:0.12, B:0.52,
X:100, Y:77, A:0.12, B:0.52,
X:100, Y:78, A:0.12, B:0.52,
X:100, Y:79, A:0.12, B:0.52,
X:100, Y:80, A:0.12, B:0.52,
X:100, Y:81, A:0.12, B:0.52,
X:100, Y:82, A:0.12, B:0.52,
X:100, Y:83, A:0.12, B:0.52,
X:100, Y:84, A:0.12, B:0.52,
X:100, Y:85, A:0.12, B:0.52,
X:100, Y:86, A:-0.04, B:0.36,
X:100, Y:87, A:-0.04, B:0.36,
X:100, Y:88, A:-0.04, B:0.36,
X:100, Y:89, A:-0.04, B:0.36,
X:100, Y:90, A:-0.04, B:0.36,
X:100, Y:91, A:-0.04, B:0.36,
X:100, Y:92, A:-0.04, B:0.36,
X:100, Y:93, A:-0.04, B:0.36,
X:100, Y:94, A:-0.04, B:0.36,
X:100, Y:95, A:-0.04, B:0.36,
X:100, Y:96, A:-0.04, B:0.36,
X:100, Y:97, A:-0.04, B:0.36,
X:100, Y:98, A:-0.04, B:0.36,
X:100, Y:99, A:-0.20, B:0.20,
X:100, Y:100, A:-0.20, B:0.20,
X:90, Y:1, A:21.06, B:21.46,
X:90, Y:2, A:19.33, B:19.73,
X:90, Y:3, A:17.61, B:18.01,
X:90, Y:4, A:17.61, B:18.01,
X:90, Y:5, A:12.53, B:12.93,
X:90, Y:6, A:10.19, B:10.59,
X:90, Y:7, A:9.20, B:9.60,
X:90, Y:8, A:8.21, B:8.61,
X:90, Y:9, A:7.22, B:7.62,
X:90, Y:10, A:6.40, B:6.80,
X:90, Y:11, A:5.59, B:5.99,
X:90, Y:12, A:5.10, B:5.50,
X:90, Y:13, A:4.61, B:5.01,
X:90, Y:14, A:4.13, B:4.53,
X:90, Y:15, A:3.80, B:4.20,
X:90, Y:16, A:3.48, B:3.88,
X:90, Y:17, A:3.16, B:3.56,
X:90, Y:18, A:3.00, B:3.40,
X:90, Y:19, A:2.84, B:3.24,
X:90, Y:20, A:2.68, B:3.08,
X:90, Y:21, A:2.52, B:2.92,
X:90, Y:22, A:2.35, B:2.75,
X:90, Y:23, A:2.19, B:2.59,
X:90, Y:24, A:2.03, B:2.43,
X:90, Y:25, A:2.03, B:2.43,
X:90, Y:26, A:1.87, B:2.27,
X:90, Y:27, A:1.87, B:2.27,
X:90, Y:28, A:1.71, B:2.11,
X:90, Y:29, A:1.55, B:1.95,
X:90, Y:30, A:1.55, B:1.95,
X:90, Y:31, A:1.39, B:1.79,
X:90, Y:32, A:1.39, B:1.79,
X:90, Y:33, A:1.23, B:1.63,
X:90, Y:34, A:1.07, B:1.47,
X:90, Y:35, A:1.07, B:1.47,
X:90, Y:36, A:0.91, B:1.31,
X:90, Y:37, A:0.91, B:1.31,
X:90, Y:38, A:0.75, B:1.15,
X:90, Y:39, A:0.75, B:1.15,
X:90, Y:40, A:0.75, B:1.15,
X:90, Y:41, A:0.75, B:1.15,
X:90, Y:42, A:0.60, B:1.00,
X:90, Y:43, A:0.60, B:1.00,
X:90, Y:44, A:0.60, B:1.00,
X:90, Y:45, A:0.60, B:1.00,
X:90, Y:46, A:0.44, B:0.84,
X:90, Y:47, A:0.44, B:0.84,
X:90, Y:48, A:0.44, B:0.84,
X:90, Y:49, A:0.44, B:0.84,
X:90, Y:50, A:0.44, B:0.84,
X:90, Y:51, A:0.28, B:0.68,
X:90, Y:52, A:0.28, B:0.68,
X:90, Y:53, A:0.28, B:0.68,
X:90, Y:54, A:0.28, B:0.68,
X:90, Y:55, A:0.28, B:0.68,
X:90, Y:56, A:0.28, B:0.68,
X:90, Y:57, A:0.28, B:0.68,
X:90, Y:58, A:0.28, B:0.68,
X:90, Y:59, A:0.12, B:0.52,
X:90, Y:60, A:0.12, B:0.52,
X:90, Y:61, A:0.12, B:0.52,
X:90, Y:62, A:0.12, B:0.52,
X:90, Y:63, A:0.12, B:0.52,
X:90, Y:64, A:0.12, B:0.52,
X:90, Y:65, A:0.12, B:0.52,
X:90, Y:66, A:0.12, B:0.52,
X:90, Y:67, A:0.12, B:0.52,
X:90, Y:68, A:0.12, B:0.52,
X:90, Y:69, A:0.12, B:0.52,
X:90, Y:70, A:0.12, B:0.52,
X:90, Y:71, A:0.12, B:0.52,
X:90, Y:72, A:0.12, B:0.52,
X:90, Y:73, A:-0.04, B:0.36,
X:90, Y:74, A:-0.04, B:0.36,
X:90, Y:75, A:-0.04, B:0.36,
X:90, Y:76, A:-0.04, B:0.36,
X:90, Y:77, A:-0.04, B:0.36,
X:90, Y:78, A:-0.04, B:0.36,
X:90, Y:79, A:-0.04, B:0.36,
X:90, Y:80, A:-0.04, B:0.36,
X:90, Y:81, A:-0.04, B:0.36,
X:90, Y:82, A:-0.04, B:0.36,
X:90, Y:83, A:-0.04, B:0.36,
X:90, Y:84, A:-0.04, B:0.36,
X:90, Y:85, A:-0.04, B:0.36,
X:90, Y:86, A:-0.20, B:0.20,
X:90, Y:87, A:-0.20, B:0.20,
X:90, Y:88, A:-0.20, B:0.20,
X:90, Y:89, A:-0.20, B:0.20,
X:90, Y:90, A:-0.20, B:0.20,
X:90, Y:91, A:-0.20, B:0.20,
X:90, Y:92, A:-0.20, B:0.20,
X:90, Y:93, A:-0.20, B:0.20,
X:90, Y:94, A:-0.20, B:0.20,
X:90, Y:95, A:-0.20, B:0.20,
X:90, Y:96, A:-0.20, B:0.20,
X:90, Y:97, A:-0.20, B:0.20,
X:90, Y:98, A:-0.20, B:0.20,
X:90, Y:99, A:-0.36, B:0.04,
X:90, Y:100, A:-0.36, B:0.0,
X:80, Y:1, A:20.90, B:21.30,
X:80, Y:2, A:19.17, B:19.57,
X:80, Y:3, A:17.45, B:17.85,
X:80, Y:4, A:17.45, B:17.85,
X:80, Y:5, A:12.37, B:12.77,
X:80, Y:6, A:10.04, B:10.44,
X:80, Y:7, A:9.04, B:9.44,
X:80, Y:8, A:8.05, B:8.45,
X:80, Y:9, A:7.06, B:7.46,
X:80, Y:10, A:6.25, B:6.65,
X:80, Y:11, A:5.43, B:5.83,
X:80, Y:12, A:4.94, B:5.34,
X:80, Y:13, A:4.45, B:4.85,
X:80, Y:14, A:3.97, B:4.37,
X:80, Y:15, A:3.65, B:4.05,
X:80, Y:16, A:3.32, B:3.72,
X:80, Y:17, A:3.00, B:3.40,
X:80, Y:18, A:2.84, B:3.24,
X:80, Y:19, A:2.68, B:3.08,
X:80, Y:20, A:2.52, B:2.92,
X:80, Y:21, A:2.36, B:2.76,
X:80, Y:22, A:2.20, B:2.60,
X:80, Y:23, A:2.04, B:2.44,
X:80, Y:24, A:1.87, B:2.27,
X:80, Y:25, A:1.87, B:2.27,
X:80, Y:26, A:1.71, B:2.11,
X:80, Y:27, A:1.71, B:2.11,
X:80, Y:28, A:1.55, B:1.95,
X:80, Y:29, A:1.39, B:1.79,
X:80, Y:30, A:1.39, B:1.79,
X:80, Y:31, A:1.23, B:1.63,
X:80, Y:32, A:1.23, B:1.63,
X:80, Y:33, A:1.07, B:1.47,
X:80, Y:34, A:0.91, B:1.31,
X:80, Y:35, A:0.91, B:1.31,
X:80, Y:36, A:0.76, B:1.16,
X:80, Y:37, A:0.76, B:1.16,
X:80, Y:38, A:0.60, B:1.00,
X:80, Y:39, A:0.60, B:1.00,
X:80, Y:40, A:0.60, B:1.00,
X:80, Y:41, A:0.60, B:1.00,
X:80, Y:42, A:0.44, B:0.84,
X:80, Y:43, A:0.44, B:0.84,
X:80, Y:44, A:0.44, B:0.84,
X:80, Y:45, A:0.44, B:0.84,,
X:80, Y:46, A:0.28, B:0.68,
X:80, Y:47, A:0.28, B:0.68,
X:80, Y:48, A:0.28, B:0.68,
X:80, Y:49, A:0.28, B:0.68,
X:80, Y:50, A:0.28, B:0.68,
X:80, Y:51, A:0.12, B:0.52,
X:80, Y:52, A:0.12, B:0.52,
X:80, Y:53, A:0.12, B:0.52,
X:80, Y:54, A:0.12, B:0.52,
X:80, Y:55, A:0.12, B:0.52,
X:80, Y:56, A:0.12, B:0.52,
X:80, Y:57, A:0.12, B:0.52,
X:80, Y:58, A:0.12, B:0.52,
X:80, Y:59, A:-0.04, B:0.36,
X:80, Y:60, A:-0.04, B:0.36,
X:80, Y:61, A:-0.04, B:0.36,
X:80, Y:62, A:-0.04, B:0.36,
X:80, Y:63, A:-0.04, B:0.36,
X:80, Y:64, A:-0.04, B:0.36,
X:80, Y:65, A:-0.04, B:0.36,
X:80, Y:66, A:-0.04, B:0.36,
X:80, Y:67, A:-0.04, B:0.36,
X:80, Y:68, A:-0.04, B:0.36,
X:80, Y:69, A:-0.04, B:0.36,
X:80, Y:70, A:-0.04, B:0.36,
X:80, Y:71, A:-0.04, B:0.36,
X:80, Y:72, A:-0.04, B:0.36,
X:80, Y:73, A:-0.02, B:0.20,
X:80, Y:74, A:-0.02, B:0.20,
X:80, Y:75, A:-0.02, B:0.20,
X:80, Y:76, A:-0.02, B:0.20,
X:80, Y:77, A:-0.02, B:0.20,
X:80, Y:78, A:-0.02, B:0.20,
X:80, Y:79, A:-0.02, B:0.20,
X:80, Y:80, A:-0.02, B:0.20,
X:80, Y:81, A:-0.02, B:0.20,
X:80, Y:82, A:-0.02, B:0.20,
X:80, Y:83, A:-0.02, B:0.20,
X:80, Y:84, A:-0.02, B:0.20,
X:80, Y:85, A:-0.02, B:0.20,
X:80, Y:86, A:-0.36, B:0.04,
X:80, Y:87, A:-0.36, B:0.04,
X:80, Y:88, A:-0.36, B:0.04,
X:80, Y:89, A:-0.36, B:0.04,
X:80, Y:90, A:-0.36, B:0.04,
X:80, Y:91, A:-0.36, B:0.04,
X:80, Y:92, A:-0.36, B:0.04,
X:80, Y:93, A:-0.36, B:0.04,
X:80, Y:94, A:-0.36, B:0.04,
X:80, Y:95, A:-0.36, B:0.04,
X:80, Y:96, A:-0.36, B:0.04,
X:80, Y:97, A:-0.36, B:0.04,
X:80, Y:98, A:-0.36, B:0.04,
X:80, Y:99, A:-0.52, B:-0.12,
X:80, Y:100, A:-0.52, B:-0.12,
X:70, Y:1, A:20.74, B:21.14,
X:70, Y:2, A:19.01, B:19.41,
X:70, Y:3, A:17.29, B:17.69,
X:70, Y:4, A:17.29, B:17.69,
X:70, Y:5, A:12.21, B:12.61,
X:70, Y:6, A:9.88, B:10.28,
X:70, Y:7, A:8.88, B:9.28,
X:70, Y:8, A:7.89, B:8.29,
X:70, Y:9, A:6.91, B:7.31,
X:70, Y:10, A:6.09, B:6.49,
X:70, Y:11, A:5.27, B:5.67,
X:70, Y:12, A:4.78, B:5.18,
X:70, Y:13, A:4.30, B:4.70,
X:70, Y:14, A:3.81, B:4.21,
X:70, Y:15, A:3.49, B:3.89,
X:70, Y:16, A:3.16, B:3.56,
X:70, Y:17, A:2.84, B:3.24,
X:70, Y:18, A:2.68, B:3.08,
X:70, Y:19, A:2.52, B:2.92,
X:70, Y:20, A:2.36, B:2.76,
X:70, Y:21, A:2.20, B:2.60,
X:70, Y:22, A:2.04, B:2.44,
X:70, Y:23, A:1.88, B:2.28,
X:70, Y:24, A:1.72, B:2.12,
X:70, Y:25, A:1.72, B:2.12,
X:70, Y:26, A:1.56, B:1.96,
X:70, Y:27, A:1.56, B:1.96,
X:70, Y:28, A:1.40, B:1.80,
X:70, Y:29, A:1.24, B:1.64,
X:70, Y:30, A:1.24, B:1.64,
X:70, Y:31, A:1.08, B:1.48,
X:70, Y:32, A:1.08, B:1.48,
X:70, Y:33, A:0.92, B:1.32,
X:70, Y:34, A:0.76, B:1.16,
X:70, Y:35, A:0.76, B:1.16,
X:70, Y:36, A:0.60, B:1.00,
X:70, Y:37, A:0.60, B:1.00,
X:70, Y:38, A:0.44, B:0.84,
X:70, Y:39, A:0.44, B:0.84,
X:70, Y:40, A:0.44, B:0.84,
X:70, Y:41, A:0.44, B:0.84,
X:70, Y:42, A:0.28, B:0.68,
X:70, Y:43, A:0.28, B:0.68,
X:70, Y:44, A:0.28, B:0.68,
X:70, Y:45, A:0.28, B:0.68,
X:70, Y:46, A:0.12, B:0.52,
X:70, Y:47, A:0.12, B:0.52,
X:70, Y:48, A:0.12, B:0.52,
X:70, Y:49, A:0.12, B:0.52,
X:70, Y:50, A:0.12, B:0.52,
X:70, Y:51, A:-0.04, B:0.36,
X:70, Y:52, A:-0.04, B:0.36,
X:70, Y:53, A:-0.04, B:0.36,
X:70, Y:54, A:-0.04, B:0.36,
X:70, Y:55, A:-0.04, B:0.36,
X:70, Y:56, A:-0.04, B:0.36,
X:70, Y:57, A:-0.04, B:0.36,
X:70, Y:58, A:-0.04, B:0.36,
X:70, Y:59, A:-0.20, B:0.20,
X:70, Y:60, A:-0.20, B:0.20,
X:70, Y:61, A:-0.20, B:0.20,
X:70, Y:62, A:-0.20, B:0.20,
X:70, Y:63, A:-0.20, B:0.20,
X:70, Y:64, A:-0.20, B:0.20,
X:70, Y:65, A:-0.20, B:0.20,
X:70, Y:66, A:-0.20, B:0.20,
X:70, Y:67, A:-0.20, B:0.20,
X:70, Y:68, A:-0.20, B:0.20,
X:70, Y:69, A:-0.20, B:0.20,
X:70, Y:70, A:-0.20, B:0.20,
X:70, Y:71, A:-0.20, B:0.20,
X:70, Y:72, A:-0.20, B:0.20,
X:70, Y:73, A:-0.36, B:0.04,
X:70, Y:74, A:-0.36, B:0.04,
X:70, Y:75, A:-0.36, B:0.04,
X:70, Y:76, A:-0.36, B:0.04,
X:70, Y:77, A:-0.36, B:0.04,
X:70, Y:78, A:-0.36, B:0.04,
X:70, Y:79, A:-0.36, B:0.04,
X:70, Y:80, A:-0.36, B:0.04,
X:70, Y:81, A:-0.36, B:0.04,
X:70, Y:82, A:-0.36, B:0.04,
X:70, Y:83, A:-0.36, B:0.04,
X:70, Y:84, A:-0.36, B:0.04,
X:70, Y:85, A:-0.36, B:0.04,
X:70, Y:86, A:-0.52, B:-0.12,
X:70, Y:87, A:-0.52, B:-0.12,
X:70, Y:88, A:-0.52, B:-0.12,
X:70, Y:89, A:-0.52, B:-0.12,
X:70, Y:90, A:-0.52, B:-0.12,
X:70, Y:91, A:-0.52, B:-0.12,
X:70, Y:92, A:-0.52, B:-0.12,
X:70, Y:93, A:-0.52, B:-0.12,
X:70, Y:94, A:-0.52, B:-0.12,
X:70, Y:95, A:-0.52, B:-0.12,
X:70, Y:96, A:-0.52, B:-0.12,
X:70, Y:97, A:-0.52, B:-0.12,
X:70, Y:98, A:-0.52, B:-0.12,
X:70, Y:99, A:-0.68, B:-0.28,
X:70, Y:100, A:-0.68, B:-0.28,
X:60, Y:1, A:20.74, B:21.14,
X:60, Y:2, A:19.01, B:19.41,
X:60, Y:3, A:17.29, B:17.69,
X:60, Y:4, A:17.29, B:17.69,
X:60, Y:5, A:12.21, B:12.61,
X:60, Y:6, A:9.88, B:10.28,
X:60, Y:7, A:8.88, B:9.28,
X:60, Y:8, A:7.89, B:8.29,
X:60, Y:9, A:6.91, B:7.31,
X:60, Y:10, A:6.09, B:6.49,
X:60, Y:11, A:5.27, B:5.67,
X:60, Y:12, A:4.78, B:5.18,
X:60, Y:13, A:4.30, B:4.70,
X:60, Y:14, A:3.81, B:4.21,
X:60, Y:15, A:3.49, B:3.89,
X:60, Y:16, A:3.16, B:3.56,
X:60, Y:17, A:2.84, B:3.24,
X:60, Y:18, A:2.68, B:3.08,
X:60, Y:19, A:2.52, B:2.92,
X:60, Y:20, A:2.36, B:2.76,
X:60, Y:21, A:2.20, B:2.60,
X:60, Y:22, A:2.04, B:2.44,
X:60, Y:23, A:1.88, B:2.28,
X:60, Y:24, A:1.72, B:2.12,
X:60, Y:25, A:1.72, B:2.12,
X:60, Y:26, A:1.56, B:1.96,
X:60, Y:27, A:1.56, B:1.96,
X:60, Y:28, A:1.40, B:1.80,
X:60, Y:29, A:1.24, B:1.64,
X:60, Y:30, A:1.24, B:1.64,
X:60, Y:31, A:1.08, B:1.48,
X:60, Y:32, A:1.08, B:1.48,
X:60, Y:33, A:0.92, B:1.32,
X:60, Y:34, A:0.76, B:1.16,
X:60, Y:35, A:0.76, B:1.16,
X:60, Y:36, A:0.60, B:1.00,
X:60, Y:37, A:0.60, B:1.00,
X:60, Y:38, A:0.44, B:0.84,
X:60, Y:39, A:0.44, B:0.84,
X:60, Y:40, A:0.44, B:0.84,
X:60, Y:41, A:0.44, B:0.84,
X:60, Y:42, A:0.28, B:0.68,
X:60, Y:43, A:0.28, B:0.68,
X:60, Y:44, A:0.28, B:0.68,
X:60, Y:45, A:0.28, B:0.68,
X:60, Y:46, A:0.12, B:0.52,
X:60, Y:47, A:0.12, B:0.52,
X:60, Y:48, A:0.12, B:0.52,
X:60, Y:49, A:0.12, B:0.52,
X:60, Y:50, A:0.12, B:0.52,
X:60, Y:51, A:-0.04, B:0.36,
X:60, Y:52, A:-0.04, B:0.36,
X:60, Y:53, A:-0.04, B:0.36,
X:60, Y:54, A:-0.04, B:0.36,
X:60, Y:55, A:-0.04, B:0.36,
X:60, Y:56, A:-0.04, B:0.36,
X:60, Y:57, A:-0.04, B:0.36,
X:60, Y:58, A:-0.04, B:0.36,
X:60, Y:59, A:-0.20, B:0.20,
X:60, Y:60, A:-0.20, B:0.20,
X:60, Y:61, A:-0.20, B:0.20,
X:60, Y:62, A:-0.20, B:0.20,
X:60, Y:63, A:-0.20, B:0.20,
X:60, Y:64, A:-0.20, B:0.20,
X:60, Y:65, A:-0.20, B:0.20,
X:60, Y:66, A:-0.20, B:0.20,
X:60, Y:67, A:-0.20, B:0.20,
X:60, Y:68, A:-0.20, B:0.20,
X:60, Y:69, A:-0.20, B:0.20,
X:60, Y:70, A:-0.20, B:0.20,
X:60, Y:71, A:-0.20, B:0.20,
X:60, Y:72, A:-0.20, B:0.20,
X:60, Y:73, A:-0.36, B:0.04,
X:60, Y:74, A:-0.36, B:0.04,
X:60, Y:75, A:-0.36, B:0.04,
X:60, Y:76, A:-0.36, B:0.04,
X:60, Y:77, A:-0.36, B:0.04,
X:60, Y:78, A:-0.36, B:0.04,
X:60, Y:79, A:-0.36, B:0.04,
X:60, Y:80, A:-0.36, B:0.04,
X:60, Y:81, A:-0.36, B:0.04,
X:60, Y:82, A:-0.36, B:0.04,
X:60, Y:83, A:-0.36, B:0.04,
X:60, Y:84, A:-0.36, B:0.04,
X:60, Y:85, A:-0.36, B:0.04,
X:60, Y:86, A:-0.52, B:-0.12,
X:60, Y:87, A:-0.52, B:-0.12,
X:60, Y:88, A:-0.52, B:-0.12,
X:60, Y:89, A:-0.52, B:-0.12,
X:60, Y:90, A:-0.52, B:-0.12,
X:60, Y:91, A:-0.52, B:-0.12,
X:60, Y:92, A:-0.52, B:-0.12,
X:60, Y:93, A:-0.52, B:-0.12,
X:60, Y:94, A:-0.52, B:-0.12,
X:60, Y:95, A:-0.52, B:-0.12,
X:60, Y:96, A:-0.52, B:-0.12,
X:60, Y:97, A:-0.52, B:-0.12,
X:60, Y:98, A:-0.52, B:-0.12,
X:60, Y:99, A:-0.68, B:-0.28,
X:60, Y:100, A:-0.68, B:-0.28,
X:50, Y:1, A:20.42, B:20.82,
X:50, Y:2, A:18.69, B:19.09,
X:50, Y:3, A:16.98, B:17.38,
X:50, Y:4, A:16.98, B:17.38,
X:50, Y:5, A:11.89, B:12.29,
X:50, Y:6, A:9.56, B:9.96,
X:50, Y:7, A:8.56, B:8.96,
X:50, Y:8, A:7.57, B:7.97,
X:50, Y:9, A:6.59, B:6.99,
X:50, Y:10, A:5.77, B:6.17,
X:50, Y:11, A:4.95, B:5.35,
X:50, Y:12, A:4.46, B:4.86,
X:50, Y:13, A:3.98, B:4.38,
X:50, Y:14, A:3.49, B:3.89,
X:50, Y:15, A:3.17, B:3.57,
X:50, Y:16, A:2.85, B:3.25,
X:50, Y:17, A:2.52, B:2.92,
X:50, Y:18, A:2.36, B:2.76,
X:50, Y:19, A:2.20, B:2.60,
X:50, Y:20, A:2.04, B:2.44,
X:50, Y:21, A:1.88, B:2.28,
X:50, Y:22, A:1.72, B:2.12,
X:50, Y:23, A:1.56, B:1.96,
X:50, Y:24, A:1.40, B:1.80,
X:50, Y:25, A:1.40, B:1.80,
X:50, Y:26, A:1.24, B:1.64,
X:50, Y:27, A:1.24, B:1.64,
X:50, Y:28, A:1.08, B:1.48,
X:50, Y:29, A:0.92, B:1.32,
X:50, Y:30, A:0.92, B:1.32,
X:50, Y:31, A:0.76, B:1.16,
X:50, Y:32, A:0.76, B:1.16,
X:50, Y:33, A:0.60, B:1.00,
X:50, Y:34, A:0.44, B:0.84,
X:50, Y:35, A:0.44, B:0.84,
X:50, Y:36, A:0.28, B:0.68,
X:50, Y:37, A:0.28, B:0.68,
X:50, Y:38, A:0.12, B:0.52,
X:50, Y:39, A:0.12, B:0.52,
X:50, Y:40, A:0.12, B:0.52,
X:50, Y:41, A:0.12, B:0.52,
X:50, Y:42, A:-0.04, B:0.36,
X:50, Y:43, A:-0.04, B:0.36,
X:50, Y:44, A:-0.04, B:0.36,
X:50, Y:45, A:-0.04, B:0.36,
X:50, Y:46, A:-0.20, B:0.20,
X:50, Y:47, A:-0.20, B:0.20,
X:50, Y:48, A:-0.20, B:0.20,
X:50, Y:49, A:-0.20, B:0.20,
X:50, Y:50, A:-0.20, B:0.20,
X:50, Y:51, A:-0.36, B:0.04,
X:50, Y:52, A:-0.36, B:0.04,
X:50, Y:53, A:-0.36, B:0.04,
X:50, Y:54, A:-0.36, B:0.04,
X:50, Y:55, A:-0.36, B:0.04,
X:50, Y:56, A:-0.36, B:0.04,
X:50, Y:57, A:-0.36, B:0.04,
X:50, Y:58, A:-0.36, B:0.04,
X:50, Y:59, A:-0.52, B:-0.12,
X:50, Y:60, A:-0.52, B:-0.12,
X:50, Y:61, A:-0.52, B:-0.12,
X:50, Y:62, A:-0.52, B:-0.12,
X:50, Y:63, A:-0.52, B:-0.12,
X:50, Y:64, A:-0.52, B:-0.12,
X:50, Y:65, A:-0.52, B:-0.12,
X:50, Y:66, A:-0.52, B:-0.12,
X:50, Y:67, A:-0.52, B:-0.12,
X:50, Y:68, A:-0.52, B:-0.12,
X:50, Y:69, A:-0.52, B:-0.12,
X:50, Y:70, A:-0.52, B:-0.12,
X:50, Y:71, A:-0.52, B:-0.12,
X:50, Y:72, A:-0.52, B:-0.12,
X:50, Y:73, A:-0.68, B:-0.28,
X:50, Y:74, A:-0.68, B:-0.28,
X:50, Y:75, A:-0.68, B:-0.28,
X:50, Y:76, A:-0.68, B:-0.28,
X:50, Y:77, A:-0.68, B:-0.28,
X:50, Y:78, A:-0.68, B:-0.28,
X:50, Y:79, A:-0.68, B:-0.28,
X:50, Y:80, A:-0.68, B:-0.28,
X:50, Y:81, A:-0.68, B:-0.28,
X:50, Y:82, A:-0.68, B:-0.28,
X:50, Y:83, A:-0.68, B:-0.28,
X:50, Y:84, A:-0.68, B:-0.28,
X:50, Y:85, A:-0.68, B:-0.28,
X:50, Y:86, A:-0.84, B:-0.44,
X:50, Y:87, A:-0.84, B:-0.44,
X:50, Y:88, A:-0.84, B:-0.44,
X:50, Y:89, A:-0.84, B:-0.44,
X:50, Y:90, A:-0.84, B:-0.44,
X:50, Y:91, A:-0.84, B:-0.44,
X:50, Y:92, A:-0.84, B:-0.44,
X:50, Y:93, A:-0.84, B:-0.44,
X:50, Y:94, A:-0.84, B:-0.44,
X:50, Y:95, A:-0.84, B:-0.44,
X:50, Y:96, A:-0.84, B:-0.44,
X:50, Y:97, A:-0.84, B:-0.44,
X:50, Y:98, A:-0.84, B:-0.44,
X:50, Y:99, A:-0.99, B:-0.59,
X:50, Y:100, A:-0.99, B:-0.59,
X:40, Y:1, A:20.10, B:20.50,
X:40, Y:2, A:18.37, B:18.77,
X:40, Y:3, A:16.66, B:17.06,
X:40, Y:4, A:16.66, B:17.06,
X:40, Y:5, A:11.58, B:11.98,
X:40, Y:6, A:9.24, B:9.64,
X:40, Y:7, A:8.24, B:8.64,
X:40, Y:8, A:7.25, B:7.65,
X:40, Y:9, A:6.27, B:6.67,
X:40, Y:10, A:5.45, B:5.85,
X:40, Y:11, A:4.63, B:5.03,
X:40, Y:12, A:4.15, B:4.55,
X:40, Y:13, A:3.66, B:4.06,
X:40, Y:14, A:3.17, B:3.57,
X:40, Y:15, A:2.85, B:3.25,
X:40, Y:16, A:2.53, B:2.93,
X:40, Y:17, A:2.20, B:2.60,
X:40, Y:18, A:2.04, B:2.44,
X:40, Y:19, A:1.88, B:2.28,
X:40, Y:20, A:1.72, B:2.12,
X:40, Y:21, A:1.56, B:1.96,
X:40, Y:22, A:1.40, B:1.80,
X:40, Y:23, A:1.24, B:1.64,
X:40, Y:24, A:1.08, B:1.48,
X:40, Y:25, A:1.08, B:1.48,
X:40, Y:26, A:0.92, B:1.32,
X:40, Y:27, A:0.92, B:1.32,
X:40, Y:28, A:0.76, B:1.16,
X:40, Y:29, A:0.60, B:1.00,
X:40, Y:30, A:0.60, B:1.00,
X:40, Y:31, A:0.44, B:0.84,
X:40, Y:32, A:0.44, B:0.84,
X:40, Y:33, A:0.28, B:0.68,
X:40, Y:34, A:0.12, B:0.52,
X:40, Y:35, A:0.12, B:0.52,
X:40, Y:36, A:-0.04, B:0.36,
X:40, Y:37, A:-0.04, B:0.36,
X:40, Y:38, A:-0.20, B:0.20,
X:40, Y:39, A:-0.20, B:0.20,
X:40, Y:40, A:-0.20, B:0.20,
X:40, Y:41, A:-0.20, B:0.20,
X:40, Y:42, A:-0.36, B:0.04,
X:40, Y:43, A:-0.36, B:0.04,
X:40, Y:44, A:-0.36, B:0.04,
X:40, Y:45, A:-0.36, B:0.04,
X:40, Y:46, A:-0.52, B:-0.12,
X:40, Y:47, A:-0.52, B:-0.12,
X:40, Y:48, A:-0.52, B:-0.12,
X:40, Y:49, A:-0.52, B:-0.12,
X:40, Y:50, A:-0.52, B:-0.12,
X:40, Y:51, A:-0.68, B:-0.28,
X:40, Y:52, A:-0.68, B:-0.28,
X:40, Y:53, A:-0.68, B:-0.28,
X:40, Y:54, A:-0.68, B:-0.28,
X:40, Y:55, A:-0.68, B:-0.28,
X:40, Y:56, A:-0.68, B:-0.28,
X:40, Y:57, A:-0.68, B:-0.28,
X:40, Y:58, A:-0.68, B:-0.28,
X:40, Y:59, A:-0.84, B:-0.44,
X:40, Y:60, A:-0.84, B:-0.44,
X:40, Y:61, A:-0.84, B:-0.44,
X:40, Y:62, A:-0.84, B:-0.44,
X:40, Y:63, A:-0.84, B:-0.44,
X:40, Y:64, A:-0.84, B:-0.44,
X:40, Y:65, A:-0.84, B:-0.44,
X:40, Y:66, A:-0.84, B:-0.44,
X:40, Y:67, A:-0.84, B:-0.44,
X:40, Y:68, A:-0.84, B:-0.44,
X:40, Y:69, A:-0.84, B:-0.44,
X:40, Y:70, A:-0.84, B:-0.44,
X:40, Y:71, A:-0.84, B:-0.44,
X:40, Y:72, A:-0.84, B:-0.44,
X:40, Y:73, A:-1.00, B:-0.60,
X:40, Y:74, A:-1.00, B:-0.60,
X:40, Y:75, A:-1.00, B:-0.60,
X:40, Y:76, A:-1.00, B:-0.60,
X:40, Y:77, A:-1.00, B:-0.60,
X:40, Y:78, A:-1.00, B:-0.60,
X:40, Y:79, A:-1.00, B:-0.60,
X:40, Y:80, A:-1.00, B:-0.60,
X:40, Y:81, A:-1.00, B:-0.60,
X:40, Y:82, A:-1.00, B:-0.60,
X:40, Y:83, A:-1.00, B:-0.60,
X:40, Y:84, A:-1.00, B:-0.60,
X:40, Y:85, A:-1.00, B:-0.60,
X:40, Y:86, A:-1.15, B:-0.75,
X:40, Y:87, A:-1.15, B:-0.75,
X:40, Y:88, A:-1.15, B:-0.75,
X:40, Y:89, A:-1.15, B:-0.75,
X:40, Y:90, A:-1.15, B:-0.75,
X:40, Y:91, A:-1.15, B:-0.75,
X:40, Y:92, A:-1.15, B:-0.75,
X:40, Y:93, A:-1.15, B:-0.75,
X:40, Y:94, A:-1.15, B:-0.75,
X:40, Y:95, A:-1.15, B:-0.75,
X:40, Y:96, A:-1.15, B:-0.75,
X:40, Y:97, A:-1.15, B:-0.75,
X:40, Y:98, A:-1.15, B:-0.75,
X:40, Y:99, A:-1.31, B:-0.91,
X:40, Y:100, A:-1.31, B:-0.91,
X:30, Y:1, A:19.30, B:19.70,
X:30, Y:2, A:17.58, B:17.98,
X:30, Y:3, A:15.86, B:16.26,
X:30, Y:4, A:15.86, B:16.26,
X:30, Y:5, A:10.78, B:11.18,
X:30, Y:6, A:8.44, B:8.84,
X:30, Y:7, A:7.45, B:7.85,
X:30, Y:8, A:6.46, B:6.86,
X:30, Y:9, A:5.47, B:5.87,
X:30, Y:10, A:4.65, B:5.05,
X:30, Y:11, A:3.84, B:4.24,
X:30, Y:12, A:3.35, B:3.75,
X:30, Y:13, A:2.86, B:3.26,
X:30, Y:14, A:2.37, B:2.77,
X:30, Y:15, A:2.05, B:2.45,
X:30, Y:16, A:1.73, B:2.13,
X:30, Y:17, A:1.41, B:1.81,
X:30, Y:18, A:1.24, B:1.64,
X:30, Y:19, A:1.08, B:1.48,
X:30, Y:20, A:0.92, B:1.32,
X:30, Y:21, A:0.76, B:1.16,
X:30, Y:22, A:0.60, B:1.00,
X:30, Y:23, A:0.44, B:0.84,
X:30, Y:24, A:0.28, B:0.68,
X:30, Y:25, A:0.28, B:0.68,
X:30, Y:26, A:0.12, B:0.52,
X:30, Y:27, A:0.12, B:0.52,
X:30, Y:28, A:-0.04, B:0.36,
X:30, Y:29, A:-0.20, B:0.20,
X:30, Y:30, A:-0.20, B:0.20,
X:30, Y:31, A:-0.36, B:0.04,
X:30, Y:32, A:-0.36, B:0.04,
X:30, Y:33, A:-0.52, B:-0.12,
X:30, Y:34, A:-0.68, B:-0.28,
X:30, Y:35, A:-0.68, B:-0.28,
X:30, Y:36, A:-0.84, B:-0.44,
X:30, Y:37, A:-0.84, B:-0.44,
X:30, Y:38, A:-1.00, B:-0.60,
X:30, Y:39, A:-1.00, B:-0.60,
X:30, Y:40, A:-1.00, B:-0.60,
X:30, Y:41, A:-1.00, B:-0.60,
X:30, Y:42, A:-1.16, B:-0.76,
X:30, Y:43, A:-1.16, B:-0.76,
X:30, Y:44, A:-1.16, B:-0.76,
X:30, Y:45, A:-1.16, B:-0.76,
X:30, Y:46, A:-1.32, B:-0.92,
X:30, Y:47, A:-1.32, B:-0.92,
X:30, Y:48, A:-1.32, B:-0.92,
X:30, Y:49, A:-1.32, B:-0.92,
X:30, Y:50, A:-1.32, B:-0.92,
X:30, Y:51, A:-1.48, B:-1.08,
X:30, Y:52, A:-1.48, B:-1.08,
X:30, Y:53, A:-1.48, B:-1.08,
X:30, Y:54, A:-1.48, B:-1.08,
X:30, Y:55, A:-1.48, B:-1.08,
X:30, Y:56, A:-1.48, B:-1.08,
X:30, Y:57, A:-1.48, B:-1.08,
X:30, Y:58, A:-1.48, B:-1.08,
X:30, Y:59, A:-1.64, B:-1.24,
X:30, Y:60, A:-1.64, B:-1.24,
X:30, Y:61, A:-1.64, B:-1.24,
X:30, Y:62, A:-1.64, B:-1.24,
X:30, Y:63, A:-1.64, B:-1.24,
X:30, Y:64, A:-1.64, B:-1.24,
X:30, Y:65, A:-1.64, B:-1.24,
X:30, Y:66, A:-1.64, B:-1.24,
X:30, Y:67, A:-1.64, B:-1.24,
X:30, Y:68, A:-1.64, B:-1.24,
X:30, Y:69, A:-1.64, B:-1.24,
X:30, Y:70, A:-1.64, B:-1.24,
X:30, Y:71, A:-1.64, B:-1.24,
X:30, Y:72, A:-1.64, B:-1.24,
X:30, Y:73, A:-1.79, B:-1.39,
X:30, Y:74, A:-1.79, B:-1.39,
X:30, Y:75, A:-1.79, B:-1.39,
X:30, Y:76, A:-1.79, B:-1.39,
X:30, Y:77, A:-1.79, B:-1.39,
X:30, Y:78, A:-1.79, B:-1.39,
X:30, Y:79, A:-1.79, B:-1.39,
X:30, Y:80, A:-1.79, B:-1.39,
X:30, Y:81, A:-1.79, B:-1.39,
X:30, Y:82, A:-1.79, B:-1.39,
X:30, Y:83, A:-1.79, B:-1.39,
X:30, Y:84, A:-1.79, B:-1.39,
X:30, Y:85, A:-1.79, B:-1.39,
X:30, Y:86, A:-1.95, B:-1.55,
X:30, Y:87, A:-1.95, B:-1.55,
X:30, Y:88, A:-1.95, B:-1.55,
X:30, Y:89, A:-1.95, B:-1.55,
X:30, Y:90, A:-1.95, B:-1.55,
X:30, Y:91, A:-1.95, B:-1.55,
X:30, Y:92, A:-1.95, B:-1.55,
X:30, Y:93, A:-1.95, B:-1.55,
X:30, Y:94, A:-1.95, B:-1.55,
X:30, Y:95, A:-1.95, B:-1.55,
X:30, Y:96, A:-1.95, B:-1.55,
X:30, Y:97, A:-1.95, B:-1.55,
X:30, Y:98, A:-1.95, B:-1.55,
X:30, Y:99, A:-2.11, B:-1.71,
X:30, Y:100, A:-2.11, B:-1.71,
X:20, Y:1, A:18.18, B:18.58,
X:20, Y:2, A:16.45, B:16.85,
X:20, Y:3, A:14.74, B:15.14,
X:20, Y:4, A:14.74, B:15.14,
X:20, Y:5, A:9.65, B:10.05,
X:20, Y:6, A:7.32, B:7.72,
X:20, Y:7, A:6.32, B:6.72,
X:20, Y:8, A:5.33, B:5.73,
X:20, Y:9, A:4.35, B:4.75,
X:20, Y:10, A:3.53, B:3.93,
X:20, Y:11, A:2.71, B:3.11,
X:20, Y:12, A:2.22, B:2.62,
X:20, Y:13, A:1.74, B:2.14,
X:20, Y:14, A:1.25, B:1.65,
X:20, Y:15, A:0.93, B:1.33,
X:20, Y:16, A:0.61, B:1.01,
X:20, Y:17, A:0.28, B:0.68,
X:20, Y:18, A:0.12, B:0.52,
X:20, Y:19, A:-0.04, B:0.36,
X:20, Y:20, A:-0.20, B:0.20,
X:20, Y:21, A:-0.36, B:0.04,
X:20, Y:22, A:-0.52, B:-0.12,
X:20, Y:23, A:-0.68, B:-0.28,
X:20, Y:24, A:-0.84, B:0.44,
X:20, Y:25, A:-0.84, B:0.44,
X:20, Y:26, A:-1.00, B:-0.60,
X:20, Y:27, A:-1.00, B:-0.60,
X:20, Y:28, A:-1.16, B:-0.76,
X:20, Y:29, A:-1.32, B:-0.92,
X:20, Y:30, A:-1.32, B:-0.92,
X:20, Y:31, A:-1.48, B:-1.08,
X:20, Y:32, A:-1.48, B:-1.08,
X:20, Y:33, A:-1.64, B:-1.24,
X:20, Y:34, A:-1.80, B:-1.40,
X:20, Y:35, A:-1.80, B:-1.40,
X:20, Y:36, A:-1.96, B:-1.56,
X:20, Y:37, A:-1.96, B:-1.56,
X:20, Y:38, A:-2.12, B:-1.72,
X:20, Y:39, A:-2.12, B:-1.72,
X:20, Y:40, A:-2.12, B:-1.72,
X:20, Y:41, A:-2.12, B:-1.72,
X:20, Y:42, A:-2.28, B:-1.88,
X:20, Y:43, A:-2.28, B:-1.88,
X:20, Y:44, A:-2.28, B:-1.88,
X:20, Y:45, A:-2.28, B:-1.88,
X:20, Y:46, A:-2.44, B:-2.04,
X:20, Y:47, A:-2.44, B:-2.04,
X:20, Y:48, A:-2.44, B:-2.04,
X:20, Y:49, A:-2.44, B:-2.04,
X:20, Y:50, A:-2.44, B:-2.04,
X:20, Y:51, A:-2.60, B:-2.20,
X:20, Y:52, A:-2.60, B:-2.20,
X:20, Y:53, A:-2.60, B:-2.20,
X:20, Y:54, A:-2.60, B:-2.20,
X:20, Y:55, A:-2.60, B:-2.20,
X:20, Y:56, A:-2.60, B:-2.20,
X:20, Y:57, A:-2.60, B:-2.20,
X:20, Y:58, A:-2.60, B:-2.20,
X:20, Y:59, A:-2.76, B:-2.36,
X:20, Y:60, A:-2.76, B:-2.36,
X:20, Y:61, A:-2.76, B:-2.36,
X:20, Y:62, A:-2.76, B:-2.36,
X:20, Y:63, A:-2.76, B:-2.36,
X:20, Y:64, A:-2.76, B:-2.36,
X:20, Y:65, A:-2.76, B:-2.36,
X:20, Y:66, A:-2.76, B:-2.36,
X:20, Y:67, A:-2.76, B:-2.36,
X:20, Y:68, A:-2.76, B:-2.36,
X:20, Y:69, A:-2.76, B:-2.36,
X:20, Y:70, A:-2.76, B:-2.36,
X:20, Y:71, A:-2.76, B:-2.36,
X:20, Y:72, A:-2.76, B:-2.36,
X:20, Y:73, A:-2.92, B:-2.52,
X:20, Y:74, A:-2.92, B:-2.52,
X:20, Y:75, A:-2.92, B:-2.52,
X:20, Y:76, A:-2.92, B:-2.52,
X:20, Y:77, A:-2.92, B:-2.52,
X:20, Y:78, A:-2.92, B:-2.52,
X:20, Y:79, A:-2.92, B:-2.52,
X:20, Y:80, A:-2.92, B:-2.52,
X:20, Y:81, A:-2.92, B:-2.52,
X:20, Y:82, A:-2.92, B:-2.52,
X:20, Y:83, A:-2.92, B:-2.52,
X:20, Y:84, A:-2.92, B:-2.52,
X:20, Y:85, A:-2.92, B:-2.52,
X:20, Y:86, A:-3.08, B:-2.68,
X:20, Y:87, A:-3.08, B:-2.68,
X:20, Y:88, A:-3.08, B:-2.68,
X:20, Y:89, A:-3.08, B:-2.68,
X:20, Y:90, A:-3.08, B:-2.68,
X:20, Y:91, A:-3.08, B:-2.68,
X:20, Y:92, A:-3.08, B:-2.68,
X:20, Y:93, A:-3.08, B:-2.68,
X:20, Y:94, A:-3.08, B:-2.68,
X:20, Y:95, A:-3.08, B:-2.68,
X:20, Y:96, A:-3.08, B:-2.68,
X:20, Y:97, A:-3.08, B:-2.68,
X:20, Y:98, A:-3.08, B:-2.68,
X:20, Y:99, A:-3.23, B:-2.83,
X:20, Y:100, A:-3.23, B:-2.83,
X:10, Y:1, A:14.45, B:14.85,
X:10, Y:2, A:12.72, B:13.12,
X:10, Y:3, A:11.01, B:11.41,
X:10, Y:4, A:11.01, B:11.41,
X:10, Y:5, A:5.93, B:6.33,
X:10, Y:6, A:3.59, B:3.99,
X:10, Y:7, A:2.59, B:2.99,
X:10, Y:8, A:1.60, B:2.00,
X:10, Y:9, A:0.62, B:1.02,
X:10, Y:10, A:-0.20, B:0.20,
X:10, Y:11, A:-1.02, B:-0.62,
X:10, Y:12, A:-1.50, B:-1.10,
X:10, Y:13, A:-1.99, B:-1.59,
X:10, Y:14, A:-2.48, B:-2.08,
X:10, Y:15, A:-2.80, B:-2.40,
X:10, Y:16, A:-3.12, B:-2.72,
X:10, Y:17, A:-3.45, B:-3.05,
X:10, Y:18, A:-3.61, B:-3.21,
X:10, Y:19, A:-3.77, B:-3.37,
X:10, Y:20, A:-3.93, B:-3.53,
X:10, Y:21, A:-4.09, B:-3.69,
X:10, Y:22, A:-4.25, B:-3.85,
X:10, Y:23, A:-4.41, B:-4.01,
X:10, Y:24, A:-4.57, B:-4.17,
X:10, Y:25, A:-4.57, B:-4.17,
X:10, Y:26, A:-4.73, B:-4.33,
X:10, Y:27, A:-4.73, B:-4.33,
X:10, Y:28, A:-4.89, B:-4.49,
X:10, Y:29, A:-5.05, B:-4.65,
X:10, Y:30, A:-5.05, B:-4.65,
X:10, Y:31, A:-5.21, B:-4.81,
X:10, Y:32, A:-5.21, B:-4.81,
X:10, Y:33, A:-5.37, B:-4.97,
X:10, Y:34, A:-5.53, B:-5.13,
X:10, Y:35, A:-5.53, B:-5.13,
X:10, Y:36, A:-5.69, B:-5.29,
X:10, Y:37, A:-5.69, B:-5.29,
X:10, Y:38, A:-5.85, B:-5.45,
X:10, Y:39, A:-5.85, B:-5.45,
X:10, Y:40, A:-5.85, B:-5.45,
X:10, Y:41, A:-5.85, B:-5.45,
X:10, Y:42, A:-6.01, B:-5.61,
X:10, Y:43, A:-6.01, B:-5.61,
X:10, Y:44, A:-6.01, B:-5.61,
X:10, Y:45, A:-6.01, B:-5.61,
X:10, Y:46, A:-6.17, B:-5.77,
X:10, Y:47, A:-6.17, B:-5.77,
X:10, Y:48, A:-6.17, B:-5.77,
X:10, Y:49, A:-6.17, B:-5.77,
X:10, Y:50, A:-6.17, B:-5.77,
X:10, Y:51, A:-6.33, B:-5.93,
X:10, Y:52, A:-6.33, B:-5.93,
X:10, Y:53, A:-6.33, B:-5.93,
X:10, Y:54, A:-6.33, B:-5.93,
X:10, Y:55, A:-6.33, B:-5.93,
X:10, Y:56, A:-6.33, B:-5.93,
X:10, Y:57, A:-6.33, B:-5.93,
X:10, Y:58, A:-6.33, B:-5.93,
X:10, Y:59, A:-6.49, B:-6.09,
X:10, Y:60, A:-6.49, B:-6.09,
X:10, Y:61, A:-6.49, B:-6.09,
X:10, Y:62, A:-6.49, B:-6.09,
X:10, Y:63, A:-6.49, B:-6.09,
X:10, Y:64, A:-6.49, B:-6.09,
X:10, Y:65, A:-6.49, B:-6.09,
X:10, Y:66, A:-6.49, B:-6.09,
X:10, Y:67, A:-6.49, B:-6.09,
X:10, Y:68, A:-6.49, B:-6.09,
X:10, Y:69, A:-6.49, B:-6.09,
X:10, Y:70, A:-6.49, B:-6.09,
X:10, Y:71, A:-6.49, B:-6.09,
X:10, Y:72, A:-6.49, B:-6.09,
X:10, Y:73, A:-6.65, B:-6.25,
X:10, Y:74, A:-6.65, B:-6.25,
X:10, Y:75, A:-6.65, B:-6.25,
X:10, Y:76, A:-6.65, B:-6.25,
X:10, Y:77, A:-6.65, B:-6.25,
X:10, Y:78, A:-6.65, B:-6.25,
X:10, Y:79, A:-6.65, B:-6.25,
X:10, Y:80, A:-6.65, B:-6.25,
X:10, Y:81, A:-6.65, B:-6.25,
X:10, Y:82, A:-6.65, B:-6.25,
X:10, Y:83, A:-6.65, B:-6.25,
X:10, Y:84, A:-6.65, B:-6.25,
X:10, Y:85, A:-6.65, B:-6.25,
X:10, Y:86, A:-6.80, B:-6.40,
X:10, Y:87, A:-6.80, B:-6.40,
X:10, Y:88, A:-6.80, B:-6.40,
X:10, Y:89, A:-6.80, B:-6.40,
X:10, Y:90, A:-6.80, B:-6.40,
X:10, Y:91, A:-6.80, B:-6.40,
X:10, Y:92, A:-6.80, B:-6.40,
X:10, Y:93, A:-6.80, B:-6.40,
X:10, Y:94, A:-6.80, B:-6.40,
X:10, Y:95, A:-6.80, B:-6.40,
X:10, Y:96, A:-6.80, B:-6.40,
X:10, Y:97, A:-6.80, B:-6.40,
X:10, Y:98, A:-6.80, B:-6.40,
X:10, Y:99, A:-6.96, B:-6.56, and
X:10, Y:100, A:-6.96, B:-6.56

As described above, according to the lens control device of the present embodiment, without requiring the user to perform cumbersome tasks, the focal length of the variable-focus lens can be set with high precision and ease to match the focus of each individual user in accordance with the distance to the viewed object, and used. Furthermore, for users who frequently use the device for near viewing (viewing distance 30 to 40 cm) or distant viewing (viewing distance 3 to 5 m or more), it is preferable to perform calibration near those distances; however, the indicator may be too large or too small, making it difficult to adjust the focal length. According to the present embodiment, the aforementioned problem can be resolved, for example, by selecting an object such as a patterned image of an appropriate size that ensures clear visibility for the viewed object.

Also, by using eyeglasses that use the lens control device according to the present embodiment, it is possible to bring any distance into focus while keeping the focal point of the user's eye constant, thereby reducing fatigue during prolonged use. Furthermore, it has the advantage of allowing users to see beyond their own visual acuity regardless of near distances or far distances.

Also, while the above examples described cases at a constant temperature (20°C), it would be even more effective to provide a plurality of pieces of focal length identification information using temperature as a parameter. Additionally, while the above examples presented cases where the reference distance to the viewed object is 100 [cm], for cases where the reference distance is 100 [cm] or more, new focal length identification information may be defined. Furthermore, since the value of change in the focal length identification information is relatively small when the reference distance is 100 cm or more, it may be used for appropriate fixed values, such as the focal length of 200 cm and 500 cm, or infinity for a reference distance of 100 cm.

Although several embodiments of the present invention have been described, these embodiments are presented by way of example and are not intended to limit the scope of the invention. These novel embodiments may be implemented in various other forms, and various omissions, substitutions, and modifications may be made without departing from the spirit of the invention. These embodiments and their variations are included within the scope and essence of the invention, as well as within the scope of the invention described in the claims and their equivalents.

### Reference Signs List

### Reference Signs List

1: Eyeglasses
2: Eyeglass frame
3L, 3R: Variable-focus lenses
4: Bridge portion
4La, 4Ra: Sliding portion
5: Protective cover
6L, 6R: Lens holding portion
7: Nose pad portion
8L, 8R: Arm portion
8La, 8Ra: Mounting portion
8Lb, 8Rb: Hinge portion
9L, 9R: Temple portion
10: Lens control device
11: Main control unit
12: Voltage changing unit
13: Operation unit
13a: Dial portion
13Lb, 13Rb: Button portion
14: Storage unit
20: Battery
21: Distance detection unit
D: Inter-lens distance

## Claims

1. A lens control device comprising:
a storage unit that stores focal length identification information for identifying, in accordance with a distance from a mounting position of a variable-focus lens for an eye to a viewed object, a focal length of the variable-focus lens; and
a control unit that selectively executes an automatic control mode, in which the focal length of the variable-focus lens is controlled based on a detection distance from a distance detection unit detecting a distance from the variable-focus lens to the viewed object and the focal length identification information in the storage unit, and a manual control mode, in which the focal length of the variable-focus lens is controlled based on a command operation performed on an operation unit, wherein
the control unit comprises:
a setting mode that acquires a detection distance from the distance detection unit and a focal length of the variable-focus lens when the operation unit is command operated to bring the viewed object into focus in the manual control mode, calculates a difference between a focal length of the variable-focus lens at the time of the acquired focusing operation and a focal length of the focal length identification information corresponding to the detection distance as a correction value, generates new focal length identification information by correcting, modifying, or updating the focal length identification information based on the correction value, and stores it in the storage unit; and
a usage mode that controls the variable-focus lens to a focal length corresponding to a distance to any viewed object detected by the distance detection unit based on new focal length identification information stored in the setting mode.

2. The lens control device of claim 1, wherein, in the setting mode, the control unit generates new focal length identification information that has been corrected, modified, or updated based on the correction value for at least one distance of a viewed object that differs from the detection distance of the focal length identification information, and stores it in the storage unit.

3. The lens control device of claim 2, wherein, in the setting mode, the control unit uses the same correction value for the correction, modification, or update for a distance to any viewed object.

4. The lens control device of any one of claims 1 to 3, wherein the control unit comprises at least one of:
the focal length identification information including adding a refractive power such that, when the lens refractive power at a position where the distance to the viewed object is approximately 100 cm is taken as a reference, the lens refractive power at a distance of 10 cm to the observed object falls within the range of 6.96 D to 6.56 D;
the focal length identification information including adding a refractive power such that, when the lens refractive power at a position where the distance to the viewed object is approximately 100 cm is taken as a reference, the lens refractive power at a distance of approximately 50 cm to the viewed object falls within the range of 0.99 D to 0.59 D;
the focal length identification information including adding a refractive power such that, when the lens refractive power at a position where the distance to the viewed object is approximately 80 cm is taken as a reference, the lens refractive power at a distance of approximately 10 cm to the viewed object falls within the range of 6.65 D to 6.25 D;
the focal length identification information, when the lens refractive power at a position where the distance to the viewed object is approximately 80 cm is taken as a reference, adding a refractive power such that the lens refractive power at a distance of approximately 50 cm to the viewed object falls within the range of 0.68 D to 0.28 D; and
the focal length identification information including adding a refractive power such that, when the lens refractive power at a position where the distance to the viewed object is approximately 60 cm is taken as a reference, the lens refractive power at a distance of approximately 10 cm to the viewed object falls within the range of 6.49 D to 6.09 D.

5. The lens control device of any one of claims 1 to 3, **characterized by** comprising at least one of:
when the focal length identification information includes adding refractive powers such that, when the lens refractive power at a position where a distance to the viewed object is approximately X [cm] is taken as a reference, the lens refractive power at a distance of Y [cm] to the viewed object falls within the range of A to B [D],
X:100, Y:1, A:21.22, B:21.62,
X:100, Y:2, A:19.49, B:19.89,
X:100, Y:3, A:17.77, B:18.17,
X:100, Y:4, A:17.77, B:18.17,
X:100, Y:5, A:12.69, B:13.09,
X:100, Y:6, A:10.35, B:10.75,
X:100, Y:7, A:9.36, B:9.76,
X:100, Y:8, A:8.37, B:8.77,
X:100, Y:9, A:7.38, B:7.78,
X:100, Y:10, A:6.56, B:6.96,
X:100, Y:11, A:5.75, B:6.15,
X:100, Y:12, A:5.26, B:5.66,
X:100, Y:13, A:4.77, B:5.17,
X:100, Y:14, A:4.29, B:4.69,
X:100, Y:15, A:3.96, B:4.36,
X:100, Y:16, A:3.64, B:4.04,
X:100, Y:17, A:3.32, B:3.72,
X:100, Y:18, A:3.16, B:3.56,
X:100, Y:19, A:3.00, B:3.40,
X:100, Y:20, A:2.83, B:3.23,
X:100, Y:21, A:2.67, B:3.07,
X:100, Y:22, A:2.51, B:2.91,
X:100, Y:23, A:2.35, B:2.75,
X:100, Y:24, A:2.19, B:2.59,
X:100, Y:25, A:2.19, B:2.59,
X:100, Y:26, A:2.03, B:2.43,
X:100, Y:27, A:2.03, B:2.43,
X:100, Y:28, A:1.87, B:2.27,
X:100, Y:29, A:1.71, B:2.11,
X:100, Y:30, A:1.71, B:2.11,
X:100, Y:31, A:1.55, B:1.95,
X:100, Y:32, A:1.55, B:1.95,
X:100, Y:33, A:1.39, B:1.79,
X:100, Y:34, A:1.23, B:1.63,
X:100, Y:35, A:1.23, B:1.63,
X:100, Y:36, A:1.07, B:1.47,
X:100, Y:37, A:1.07, B:1.47,
X:100, Y:38, A:0.91, B:1.31,
X:100, Y:39, A:0.91, B:1.31,
X:100, Y:40, A:0.91, B:1.31,
X:100, Y:41, A:0.91, B:1.31,
X:100, Y:42, A:0.75, B:1.15,
X:100, Y:43, A:0.75, B:1.15,
X:100, Y:44, A:0.75, B:1.15,
X:100, Y:45, A:0.75, B:1.15,
X:100, Y:46, A:0.59, B:0.99,
X:100, Y:47, A:0.59, B:0.99,
X:100, Y:48, A:0.59, B:0.99,
X:100, Y:49, A:0.59, B:0.99,
X:100, Y:50, A:0.59, B:0.99,
X:100, Y:51, A:0.44, B:0.84,
X:100, Y:52, A:0.44, B:0.84,
X:100, Y:53, A:0.44, B:0.84,
X:100, Y:54, A:0.44, B:0.84,
X:100, Y:55, A:0.44, B:0.84,
X:100, Y:56, A:0.44, B:0.84,
X:100, Y:57, A:0.44, B:0.84,
X:100, Y:58, A:0.44, B:0.84,
X:100, Y:59, A:0.28, B:0.68,
X:100, Y:60, A:0.28, B:0.68,
X:100, Y:61, A:0.28, B:0.68,
X:100, Y:62, A:0.28, B:0.68,
X:100, Y:63, A:0.28, B:0.68,
X:100, Y:64, A:0.28, B:0.68,
X:100, Y:65, A:0.28, B:0.68,
X:100, Y:66, A:0.28, B:0.68,
X:100, Y:67, A:0.28, B:0.68,
X:100, Y:68, A:0.28, B:0.68,
X:100, Y:69, A:0.28, B:0.68,
X:100, Y:70, A:0.28, B:0.68,
X:100, Y:71, A:0.28, B:0.68,
X:100, Y:72, A:0.28, B:0.68,
X:100, Y:73, A:0.12, B:0.52,
X:100, Y:74, A:0.12, B:0.52,
X:100, Y:75, A:0.12, B:0.52,
X:100, Y:76, A:0.12, B:0.52,
X:100, Y:77, A:0.12, B:0.52,
X:100, Y:78, A:0.12, B:0.52,
X:100, Y:79, A:0.12, B:0.52,
X:100, Y:80, A:0.12, B:0.52,
X:100, Y:81, A:0.12, B:0.52,
X:100, Y:82, A:0.12, B:0.52,
X:100, Y:83, A:0.12, B:0.52,
X:100, Y:84, A:0.12, B:0.52,
X:100, Y:85, A:0.12, B:0.52,
X:100, Y:86, A:-0.04, B:0.36,
X:100, Y:87, A:-0.04, B:0.36,
X:100, Y:88, A:-0.04, B:0.36,
X:100, Y:89, A:-0.04, B:0.36,
X:100, Y:90, A:-0.04, B:0.36,
X:100, Y:91, A:-0.04, B:0.36,
X:100, Y:92, A:-0.04, B:0.36,
X:100, Y:93, A:-0.04, B:0.36,
X:100, Y:94, A:-0.04, B:0.36,
X:100, Y:95, A:-0.04, B:0.36,
X:100, Y:96, A:-0.04, B:0.36,
X:100, Y:97, A:-0.04, B:0.36,
X:100, Y:98, A:-0.04, B:0.36,
X:100, Y:99, A:-0.20, B:0.20,
X:100, Y:100, A:-0.20, B:0.20,
X:90, Y:1, A:21.06, B:21.46,
X:90, Y:2, A:19.33, B:19.73,
X:90, Y:3, A:17.61, B:18.01,
X:90, Y:4, A:17.61, B:18.01,
X:90, Y:5, A:12.53, B:12.93,
X:90, Y:6, A:10.19, B:10.59,
X:90, Y:7, A:9.20, B:9.60,
X:90, Y:8, A:8.21, B:8.61,
X:90, Y:9, A:7.22, B:7.62,
X:90, Y:10, A:6.40, B:6.80,
X:90, Y:11, A:5.59, B:5.99,
X:90, Y:12, A:5.10, B:5.50,
X:90, Y:13, A:4.61, B:5.01,
X:90, Y:14, A:4.13, B:4.53,
X:90, Y:15, A:3.80, B:4.20,
X:90, Y:16, A:3.48, B:3.88,
X:90, Y:17, A:3.16, B:3.56,
X:90, Y:18, A:3.00, B:3.40,
X:90, Y:19, A:2.84, B:3.24,
X:90, Y:20, A:2.68, B:3.08,
X:90, Y:21, A:2.52, B:2.92,
X:90, Y:22, A:2.35, B:2.75,
X:90, Y:23, A:2.19, B:2.59,
X:90, Y:24, A:2.03, B:2.43,
X:90, Y:25, A:2.03, B:2.43,
X:90, Y:26, A:1.87, B:2.27,
X:90, Y:27, A:1.87, B:2.27,
X:90, Y:28, A:1.71, B:2.11,
X:90, Y:29, A:1.55, B:1.95,
X:90, Y:30, A:1.55, B:1.95,
X:90, Y:31, A:1.39, B:1.79,
X:90, Y:32, A:1.39, B:1.79,
X:90, Y:33, A:1.23, B:1.63,
X:90, Y:34, A:1.07, B:1.47,
X:90, Y:35, A:1.07, B:1.47,
X:90, Y:36, A:0.91, B:1.31,
X:90, Y:37, A:0.91, B:1.31,
X:90, Y:38, A:0.75, B:1.15,
X:90, Y:39, A:0.75, B:1.15,
X:90, Y:40, A:0.75, B:1.15,
X:90, Y:41, A:0.75, B:1.15,
X:90, Y:42, A:0.60, B:1.00,
X:90, Y:43, A:0.60, B:1.00,
X:90, Y:44, A:0.60, B:1.00,
X:90, Y:45, A:0.60, B:1.00,
X:90, Y:46, A:0.44, B:0.84,
X:90, Y:47, A:0.44, B:0.84,
X:90, Y:48, A:0.44, B:0.84,
X:90, Y:49, A:0.44, B:0.84,
X:90, Y:50, A:0.44, B:0.84,
X:90, Y:51, A:0.28, B:0.68,
X:90, Y:52, A:0.28, B:0.68,
X:90, Y:53, A:0.28, B:0.68,
X:90, Y:54, A:0.28, B:0.68,
X:90, Y:55, A:0.28, B:0.68,
X:90, Y:56, A:0.28, B:0.68,
X:90, Y:57, A:0.28, B:0.68,
X:90, Y:58, A:0.28, B:0.68,
X:90, Y:59, A:0.12, B:0.52,
X:90, Y:60, A:0.12, B:0.52,
X:90, Y:61, A:0.12, B:0.52,
X:90, Y:62, A:0.12, B:0.52,
X:90, Y:63, A:0.12, B:0.52,
X:90, Y:64, A:0.12, B:0.52,
X:90, Y:65, A:0.12, B:0.52,
X:90, Y:66, A:0.12, B:0.52,
X:90, Y:67, A:0.12, B:0.52,
X:90, Y:68, A:0.12, B:0.52,
X:90, Y:69, A:0.12, B:0.52,
X:90, Y:70, A:0.12, B:0.52,
X:90, Y:71, A:0.12, B:0.52,
X:90, Y:72, A:0.12, B:0.52,
X:90, Y:73, A:-0.04, B:0.36,
X:90, Y:74, A:-0.04, B:0.36,
X:90, Y:75, A:-0.04, B:0.36,
X:90, Y:76, A:-0.04, B:0.36,
X:90, Y:77, A:-0.04, B:0.36,
X:90, Y:78, A:-0.04, B:0.36,
X:90, Y:79, A:-0.04, B:0.36,
X:90, Y:80, A:-0.04, B:0.36,
X:90, Y:81, A:-0.04, B:0.36,
X:90, Y:82, A:-0.04, B:0.36,
X:90, Y:83, A:-0.04, B:0.36,
X:90, Y:84, A:-0.04, B:0.36,
X:90, Y:85, A:-0.04, B:0.36,
X:90, Y:86, A:-0.20, B:0.20,
X:90, Y:87, A:-0.20, B:0.20,
X:90, Y:88, A:-0.20, B:0.20,
X:90, Y:89, A:-0.20, B:0.20,
X:90, Y:90, A:-0.20, B:0.20,
X:90, Y:91, A:-0.20, B:0.20,
X:90, Y:92, A:-0.20, B:0.20,
X:90, Y:93, A:-0.20, B:0.20,
X:90, Y:94, A:-0.20, B:0.20,
X:90, Y:95, A:-0.20, B:0.20,
X:90, Y:96, A:-0.20, B:0.20,
X:90, Y:97, A:-0.20, B:0.20,
X:90, Y:98, A:-0.20, B:0.20,
X:90, Y:99, A:-0.36, B:0.04,
X:90, Y:100, A:-0.36, B:0.0,
X:80, Y:1, A:20.90, B:21.30,
X:80, Y:2, A:19.17, B:19.57,
X:80, Y:3, A:17.45, B:17.85,
X:80, Y:4, A:17.45, B:17.85,
X:80, Y:5, A:12.37, B:12.77,
X:80, Y:6, A:10.04, B:10.44,
X:80, Y:7, A:9.04, B:9.44,
X:80, Y:8, A:8.05, B:8.45,
X:80, Y:9, A:7.06, B:7.46,
X:80, Y:10, A:6.25, B:6.65,
X:80, Y:11, A:5.43, B:5.83,
X:80, Y:12, A:4.94, B:5.34,
X:80, Y:13, A:4.45, B:4.85,
X:80, Y:14, A:3.97, B:4.37,
X:80, Y:15, A:3.65, B:4.05,
X:80, Y:16, A:3.32, B:3.72,
X:80, Y:17, A:3.00, B:3.40,
X:80, Y:18, A:2.84, B:3.24,
X:80, Y:19, A:2.68, B:3.08,
X:80, Y:20, A:2.52, B:2.92,
X:80, Y:21, A:2.36, B:2.76,
X:80, Y:22, A:2.20, B:2.60,
X:80, Y:23, A:2.04, B:2.44,
X:80, Y:24, A:1.87, B:2.27,
X:80, Y:25, A:1.87, B:2.27,
X:80, Y:26, A:1.71, B:2.11,
X:80, Y:27, A:1.71, B:2.11,
X:80, Y:28, A:1.55, B:1.95,
X:80, Y:29, A:1.39, B:1.79,
X:80, Y:30, A:1.39, B:1.79,
X:80, Y:31, A:1.23, B:1.63,
X:80, Y:32, A:1.23, B:1.63,
X:80, Y:33, A:1.07, B:1.47,
X:80, Y:34, A:0.91, B:1.31,
X:80, Y:35, A:0.91, B:1.31,
X:80, Y:36, A:0.76, B:1.16,
X:80, Y:37, A:0.76, B:1.16,
X:80, Y:38, A:0.60, B:1.00,
X:80, Y:39, A:0.60, B:1.00,
X:80, Y:40, A:0.60, B:1.00,
X:80, Y:41, A:0.60, B:1.00,
X:80, Y:42, A:0.44, B:0.84,
X:80, Y:43, A:0.44, B:0.84,
X:80, Y:44, A:0.44, B:0.84,
X:80, Y:45, A:0.44, B:0.84,,
X:80, Y:46, A:0.28, B:0.68,
X:80, Y:47, A:0.28, B:0.68,
X:80, Y:48, A:0.28, B:0.68,
X:80, Y:49, A:0.28, B:0.68,
X:80, Y:50, A:0.28, B:0.68,
X:80, Y:51, A:0.12, B:0.52,
X:80, Y:52, A:0.12, B:0.52,
X:80, Y:53, A:0.12, B:0.52,
X:80, Y:54, A:0.12, B:0.52,
X:80, Y:55, A:0.12, B:0.52,
X:80, Y:56, A:0.12, B:0.52,
X:80, Y:57, A:0.12, B:0.52,
X:80, Y:58, A:0.12, B:0.52,
X:80, Y:59, A:-0.04, B:0.36,
X:80, Y:60, A:-0.04, B:0.36,
X:80, Y:61, A:-0.04, B:0.36,
X:80, Y:62, A:-0.04, B:0.36,
X:80, Y:63, A:-0.04, B:0.36,
X:80, Y:64, A:-0.04, B:0.36,
X:80, Y:65, A:-0.04, B:0.36,
X:80, Y:66, A:-0.04, B:0.36,
X:80, Y:67, A:-0.04, B:0.36,
X:80, Y:68, A:-0.04, B:0.36,
X:80, Y:69, A:-0.04, B:0.36,
X:80, Y:70, A:-0.04, B:0.36,
X:80, Y:71, A:-0.04, B:0.36,
X:80, Y:72, A:-0.04, B:0.36,
X:80, Y:73, A:-0.02, B:0.20,
X:80, Y:74, A:-0.02, B:0.20,
X:80, Y:75, A:-0.02, B:0.20,
X:80, Y:76, A:-0.02, B:0.20,
X:80, Y:77, A:-0.02, B:0.20,
X:80, Y:78, A:-0.02, B:0.20,
X:80, Y:79, A:-0.02, B:0.20,
X:80, Y:80, A:-0.02, B:0.20,
X:80, Y:81, A:-0.02, B:0.20,
X:80, Y:82, A:-0.02, B:0.20,
X:80, Y:83, A:-0.02, B:0.20,
X:80, Y:84, A:-0.02, B:0.20,
X:80, Y:85, A:-0.02, B:0.20,
X:80, Y:86, A:-0.36, B:0.04,
X:80, Y:87, A:-0.36, B:0.04,
X:80, Y:88, A:-0.36, B:0.04,
X:80, Y:89, A:-0.36, B:0.04,
X:80, Y:90, A:-0.36, B:0.04,
X:80, Y:91, A:-0.36, B:0.04,
X:80, Y:92, A:-0.36, B:0.04,
X:80, Y:93, A:-0.36, B:0.04,
X:80, Y:94, A:-0.36, B:0.04,
X:80, Y:95, A:-0.36, B:0.04,
X:80, Y:96, A:-0.36, B:0.04,
X:80, Y:97, A:-0.36, B:0.04,
X:80, Y:98, A:-0.36, B:0.04,
X:80, Y:99, A:-0.52, B:-0.12,
X:80, Y:100, A:-0.52, B:-0.12,
X:70, Y:1, A:20.74, B:21.14,
X:70, Y:2, A:19.01, B:19.41,
X:70, Y:3, A:17.29, B:17.69,
X:70, Y:4, A:17.29, B:17.69,
X:70, Y:5, A:12.21, B:12.61,
X:70, Y:6, A:9.88, B:10.28,
X:70, Y:7, A:8.88, B:9.28,
X:70, Y:8, A:7.89, B:8.29,
X:70, Y:9, A:6.91, B:7.31,
X:70, Y:10, A:6.09, B:6.49,
X:70, Y:11, A:5.27, B:5.67,
X:70, Y:12, A:4.78, B:5.18,
X:70, Y:13, A:4.30, B:4.70,
X:70, Y:14, A:3.81, B:4.21,
X:70, Y:15, A:3.49, B:3.89,
X:70, Y:16, A:3.16, B:3.56,
X:70, Y:17, A:2.84, B:3.24,
X:70, Y:18, A:2.68, B:3.08,
X:70, Y:19, A:2.52, B:2.92,
X:70, Y:20, A:2.36, B:2.76,
X:70, Y:21, A:2.20, B:2.60,
X:70, Y:22, A:2.04, B:2.44,
X:70, Y:23, A:1.88, B:2.28,
X:70, Y:24, A:1.72, B:2.12,
X:70, Y:25, A:1.72, B:2.12,
X:70, Y:26, A:1.56, B:1.96,
X:70, Y:27, A:1.56, B:1.96,
X:70, Y:28, A:1.40, B:1.80,
X:70, Y:29, A:1.24, B:1.64,
X:70, Y:30, A:1.24, B:1.64,
X:70, Y:31, A:1.08, B:1.48,
X:70, Y:32, A:1.08, B:1.48,
X:70, Y:33, A:0.92, B:1.32,
X:70, Y:34, A:0.76, B:1.16,
X:70, Y:35, A:0.76, B:1.16,
X:70, Y:36, A:0.60, B:1.00,
X:70, Y:37, A:0.60, B:1.00,
X:70, Y:38, A:0.44, B:0.84,
X:70, Y:39, A:0.44, B:0.84,
X:70, Y:40, A:0.44, B:0.84,
X:70, Y:41, A:0.44, B:0.84,
X:70, Y:42, A:0.28, B:0.68,
X:70, Y:43, A:0.28, B:0.68,
X:70, Y:44, A:0.28, B:0.68,
X:70, Y:45, A:0.28, B:0.68,
X:70, Y:46, A:0.12, B:0.52,
X:70, Y:47, A:0.12, B:0.52,
X:70, Y:48, A:0.12, B:0.52,
X:70, Y:49, A:0.12, B:0.52,
X:70, Y:50, A:0.12, B:0.52,
X:70, Y:51, A:-0.04, B:0.36,
X:70, Y:52, A:-0.04, B:0.36,
X:70, Y:53, A:-0.04, B:0.36,
X:70, Y:54, A:-0.04, B:0.36,
X:70, Y:55, A:-0.04, B:0.36,
X:70, Y:56, A:-0.04, B:0.36,
X:70, Y:57, A:-0.04, B:0.36,
X:70, Y:58, A:-0.04, B:0.36,
X:70, Y:59, A:-0.20, B:0.20,
X:70, Y:60, A:-0.20, B:0.20,
X:70, Y:61, A:-0.20, B:0.20,
X:70, Y:62, A:-0.20, B:0.20,
X:70, Y:63, A:-0.20, B:0.20,
X:70, Y:64, A:-0.20, B:0.20,
X:70, Y:65, A:-0.20, B:0.20,
X:70, Y:66, A:-0.20, B:0.20,
X:70, Y:67, A:-0.20, B:0.20,
X:70, Y:68, A:-0.20, B:0.20,
X:70, Y:69, A:-0.20, B:0.20,
X:70, Y:70, A:-0.20, B:0.20,
X:70, Y:71, A:-0.20, B:0.20,
X:70, Y:72, A:-0.20, B:0.20,
X:70, Y:73, A:-0.36, B:0.04,
X:70, Y:74, A:-0.36, B:0.04,
X:70, Y:75, A:-0.36, B:0.04,
X:70, Y:76, A:-0.36, B:0.04,
X:70, Y:77, A:-0.36, B:0.04,
X:70, Y:78, A:-0.36, B:0.04,
X:70, Y:79, A:-0.36, B:0.04,
X:70, Y:80, A:-0.36, B:0.04,
X:70, Y:81, A:-0.36, B:0.04,
X:70, Y:82, A:-0.36, B:0.04,
X:70, Y:83, A:-0.36, B:0.04,
X:70, Y:84, A:-0.36, B:0.04,
X:70, Y:85, A:-0.36, B:0.04,
X:70, Y:86, A:-0.52, B:-0.12,
X:70, Y:87, A:-0.52, B:-0.12,
X:70, Y:88, A:-0.52, B:-0.12,
X:70, Y:89, A:-0.52, B:-0.12,
X:70, Y:90, A:-0.52, B:-0.12,
X:70, Y:91, A:-0.52, B:-0.12,
X:70, Y:92, A:-0.52, B:-0.12,
X:70, Y:93, A:-0.52, B:-0.12,
X:70, Y:94, A:-0.52, B:-0.12,
X:70, Y:95, A:-0.52, B:-0.12,
X:70, Y:96, A:-0.52, B:-0.12,
X:70, Y:97, A:-0.52, B:-0.12,
X:70, Y:98, A:-0.52, B:-0.12,
X:70, Y:99, A:-0.68, B:-0.28,
X:70, Y:100, A:-0.68, B:-0.28,
X:60, Y:1, A:20.74, B:21.14,
X:60, Y:2, A:19.01, B:19.41,
X:60, Y:3, A:17.29, B:17.69,
X:60, Y:4, A:17.29, B:17.69,
X:60, Y:5, A:12.21, B:12.61,
X:60, Y:6, A:9.88, B:10.28,
X:60, Y:7, A:8.88, B:9.28,
X:60, Y:8, A:7.89, B:8.29,
X:60, Y:9, A:6.91, B:7.31,
X:60, Y:10, A:6.09, B:6.49,
X:60, Y:11, A:5.27, B:5.67,
X:60, Y:12, A:4.78, B:5.18,
X:60, Y:13, A:4.30, B:4.70,
X:60, Y:14, A:3.81, B:4.21,
X:60, Y:15, A:3.49, B:3.89,
X:60, Y:16, A:3.16, B:3.56,
X:60, Y:17, A:2.84, B:3.24,
X:60, Y:18, A:2.68, B:3.08,
X:60, Y:19, A:2.52, B:2.92,
X:60, Y:20, A:2.36, B:2.76,
X:60, Y:21, A:2.20, B:2.60,
X:60, Y:22, A:2.04, B:2.44,
X:60, Y:23, A:1.88, B:2.28,
X:60, Y:24, A:1.72, B:2.12,
X:60, Y:25, A:1.72, B:2.12,
X:60, Y:26, A:1.56, B:1.96,
X:60, Y:27, A:1.56, B:1.96,
X:60, Y:28, A:1.40, B:1.80,
X:60, Y:29, A:1.24, B:1.64,
X:60, Y:30, A:1.24, B:1.64,
X:60, Y:31, A:1.08, B:1.48,
X:60, Y:32, A:1.08, B:1.48,
X:60, Y:33, A:0.92, B:1.32,
X:60, Y:34, A:0.76, B:1.16,
X:60, Y:35, A:0.76, B:1.16,
X:60, Y:36, A:0.60, B:1.00,
X:60, Y:37, A:0.60, B:1.00,
X:60, Y:38, A:0.44, B:0.84,
X:60, Y:39, A:0.44, B:0.84,
X:60, Y:40, A:0.44, B:0.84,
X:60, Y:41, A:0.44, B:0.84,
X:60, Y:42, A:0.28, B:0.68,
X:60, Y:43, A:0.28, B:0.68,
X:60, Y:44, A:0.28, B:0.68,
X:60, Y:45, A:0.28, B:0.68,
X:60, Y:46, A:0.12, B:0.52,
X:60, Y:47, A:0.12, B:0.52,
X:60, Y:48, A:0.12, B:0.52,
X:60, Y:49, A:0.12, B:0.52,
X:60, Y:50, A:0.12, B:0.52,
X:60, Y:51, A:-0.04, B:0.36,
X:60, Y:52, A:-0.04, B:0.36,
X:60, Y:53, A:-0.04, B:0.36,
X:60, Y:54, A:-0.04, B:0.36,
X:60, Y:55, A:-0.04, B:0.36,
X:60, Y:56, A:-0.04, B:0.36,
X:60, Y:57, A:-0.04, B:0.36,
X:60, Y:58, A:-0.04, B:0.36,
X:60, Y:59, A:-0.20, B:0.20,
X:60, Y:60, A:-0.20, B:0.20,
X:60, Y:61, A:-0.20, B:0.20,
X:60, Y:62, A:-0.20, B:0.20,
X:60, Y:63, A:-0.20, B:0.20,
X:60, Y:64, A:-0.20, B:0.20,
X:60, Y:65, A:-0.20, B:0.20,
X:60, Y:66, A:-0.20, B:0.20,
X:60, Y:67, A:-0.20, B:0.20,
X:60, Y:68, A:-0.20, B:0.20,
X:60, Y:69, A:-0.20, B:0.20,
X:60, Y:70, A:-0.20, B:0.20,
X:60, Y:71, A:-0.20, B:0.20,
X:60, Y:72, A:-0.20, B:0.20,
X:60, Y:73, A:-0.36, B:0.04,
X:60, Y:74, A:-0.36, B:0.04,
X:60, Y:75, A:-0.36, B:0.04,
X:60, Y:76, A:-0.36, B:0.04,
X:60, Y:77, A:-0.36, B:0.04,
X:60, Y:78, A:-0.36, B:0.04,
X:60, Y:79, A:-0.36, B:0.04,
X:60, Y:80, A:-0.36, B:0.04,
X:60, Y:81, A:-0.36, B:0.04,
X:60, Y:82, A:-0.36, B:0.04,
X:60, Y:83, A:-0.36, B:0.04,
X:60, Y:84, A:-0.36, B:0.04,
X:60, Y:85, A:-0.36, B:0.04,
X:60, Y:86, A:-0.52, B:-0.12,
X:60, Y:87, A:-0.52, B:-0.12,
X:60, Y:88, A:-0.52, B:-0.12,
X:60, Y:89, A:-0.52, B:-0.12,
X:60, Y:90, A:-0.52, B:-0.12,
X:60, Y:91, A:-0.52, B:-0.12,
X:60, Y:92, A:-0.52, B:-0.12,
X:60, Y:93, A:-0.52, B:-0.12,
X:60, Y:94, A:-0.52, B:-0.12,
X:60, Y:95, A:-0.52, B:-0.12,
X:60, Y:96, A:-0.52, B:-0.12,
X:60, Y:97, A:-0.52, B:-0.12,
X:60, Y:98, A:-0.52, B:-0.12,
X:60, Y:99, A:-0.68, B:-0.28,
X:60, Y:100, A:-0.68, B:-0.28,
X:50, Y:1, A:20.42, B:20.82,
X:50, Y:2, A:18.69, B:19.09,
X:50, Y:3, A:16.98, B:17.38,
X:50, Y:4, A:16.98, B:17.38,
X:50, Y:5, A:11.89, B:12.29,
X:50, Y:6, A:9.56, B:9.96,
X:50, Y:7, A:8.56, B:8.96,
X:50, Y:8, A:7.57, B:7.97,
X:50, Y:9, A:6.59, B:6.99,
X:50, Y:10, A:5.77, B:6.17,
X:50, Y:11, A:4.95, B:5.35,
X:50, Y:12, A:4.46, B:4.86,
X:50, Y:13, A:3.98, B:4.38,
X:50, Y:14, A:3.49, B:3.89,
X:50, Y:15, A:3.17, B:3.57,
X:50, Y:16, A:2.85, B:3.25,
X:50, Y:17, A:2.52, B:2.92,
X:50, Y:18, A:2.36, B:2.76,
X:50, Y:19, A:2.20, B:2.60,
X:50, Y:20, A:2.04, B:2.44,
X:50, Y:21, A:1.88, B:2.28,
X:50, Y:22, A:1.72, B:2.12,
X:50, Y:23, A:1.56, B:1.96,
X:50, Y:24, A:1.40, B:1.80,
X:50, Y:25, A:1.40, B:1.80,
X:50, Y:26, A:1.24, B:1.64,
X:50, Y:27, A:1.24, B:1.64,
X:50, Y:28, A:1.08, B:1.48,
X:50, Y:29, A:0.92, B:1.32,
X:50, Y:30, A:0.92, B:1.32,
X:50, Y:31, A:0.76, B:1.16,
X:50, Y:32, A:0.76, B:1.16,
X:50, Y:33, A:0.60, B:1.00,
X:50, Y:34, A:0.44, B:0.84,
X:50, Y:35, A:0.44, B:0.84,
X:50, Y:36, A:0.28, B:0.68,
X:50, Y:37, A:0.28, B:0.68,
X:50, Y:38, A:0.12, B:0.52,
X:50, Y:39, A:0.12, B:0.52,
X:50, Y:40, A:0.12, B:0.52,
X:50, Y:41, A:0.12, B:0.52,
X:50, Y:42, A:-0.04, B:0.36,
X:50, Y:43, A:-0.04, B:0.36,
X:50, Y:44, A:-0.04, B:0.36,
X:50, Y:45, A:-0.04, B:0.36,
X:50, Y:46, A:-0.20, B:0.20,
X:50, Y:47, A:-0.20, B:0.20,
X:50, Y:48, A:-0.20, B:0.20,
X:50, Y:49, A:-0.20, B:0.20,
X:50, Y:50, A:-0.20, B:0.20,
X:50, Y:51, A:-0.36, B:0.04,
X:50, Y:52, A:-0.36, B:0.04,
X:50, Y:53, A:-0.36, B:0.04,
X:50, Y:54, A:-0.36, B:0.04,
X:50, Y:55, A:-0.36, B:0.04,
X:50, Y:56, A:-0.36, B:0.04,
X:50, Y:57, A:-0.36, B:0.04,
X:50, Y:58, A:-0.36, B:0.04,
X:50, Y:59, A:-0.52, B:-0.12,
X:50, Y:60, A:-0.52, B:-0.12,
X:50, Y:61, A:-0.52, B:-0.12,
X:50, Y:62, A:-0.52, B:-0.12,
X:50, Y:63, A:-0.52, B:-0.12,
X:50, Y:64, A:-0.52, B:-0.12,
X:50, Y:65, A:-0.52, B:-0.12,
X:50, Y:66, A:-0.52, B:-0.12,
X:50, Y:67, A:-0.52, B:-0.12,
X:50, Y:68, A:-0.52, B:-0.12,
X:50, Y:69, A:-0.52, B:-0.12,
X:50, Y:70, A:-0.52, B:-0.12,
X:50, Y:71, A:-0.52, B:-0.12,
X:50, Y:72, A:-0.52, B:-0.12,
X:50, Y:73, A:-0.68, B:-0.28,
X:50, Y:74, A:-0.68, B:-0.28,
X:50, Y:75, A:-0.68, B:-0.28,
X:50, Y:76, A:-0.68, B:-0.28,
X:50, Y:77, A:-0.68, B:-0.28,
X:50, Y:78, A:-0.68, B:-0.28,
X:50, Y:79, A:-0.68, B:-0.28,
X:50, Y:80, A:-0.68, B:-0.28,
X:50, Y:81, A:-0.68, B:-0.28,
X:50, Y:82, A:-0.68, B:-0.28,
X:50, Y:83, A:-0.68, B:-0.28,
X:50, Y:84, A:-0.68, B:-0.28,
X:50, Y:85, A:-0.68, B:-0.28,
X:50, Y:86, A:-0.84, B:-0.44,
X:50, Y:87, A:-0.84, B:-0.44,
X:50, Y:88, A:-0.84, B:-0.44,
X:50, Y:89, A:-0.84, B:-0.44,
X:50, Y:90, A:-0.84, B:-0.44,
X:50, Y:91, A:-0.84, B:-0.44,
X:50, Y:92, A:-0.84, B:-0.44,
X:50, Y:93, A:-0.84, B:-0.44,
X:50, Y:94, A:-0.84, B:-0.44,
X:50, Y:95, A:-0.84, B:-0.44,
X:50, Y:96, A:-0.84, B:-0.44,
X:50, Y:97, A:-0.84, B:-0.44,
X:50, Y:98, A:-0.84, B:-0.44,
X:50, Y:99, A:-0.99, B:-0.59,
X:50, Y:100, A:-0.99, B:-0.59,
X:40, Y:1, A:20.10, B:20.50,
X:40, Y:2, A:18.37, B:18.77,
X:40, Y:3, A:16.66, B:17.06,
X:40, Y:4, A:16.66, B:17.06,
X:40, Y:5, A:11.58, B:11.98,
X:40, Y:6, A:9.24, B:9.64,
X:40, Y:7, A:8.24, B:8.64,
X:40, Y:8, A:7.25, B:7.65,
X:40, Y:9, A:6.27, B:6.67,
X:40, Y:10, A:5.45, B:5.85,
X:40, Y:11, A:4.63, B:5.03,
X:40, Y:12, A:4.15, B:4.55,
X:40, Y:13, A:3.66, B:4.06,
X:40, Y:14, A:3.17, B:3.57,
X:40, Y:15, A:2.85, B:3.25,
X:40, Y:16, A:2.53, B:2.93,
X:40, Y:17, A:2.20, B:2.60,
X:40, Y:18, A:2.04, B:2.44,
X:40, Y:19, A:1.88, B:2.28,
X:40, Y:20, A:1.72, B:2.12,
X:40, Y:21, A:1.56, B:1.96,
X:40, Y:22, A:1.40, B:1.80,
X:40, Y:23, A:1.24, B:1.64,
X:40, Y:24, A:1.08, B:1.48,
X:40, Y:25, A:1.08, B:1.48,
X:40, Y:26, A:0.92, B:1.32,
X:40, Y:27, A:0.92, B:1.32,
X:40, Y:28, A:0.76, B:1.16,
X:40, Y:29, A:0.60, B:1.00,
X:40, Y:30, A:0.60, B:1.00,
X:40, Y:31, A:0.44, B:0.84,
X:40, Y:32, A:0.44, B:0.84,
X:40, Y:33, A:0.28, B:0.68,
X:40, Y:34, A:0.12, B:0.52,
X:40, Y:35, A:0.12, B:0.52,
X:40, Y:36, A:-0.04, B:0.36,
X:40, Y:37, A:-0.04, B:0.36,
X:40, Y:38, A:-0.20, B:0.20,
X:40, Y:39, A:-0.20, B:0.20,
X:40, Y:40, A:-0.20, B:0.20,
X:40, Y:41, A:-0.20, B:0.20,
X:40, Y:42, A:-0.36, B:0.04,
X:40, Y:43, A:-0.36, B:0.04,
X:40, Y:44, A:-0.36, B:0.04,
X:40, Y:45, A:-0.36, B:0.04,
X:40, Y:46, A:-0.52, B:-0.12,
X:40, Y:47, A:-0.52, B:-0.12,
X:40, Y:48, A:-0.52, B:-0.12,
X:40, Y:49, A:-0.52, B:-0.12,
X:40, Y:50, A:-0.52, B:-0.12,
X:40, Y:51, A:-0.68, B:-0.28,
X:40, Y:52, A:-0.68, B:-0.28,
X:40, Y:53, A:-0.68, B:-0.28,
X:40, Y:54, A:-0.68, B:-0.28,
X:40, Y:55, A:-0.68, B:-0.28,
X:40, Y:56, A:-0.68, B:-0.28,
X:40, Y:57, A:-0.68, B:-0.28,
X:40, Y:58, A:-0.68, B:-0.28,
X:40, Y:59, A:-0.84, B:-0.44,
X:40, Y:60, A:-0.84, B:-0.44,
X:40, Y:61, A:-0.84, B:-0.44,
X:40, Y:62, A:-0.84, B:-0.44,
X:40, Y:63, A:-0.84, B:-0.44,
X:40, Y:64, A:-0.84, B:-0.44,
X:40, Y:65, A:-0.84, B:-0.44,
X:40, Y:66, A:-0.84, B:-0.44,
X:40, Y:67, A:-0.84, B:-0.44,
X:40, Y:68, A:-0.84, B:-0.44,
X:40, Y:69, A:-0.84, B:-0.44,
X:40, Y:70, A:-0.84, B:-0.44,
X:40, Y:71, A:-0.84, B:-0.44,
X:40, Y:72, A:-0.84, B:-0.44,
X:40, Y:73, A:-1.00, B:-0.60,
X:40, Y:74, A:-1.00, B:-0.60,
X:40, Y:75, A:-1.00, B:-0.60,
X:40, Y:76, A:-1.00, B:-0.60,
X:40, Y:77, A:-1.00, B:-0.60,
X:40, Y:78, A:-1.00, B:-0.60,
X:40, Y:79, A:-1.00, B:-0.60,
X:40, Y:80, A:-1.00, B:-0.60,
X:40, Y:81, A:-1.00, B:-0.60,
X:40, Y:82, A:-1.00, B:-0.60,
X:40, Y:83, A:-1.00, B:-0.60,
X:40, Y:84, A:-1.00, B:-0.60,
X:40, Y:85, A:-1.00, B:-0.60,
X:40, Y:86, A:-1.15, B:-0.75,
X:40, Y:87, A:-1.15, B:-0.75,
X:40, Y:88, A:-1.15, B:-0.75,
X:40, Y:89, A:-1.15, B:-0.75,
X:40, Y:90, A:-1.15, B:-0.75,
X:40, Y:91, A:-1.15, B:-0.75,
X:40, Y:92, A:-1.15, B:-0.75,
X:40, Y:93, A:-1.15, B:-0.75,
X:40, Y:94, A:-1.15, B:-0.75,
X:40, Y:95, A:-1.15, B:-0.75,
X:40, Y:96, A:-1.15, B:-0.75,
X:40, Y:97, A:-1.15, B:-0.75,
X:40, Y:98, A:-1.15, B:-0.75,
X:40, Y:99, A:-1.31, B:-0.91,
X:40, Y:100, A:-1.31, B:-0.91,
X:30, Y:1, A:19.30, B:19.70,
X:30, Y:2, A:17.58, B:17.98,
X:30, Y:3, A:15.86, B:16.26,
X:30, Y:4, A:15.86, B:16.26,
X:30, Y:5, A:10.78, B:11.18,
X:30, Y:6, A:8.44, B:8.84,
X:30, Y:7, A:7.45, B:7.85,
X:30, Y:8, A:6.46, B:6.86,
X:30, Y:9, A:5.47, B:5.87,
X:30, Y:10, A:4.65, B:5.05,
X:30, Y:11, A:3.84, B:4.24,
X:30, Y:12, A:3.35, B:3.75,
X:30, Y:13, A:2.86, B:3.26,
X:30, Y:14, A:2.37, B:2.77,
X:30, Y:15, A:2.05, B:2.45,
X:30, Y:16, A:1.73, B:2.13,
X:30, Y:17, A:1.41, B:1.81,
X:30, Y:18, A:1.24, B:1.64,
X:30, Y:19, A:1.08, B:1.48,
X:30, Y:20, A:0.92, B:1.32,
X:30, Y:21, A:0.76, B:1.16,
X:30, Y:22, A:0.60, B:1.00,
X:30, Y:23, A:0.44, B:0.84,
X:30, Y:24, A:0.28, B:0.68,
X:30, Y:25, A:0.28, B:0.68,
X:30, Y:26, A:0.12, B:0.52,
X:30, Y:27, A:0.12, B:0.52,
X:30, Y:28, A:-0.04, B:0.36,
X:30, Y:29, A:-0.20, B:0.20,
X:30, Y:30, A:-0.20, B:0.20,
X:30, Y:31, A:-0.36, B:0.04,
X:30, Y:32, A:-0.36, B:0.04,
X:30, Y:33, A:-0.52, B:-0.12,
X:30, Y:34, A:-0.68, B:-0.28,
X:30, Y:35, A:-0.68, B:-0.28,
X:30, Y:36, A:-0.84, B:-0.44,
X:30, Y:37, A:-0.84, B:-0.44,
X:30, Y:38, A:-1.00, B:-0.60,
X:30, Y:39, A:-1.00, B:-0.60,
X:30, Y:40, A:-1.00, B:-0.60,
X:30, Y:41, A:-1.00, B:-0.60,
X:30, Y:42, A:-1.16, B:-0.76,
X:30, Y:43, A:-1.16, B:-0.76,
X:30, Y:44, A:-1.16, B:-0.76,
X:30, Y:45, A:-1.16, B:-0.76,
X:30, Y:46, A:-1.32, B:-0.92,
X:30, Y:47, A:-1.32, B:-0.92,
X:30, Y:48, A:-1.32, B:-0.92,
X:30, Y:49, A:-1.32, B:-0.92,
X:30, Y:50, A:-1.32, B:-0.92,
X:30, Y:51, A:-1.48, B:-1.08,
X:30, Y:52, A:-1.48, B:-1.08,
X:30, Y:53, A:-1.48, B:-1.08,
X:30, Y:54, A:-1.48, B:-1.08,
X:30, Y:55, A:-1.48, B:-1.08,
X:30, Y:56, A:-1.48, B:-1.08,
X:30, Y:57, A:-1.48, B:-1.08,
X:30, Y:58, A:-1.48, B:-1.08,
X:30, Y:59, A:-1.64, B:-1.24,
X:30, Y:60, A:-1.64, B:-1.24,
X:30, Y:61, A:-1.64, B:-1.24,
X:30, Y:62, A:-1.64, B:-1.24,
X:30, Y:63, A:-1.64, B:-1.24,
X:30, Y:64, A:-1.64, B:-1.24,
X:30, Y:65, A:-1.64, B:-1.24,
X:30, Y:66, A:-1.64, B:-1.24,
X:30, Y:67, A:-1.64, B:-1.24,
X:30, Y:68, A:-1.64, B:-1.24,
X:30, Y:69, A:-1.64, B:-1.24,
X:30, Y:70, A:-1.64, B:-1.24,
X:30, Y:71, A:-1.64, B:-1.24,
X:30, Y:72, A:-1.64, B:-1.24,
X:30, Y:73, A:-1.79, B:-1.39,
X:30, Y:74, A:-1.79, B:-1.39,
X:30, Y:75, A:-1.79, B:-1.39,
X:30, Y:76, A:-1.79, B:-1.39,
X:30, Y:77, A:-1.79, B:-1.39,
X:30, Y:78, A:-1.79, B:-1.39,
X:30, Y:79, A:-1.79, B:-1.39,
X:30, Y:80, A:-1.79, B:-1.39,
X:30, Y:81, A:-1.79, B:-1.39,
X:30, Y:82, A:-1.79, B:-1.39,
X:30, Y:83, A:-1.79, B:-1.39,
X:30, Y:84, A:-1.79, B:-1.39,
X:30, Y:85, A:-1.79, B:-1.39,
X:30, Y:86, A:-1.95, B:-1.55,
X:30, Y:87, A:-1.95, B:-1.55,
X:30, Y:88, A:-1.95, B:-1.55,
X:30, Y:89, A:-1.95, B:-1.55,
X:30, Y:90, A:-1.95, B:-1.55,
X:30, Y:91, A:-1.95, B:-1.55,
X:30, Y:92, A:-1.95, B:-1.55,
X:30, Y:93, A:-1.95, B:-1.55,
X:30, Y:94, A:-1.95, B:-1.55,
X:30, Y:95, A:-1.95, B:-1.55,
X:30, Y:96, A:-1.95, B:-1.55,
X:30, Y:97, A:-1.95, B:-1.55,
X:30, Y:98, A:-1.95, B:-1.55,
X:30, Y:99, A:-2.11, B:-1.71,
X:30, Y:100, A:-2.11, B:-1.71,
X:20, Y:1, A:18.18, B:18.58,
X:20, Y:2, A:16.45, B:16.85,
X:20, Y:3, A:14.74, B:15.14,
X:20, Y:4, A:14.74, B:15.14,
X:20, Y:5, A:9.65, B:10.05,
X:20, Y:6, A:7.32, B:7.72,
X:20, Y:7, A:6.32, B:6.72,
X:20, Y:8, A:5.33, B:5.73,
X:20, Y:9, A:4.35, B:4.75,
X:20, Y:10, A:3.53, B:3.93,
X:20, Y:11, A:2.71, B:3.11,
X:20, Y:12, A:2.22, B:2.62,
X:20, Y:13, A:1.74, B:2.14,
X:20, Y:14, A:1.25, B:1.65,
X:20, Y:15, A:0.93, B:1.33,
X:20, Y:16, A:0.61, B:1.01,
X:20, Y:17, A:0.28, B:0.68,
X:20, Y:18, A:0.12, B:0.52,
X:20, Y:19, A:-0.04, B:0.36,
X:20, Y:20, A:-0.20, B:0.20,
X:20, Y:21, A:-0.36, B:0.04,
X:20, Y:22, A:-0.52, B:-0.12,
X:20, Y:23, A:-0.68, B:-0.28,
X:20, Y:24, A:-0.84, B:0.44,
X:20, Y:25, A:-0.84, B:0.44,
X:20, Y:26, A:-1.00, B:-0.60,
X:20, Y:27, A:-1.00, B:-0.60,
X:20, Y:28, A:-1.16, B:-0.76,
X:20, Y:29, A:-1.32, B:-0.92,
X:20, Y:30, A:-1.32, B:-0.92,
X:20, Y:31, A:-1.48, B:-1.08,
X:20, Y:32, A:-1.48, B:-1.08,
X:20, Y:33, A:-1.64, B:-1.24,
X:20, Y:34, A:-1.80, B:-1.40,
X:20, Y:35, A:-1.80, B:-1.40,
X:20, Y:36, A:-1.96, B:-1.56,
X:20, Y:37, A:-1.96, B:-1.56,
X:20, Y:38, A:-2.12, B:-1.72,
X:20, Y:39, A:-2.12, B:-1.72,
X:20, Y:40, A:-2.12, B:-1.72,
X:20, Y:41, A:-2.12, B:-1.72,
X:20, Y:42, A:-2.28, B:-1.88,
X:20, Y:43, A:-2.28, B:-1.88,
X:20, Y:44, A:-2.28, B:-1.88,
X:20, Y:45, A:-2.28, B:-1.88,
X:20, Y:46, A:-2.44, B:-2.04,
X:20, Y:47, A:-2.44, B:-2.04,
X:20, Y:48, A:-2.44, B:-2.04,
X:20, Y:49, A:-2.44, B:-2.04,
X:20, Y:50, A:-2.44, B:-2.04,
X:20, Y:51, A:-2.60, B:-2.20,
X:20, Y:52, A:-2.60, B:-2.20,
X:20, Y:53, A:-2.60, B:-2.20,
X:20, Y:54, A:-2.60, B:-2.20,
X:20, Y:55, A:-2.60, B:-2.20,
X:20, Y:56, A:-2.60, B:-2.20,
X:20, Y:57, A:-2.60, B:-2.20,
X:20, Y:58, A:-2.60, B:-2.20,
X:20, Y:59, A:-2.76, B:-2.36,
X:20, Y:60, A:-2.76, B:-2.36,
X:20, Y:61, A:-2.76, B:-2.36,
X:20, Y:62, A:-2.76, B:-2.36,
X:20, Y:63, A:-2.76, B:-2.36,
X:20, Y:64, A:-2.76, B:-2.36,
X:20, Y:65, A:-2.76, B:-2.36,
X:20, Y:66, A:-2.76, B:-2.36,
X:20, Y:67, A:-2.76, B:-2.36,
X:20, Y:68, A:-2.76, B:-2.36,
X:20, Y:69, A:-2.76, B:-2.36,
X:20, Y:70, A:-2.76, B:-2.36,
X:20, Y:71, A:-2.76, B:-2.36,
X:20, Y:72, A:-2.76, B:-2.36,
X:20, Y:73, A:-2.92, B:-2.52,
X:20, Y:74, A:-2.92, B:-2.52,
X:20, Y:75, A:-2.92, B:-2.52,
X:20, Y:76, A:-2.92, B:-2.52,
X:20, Y:77, A:-2.92, B:-2.52,
X:20, Y:78, A:-2.92, B:-2.52,
X:20, Y:79, A:-2.92, B:-2.52,
X:20, Y:80, A:-2.92, B:-2.52,
X:20, Y:81, A:-2.92, B:-2.52,
X:20, Y:82, A:-2.92, B:-2.52,
X:20, Y:83, A:-2.92, B:-2.52,
X:20, Y:84, A:-2.92, B:-2.52,
X:20, Y:85, A:-2.92, B:-2.52,
X:20, Y:86, A:-3.08, B:-2.68,
X:20, Y:87, A:-3.08, B:-2.68,
X:20, Y:88, A:-3.08, B:-2.68,
X:20, Y:89, A:-3.08, B:-2.68,
X:20, Y:90, A:-3.08, B:-2.68,
X:20, Y:91, A:-3.08, B:-2.68,
X:20, Y:92, A:-3.08, B:-2.68,
X:20, Y:93, A:-3.08, B:-2.68,
X:20, Y:94, A:-3.08, B:-2.68,
X:20, Y:95, A:-3.08, B:-2.68,
X:20, Y:96, A:-3.08, B:-2.68,
X:20, Y:97, A:-3.08, B:-2.68,
X:20, Y:98, A:-3.08, B:-2.68,
X:20, Y:99, A:-3.23, B:-2.83,
X:20, Y:100, A:-3.23, B:-2.83,
X:10, Y:1, A:14.45, B:14.85,
X:10, Y:2, A:12.72, B:13.12,
X:10, Y:3, A:11.01, B:11.41,
X:10, Y:4, A:11.01, B:11.41,
X:10, Y:5, A:5.93, B:6.33,
X:10, Y:6, A:3.59, B:3.99,
X:10, Y:7, A:2.59, B:2.99,
X:10, Y:8, A:1.60, B:2.00,
X:10, Y:9, A:0.62, B:1.02,
X:10, Y:10, A:-0.20, B:0.20,
X:10, Y:11, A:-1.02, B:-0.62,
X:10, Y:12, A:-1.50, B:-1.10,
X:10, Y:13, A:-1.99, B:-1.59,
X:10, Y:14, A:-2.48, B:-2.08,
X:10, Y:15, A:-2.80, B:-2.40,
X:10, Y:16, A:-3.12, B:-2.72,
X:10, Y:17, A:-3.45, B:-3.05,
X:10, Y:18, A:-3.61, B:-3.21,
X:10, Y:19, A:-3.77, B:-3.37,
X:10, Y:20, A:-3.93, B:-3.53,
X:10, Y:21, A:-4.09, B:-3.69,
X:10, Y:22, A:-4.25, B:-3.85,
X:10, Y:23, A:-4.41, B:-4.01,
X:10, Y:24, A:-4.57, B:-4.17,
X:10, Y:25, A:-4.57, B:-4.17,
X:10, Y:26, A:-4.73, B:-4.33,
X:10, Y:27, A:-4.73, B:-4.33,
X:10, Y:28, A:-4.89, B:-4.49,
X:10, Y:29, A:-5.05, B:-4.65,
X:10, Y:30, A:-5.05, B:-4.65,
X:10, Y:31, A:-5.21, B:-4.81,
X:10, Y:32, A:-5.21, B:-4.81,
X:10, Y:33, A:-5.37, B:-4.97,
X:10, Y:34, A:-5.53, B:-5.13,
X:10, Y:35, A:-5.53, B:-5.13,
X:10, Y:36, A:-5.69, B:-5.29,
X:10, Y:37, A:-5.69, B:-5.29,
X:10, Y:38, A:-5.85, B:-5.45,
X:10, Y:39, A:-5.85, B:-5.45,
X:10, Y:40, A:-5.85, B:-5.45,
X:10, Y:41, A:-5.85, B:-5.45,
X:10, Y:42, A:-6.01, B:-5.61,
X:10, Y:43, A:-6.01, B:-5.61,
X:10, Y:44, A:-6.01, B:-5.61,
X:10, Y:45, A:-6.01, B:-5.61,
X:10, Y:46, A:-6.17, B:-5.77,
X:10, Y:47, A:-6.17, B:-5.77,
X:10, Y:48, A:-6.17, B:-5.77,
X:10, Y:49, A:-6.17, B:-5.77,
X:10, Y:50, A:-6.17, B:-5.77,
X:10, Y:51, A:-6.33, B:-5.93,
X:10, Y:52, A:-6.33, B:-5.93,
X:10, Y:53, A:-6.33, B:-5.93,
X:10, Y:54, A:-6.33, B:-5.93,
X:10, Y:55, A:-6.33, B:-5.93,
X:10, Y:56, A:-6.33, B:-5.93,
X:10, Y:57, A:-6.33, B:-5.93,
X:10, Y:58, A:-6.33, B:-5.93,
X:10, Y:59, A:-6.49, B:-6.09,
X:10, Y:60, A:-6.49, B:-6.09,
X:10, Y:61, A:-6.49, B:-6.09,
X:10, Y:62, A:-6.49, B:-6.09,
X:10, Y:63, A:-6.49, B:-6.09,
X:10, Y:64, A:-6.49, B:-6.09,
X:10, Y:65, A:-6.49, B:-6.09,
X:10, Y:66, A:-6.49, B:-6.09,
X:10, Y:67, A:-6.49, B:-6.09,
X:10, Y:68, A:-6.49, B:-6.09,
X:10, Y:69, A:-6.49, B:-6.09,
X:10, Y:70, A:-6.49, B:-6.09,
X:10, Y:71, A:-6.49, B:-6.09,
X:10, Y:72, A:-6.49, B:-6.09,
X:10, Y:73, A:-6.65, B:-6.25,
X:10, Y:74, A:-6.65, B:-6.25,
X:10, Y:75, A:-6.65, B:-6.25,
X:10, Y:76, A:-6.65, B:-6.25,
X:10, Y:77, A:-6.65, B:-6.25,
X:10, Y:78, A:-6.65, B:-6.25,
X:10, Y:79, A:-6.65, B:-6.25,
X:10, Y:80, A:-6.65, B:-6.25,
X:10, Y:81, A:-6.65, B:-6.25,
X:10, Y:82, A:-6.65, B:-6.25,
X:10, Y:83, A:-6.65, B:-6.25,
X:10, Y:84, A:-6.65, B:-6.25,
X:10, Y:85, A:-6.65, B:-6.25,
X:10, Y:86, A:-6.80, B:-6.40,
X:10, Y:87, A:-6.80, B:-6.40,
X:10, Y:88, A:-6.80, B:-6.40,
X:10, Y:89, A:-6.80, B:-6.40,
X:10, Y:90, A:-6.80, B:-6.40,
X:10, Y:91, A:-6.80, B:-6.40,
X:10, Y:92, A:-6.80, B:-6.40,
X:10, Y:93, A:-6.80, B:-6.40,
X:10, Y:94, A:-6.80, B:-6.40,
X:10, Y:95, A:-6.80, B:-6.40,
X:10, Y:96, A:-6.80, B:-6.40,
X:10, Y:97, A:-6.80, B:-6.40,
X:10, Y:98, A:-6.80, B:-6.40,
X:10, Y:99, A:-6.96, B:-6.56, and
X:10, Y:100, A:-6.96, B:-6.56

6. The lens control device of any one of claims 1 to 3, **characterized in that** the focal length identification information comprises a plurality of pieces of focal length identification information using temperature as a parameter.

7. Eyeglasses comprising the lens control device of any one of claims 1 to 6.

8. Eyewear comprising the lens control device of any one of claims 1 to 6.

9. A lens control method used for a lens control device comprising:
a storage unit that stores focal length identification information for identifying, in accordance with a distance from a mounting position of a variable-focus lens for an eye to a viewed object, a focal length of the variable-focus lens; and
a control unit that selectively executes an automatic control mode, in which the focal length of the variable-focus lens is controlled based on a detection distance from a distance detection unit detecting a distance from the variable-focus lens to the viewed object and the focal length identification information in the storage unit, and a manual control mode, in which the focal length of the variable-focus lens is controlled based on a command operation performed on an operation unit, wherein
the control unit:
acquires a detection distance from the distance detection unit and a focal length of the variable-focus lens when the operating unit is command operated to bring the viewed object into focus in the manual control mode;
calculates a difference between the focal length of the variable-focus lens at the time of the acquired focusing operation and a focal length of the focal length identification information corresponding to the detection distance as a correction value;
generates new focal length identification information by correcting, modifying, or updating the focal length identification information based on the correction value, and stores it in the storage unit; and
controls the variable-focus lens to a focal length corresponding to a distance to any viewed object detected by the distance detection unit based on new focal length identification information stored in the storage unit.

10. The lens control method of claim 9, wherein the control unit generates new focal length identification information that has been corrected, modified, or updated based on the correction value for at least one distance of a viewed object that differs from the detection distance of the focal length identification information, and stores it in the storage unit.

11. The lens control method of claim 10, wherein, in the setting mode, the control unit uses the same correction value for the correction, modification, or update for a distance to any viewed object.

12. A lens control method of any one of claims 9 to 11, wherein the control unit comprises at least one of:
the focal length identification information including adding a refractive power such that, when the lens refractive power at a position where the distance to the viewed object is approximately 100 cm is taken as a reference, the lens refractive power at a distance of 10 cm to the observed object falls within the range of 6.96 D to 6.56 D;
the focal length identification information including adding a refractive power such that, when the lens refractive power at a position where the distance to the viewed object is approximately 100 cm is taken as a reference, the lens refractive power at a distance of approximately 50 cm to the viewed object falls within the range of 0.99 D to 0.59 D;
the focal length identification information including adding a refractive power such that, when the lens refractive power at a position where the distance to the viewed object is approximately 80 cm is taken as a reference, the lens refractive power at a distance of approximately 10 cm to the viewed object falls within the range of 6.65 D to 6.25 D;
the focal length identification information, when the lens refractive power at a position where the distance to the viewed object is approximately 80 cm is taken as a reference, adding a refractive power such that the lens refractive power at a distance of approximately 50 cm to the viewed object falls within the range of 0.68 D to 0.28 D; and
the focal length identification information including adding a refractive power such that, when the lens refractive power at a position where the distance to the viewed object is approximately 60 cm is taken as a reference, the lens refractive power at a distance of approximately 10 cm to the viewed object falls within the range of 6.49 D to 6.09 D.

13. The lens control method of any one of claims 9 to 11, **characterized by** comprising at least one of:
when the focal length identification information includes adding refractive powers such that, when the lens refractive power at a position where a distance to the viewed object is approximately X [cm] is taken as a reference, the lens refractive power at a distance of Y [cm] to the viewed object falls within the range of A to B [D],
X:100, Y:1, A:21.22, B:21.62,
X:100, Y:2, A:19.49, B:19.89,
X:100, Y:3, A:17.77, B:18.17,
X:100, Y:4, A:17.77, B:18.17,
X:100, Y:5, A:12.69, B:13.09,
X:100, Y:6, A:10.35, B:10.75,
X:100, Y:7, A:9.36, B:9.76,
X:100, Y:8, A:8.37, B:8.77,
X:100, Y:9, A:7.38, B:7.78,
X:100, Y:10, A:6.56, B:6.96,
X:100, Y:11, A:5.75, B:6.15,
X:100, Y:12, A:5.26, B:5.66,
X:100, Y:13, A:4.77, B:5.17,
X:100, Y:14, A:4.29, B:4.69,
X:100, Y:15, A:3.96, B:4.36,
X:100, Y:16, A:3.64, B:4.04,
X:100, Y:17, A:3.32, B:3.72,
X:100, Y:18, A:3.16, B:3.56,
X:100, Y:19, A:3.00, B:3.40,
X:100, Y:20, A:2.83, B:3.23,
X:100, Y:21, A:2.67, B:3.07,
X:100, Y:22, A:2.51, B:2.91,
X:100, Y:23, A:2.35, B:2.75,
X:100, Y:24, A:2.19, B:2.59,
X:100, Y:25, A:2.19, B:2.59,
X:100, Y:26, A:2.03, B:2.43,
X:100, Y:27, A:2.03, B:2.43,
X:100, Y:28, A:1.87, B:2.27,
X:100, Y:29, A:1.71, B:2.11,
X:100, Y:30, A:1.71, B:2.11,
X:100, Y:31, A:1.55, B:1.95,
X:100, Y:32, A:1.55, B:1.95,
X:100, Y:33, A:1.39, B:1.79,
X:100, Y:34, A:1.23, B:1.63,
X:100, Y:35, A:1.23, B:1.63,
X:100, Y:36, A:1.07, B:1.47,
X:100, Y:37, A:1.07, B:1.47,
X:100, Y:38, A:0.91, B:1.31,
X:100, Y:39, A:0.91, B:1.31,
X:100, Y:40, A:0.91, B:1.31,
X:100, Y:41, A:0.91, B:1.31,
X:100, Y:42, A:0.75, B:1.15,
X:100, Y:43, A:0.75, B:1.15,
X:100, Y:44, A:0.75, B:1.15,
X:100, Y:45, A:0.75, B:1.15,
X:100, Y:46, A:0.59, B:0.99,
X:100, Y:47, A:0.59, B:0.99,
X:100, Y:48, A:0.59, B:0.99,
X:100, Y:49, A:0.59, B:0.99,
X:100, Y:50, A:0.59, B:0.99,
X:100, Y:51, A:0.44, B:0.84,
X:100, Y:52, A:0.44, B:0.84,
X:100, Y:53, A:0.44, B:0.84,
X:100, Y:54, A:0.44, B:0.84,
X:100, Y:55, A:0.44, B:0.84,
X:100, Y:56, A:0.44, B:0.84,
X:100, Y:57, A:0.44, B:0.84,
X:100, Y:58, A:0.44, B:0.84,
X:100, Y:59, A:0.28, B:0.68,
X:100, Y:60, A:0.28, B:0.68,
X:100, Y:61, A:0.28, B:0.68,
X:100, Y:62, A:0.28, B:0.68,
X:100, Y:63, A:0.28, B:0.68,
X:100, Y:64, A:0.28, B:0.68,
X:100, Y:65, A:0.28, B:0.68,
X:100, Y:66, A:0.28, B:0.68,
X:100, Y:67, A:0.28, B:0.68,
X:100, Y:68, A:0.28, B:0.68,
X:100, Y:69, A:0.28, B:0.68,
X:100, Y:70, A:0.28, B:0.68,
X:100, Y:71, A:0.28, B:0.68,
X:100, Y:72, A:0.28, B:0.68,
X:100, Y:73, A:0.12, B:0.52,
X:100, Y:74, A:0.12, B:0.52,
X:100, Y:75, A:0.12, B:0.52,
X:100, Y:76, A:0.12, B:0.52,
X:100, Y:77, A:0.12, B:0.52,
X:100, Y:78, A:0.12, B:0.52,
X:100, Y:79, A:0.12, B:0.52,
X:100, Y:80, A:0.12, B:0.52,
X:100, Y:81, A:0.12, B:0.52,
X:100, Y:82, A:0.12, B:0.52,
X:100, Y:83, A:0.12, B:0.52,
X:100, Y:84, A:0.12, B:0.52,
X:100, Y:85, A:0.12, B:0.52,
X:100, Y:86, A:-0.04, B:0.36,
X:100, Y:87, A:-0.04, B:0.36,
X:100, Y:88, A:-0.04, B:0.36,
X:100, Y:89, A:-0.04, B:0.36,
X:100, Y:90, A:-0.04, B:0.36,
X:100, Y:91, A:-0.04, B:0.36,
X:100, Y:92, A:-0.04, B:0.36,
X:100, Y:93, A:-0.04, B:0.36,
X:100, Y:94, A:-0.04, B:0.36,
X:100, Y:95, A:-0.04, B:0.36,
X:100, Y:96, A:-0.04, B:0.36,
X:100, Y:97, A:-0.04, B:0.36,
X:100, Y:98, A:-0.04, B:0.36,
X:100, Y:99, A:-0.20, B:0.20,
X:100, Y:100, A:-0.20, B:0.20,
X:90, Y:1, A:21.06, B:21.46,
X:90, Y:2, A:19.33, B:19.73,
X:90, Y:3, A:17.61, B:18.01,
X:90, Y:4, A:17.61, B:18.01,
X:90, Y:5, A:12.53, B:12.93,
X:90, Y:6, A:10.19, B:10.59,
X:90, Y:7, A:9.20, B:9.60,
X:90, Y:8, A:8.21, B:8.61,
X:90, Y:9, A:7.22, B:7.62,
X:90, Y:10, A:6.40, B:6.80,
X:90, Y:11, A:5.59, B:5.99,
X:90, Y:12, A:5.10, B:5.50,
X:90, Y:13, A:4.61, B:5.01,
X:90, Y:14, A:4.13, B:4.53,
X:90, Y:15, A:3.80, B:4.20,
X:90, Y:16, A:3.48, B:3.88,
X:90, Y:17, A:3.16, B:3.56,
X:90, Y:18, A:3.00, B:3.40,
X:90, Y:19, A:2.84, B:3.24,
X:90, Y:20, A:2.68, B:3.08,
X:90, Y:21, A:2.52, B:2.92,
X:90, Y:22, A:2.35, B:2.75,
X:90, Y:23, A:2.19, B:2.59,
X:90, Y:24, A:2.03, B:2.43,
X:90, Y:25, A:2.03, B:2.43,
X:90, Y:26, A:1.87, B:2.27,
X:90, Y:27, A:1.87, B:2.27,
X:90, Y:28, A:1.71, B:2.11,
X:90, Y:29, A:1.55, B:1.95,
X:90, Y:30, A:1.55, B:1.95,
X:90, Y:31, A:1.39, B:1.79,
X:90, Y:32, A:1.39, B:1.79,
X:90, Y:33, A:1.23, B:1.63,
X:90, Y:34, A:1.07, B:1.47,
X:90, Y:35, A:1.07, B:1.47,
X:90, Y:36, A:0.91, B:1.31,
X:90, Y:37, A:0.91, B:1.31,
X:90, Y:38, A:0.75, B:1.15,
X:90, Y:39, A:0.75, B:1.15,
X:90, Y:40, A:0.75, B:1.15,
X:90, Y:41, A:0.75, B:1.15,
X:90, Y:42, A:0.60, B:1.00,
X:90, Y:43, A:0.60, B:1.00,
X:90, Y:44, A:0.60, B:1.00,
X:90, Y:45, A:0.60, B:1.00,
X:90, Y:46, A:0.44, B:0.84,
X:90, Y:47, A:0.44, B:0.84,
X:90, Y:48, A:0.44, B:0.84,
X:90, Y:49, A:0.44, B:0.84,
X:90, Y:50, A:0.44, B:0.84,
X:90, Y:51, A:0.28, B:0.68,
X:90, Y:52, A:0.28, B:0.68,
X:90, Y:53, A:0.28, B:0.68,
X:90, Y:54, A:0.28, B:0.68,
X:90, Y:55, A:0.28, B:0.68,
X:90, Y:56, A:0.28, B:0.68,
X:90, Y:57, A:0.28, B:0.68,
X:90, Y:58, A:0.28, B:0.68,
X:90, Y:59, A:0.12, B:0.52,
X:90, Y:60, A:0.12, B:0.52,
X:90, Y:61, A:0.12, B:0.52,
X:90, Y:62, A:0.12, B:0.52,
X:90, Y:63, A:0.12, B:0.52,
X:90, Y:64, A:0.12, B:0.52,
X:90, Y:65, A:0.12, B:0.52,
X:90, Y:66, A:0.12, B:0.52,
X:90, Y:67, A:0.12, B:0.52,
X:90, Y:68, A:0.12, B:0.52,
X:90, Y:69, A:0.12, B:0.52,
X:90, Y:70, A:0.12, B:0.52,
X:90, Y:71, A:0.12, B:0.52,
X:90, Y:72, A:0.12, B:0.52,
X:90, Y:73, A:-0.04, B:0.36,
X:90, Y:74, A:-0.04, B:0.36,
X:90, Y:75, A:-0.04, B:0.36,
X:90, Y:76, A:-0.04, B:0.36,
X:90, Y:77, A:-0.04, B:0.36,
X:90, Y:78, A:-0.04, B:0.36,
X:90, Y:79, A:-0.04, B:0.36,
X:90, Y:80, A:-0.04, B:0.36,
X:90, Y:81, A:-0.04, B:0.36,
X:90, Y:82, A:-0.04, B:0.36,
X:90, Y:83, A:-0.04, B:0.36,
X:90, Y:84, A:-0.04, B:0.36,
X:90, Y:85, A:-0.04, B:0.36,
X:90, Y:86, A:-0.20, B:0.20,
X:90, Y:87, A:-0.20, B:0.20,
X:90, Y:88, A:-0.20, B:0.20,
X:90, Y:89, A:-0.20, B:0.20,
X:90, Y:90, A:-0.20, B:0.20,
X:90, Y:91, A:-0.20, B:0.20,
X:90, Y:92, A:-0.20, B:0.20,
X:90, Y:93, A:-0.20, B:0.20,
X:90, Y:94, A:-0.20, B:0.20,
X:90, Y:95, A:-0.20, B:0.20,
X:90, Y:96, A:-0.20, B:0.20,
X:90, Y:97, A:-0.20, B:0.20,
X:90, Y:98, A:-0.20, B:0.20,
X:90, Y:99, A:-0.36, B:0.04,
X:90, Y:100, A:-0.36, B:0.0,
X:80, Y:1, A:20.90, B:21.30,
X:80, Y:2, A:19.17, B:19.57,
X:80, Y:3, A:17.45, B:17.85,
X:80, Y:4, A:17.45, B:17.85,
X:80, Y:5, A:12.37, B:12.77,
X:80, Y:6, A:10.04, B:10.44,
X:80, Y:7, A:9.04, B:9.44,
X:80, Y:8, A:8.05, B:8.45,
X:80, Y:9, A:7.06, B:7.46,
X:80, Y:10, A:6.25, B:6.65,
X:80, Y:11, A:5.43, B:5.83,
X:80, Y:12, A:4.94, B:5.34,
X:80, Y:13, A:4.45, B:4.85,
X:80, Y:14, A:3.97, B:4.37,
X:80, Y:15, A:3.65, B:4.05,
X:80, Y:16, A:3.32, B:3.72,
X:80, Y:17, A:3.00, B:3.40,
X:80, Y:18, A:2.84, B:3.24,
X:80, Y:19, A:2.68, B:3.08,
X:80, Y:20, A:2.52, B:2.92,
X:80, Y:21, A:2.36, B:2.76,
X:80, Y:22, A:2.20, B:2.60,
X:80, Y:23, A:2.04, B:2.44,
X:80, Y:24, A:1.87, B:2.27,
X:80, Y:25, A:1.87, B:2.27,
X:80, Y:26, A:1.71, B:2.11,
X:80, Y:27, A:1.71, B:2.11,
X:80, Y:28, A:1.55, B:1.95,
X:80, Y:29, A:1.39, B:1.79,
X:80, Y:30, A:1.39, B:1.79,
X:80, Y:31, A:1.23, B:1.63,
X:80, Y:32, A:1.23, B:1.63,
X:80, Y:33, A:1.07, B:1.47,
X:80, Y:34, A:0.91, B:1.31,
X:80, Y:35, A:0.91, B:1.31,
X:80, Y:36, A:0.76, B:1.16,
X:80, Y:37, A:0.76, B:1.16,
X:80, Y:38, A:0.60, B:1.00,
X:80, Y:39, A:0.60, B:1.00,
X:80, Y:40, A:0.60, B:1.00,
X:80, Y:41, A:0.60, B:1.00,
X:80, Y:42, A:0.44, B:0.84,
X:80, Y:43, A:0.44, B:0.84,
X:80, Y:44, A:0.44, B:0.84,
X:80, Y:45, A:0.44, B:0.84,,
X:80, Y:46, A:0.28, B:0.68,
X:80, Y:47, A:0.28, B:0.68,
X:80, Y:48, A:0.28, B:0.68,
X:80, Y:49, A:0.28, B:0.68,
X:80, Y:50, A:0.28, B:0.68,
X:80, Y:51, A:0.12, B:0.52,
X:80, Y:52, A:0.12, B:0.52,
X:80, Y:53, A:0.12, B:0.52,
X:80, Y:54, A:0.12, B:0.52,
X:80, Y:55, A:0.12, B:0.52,
X:80, Y:56, A:0.12, B:0.52,
X:80, Y:57, A:0.12, B:0.52,
X:80, Y:58, A:0.12, B:0.52,
X:80, Y:59, A:-0.04, B:0.36,
X:80, Y:60, A:-0.04, B:0.36,
X:80, Y:61, A:-0.04, B:0.36,
X:80, Y:62, A:-0.04, B:0.36,
X:80, Y:63, A:-0.04, B:0.36,
X:80, Y:64, A:-0.04, B:0.36,
X:80, Y:65, A:-0.04, B:0.36,
X:80, Y:66, A:-0.04, B:0.36,
X:80, Y:67, A:-0.04, B:0.36,
X:80, Y:68, A:-0.04, B:0.36,
X:80, Y:69, A:-0.04, B:0.36,
X:80, Y:70, A:-0.04, B:0.36,
X:80, Y:71, A:-0.04, B:0.36,
X:80, Y:72, A:-0.04, B:0.36,
X:80, Y:73, A:-0.02, B:0.20,
X:80, Y:74, A:-0.02, B:0.20,
X:80, Y:75, A:-0.02, B:0.20,
X:80, Y:76, A:-0.02, B:0.20,
X:80, Y:77, A:-0.02, B:0.20,
X:80, Y:78, A:-0.02, B:0.20,
X:80, Y:79, A:-0.02, B:0.20,
X:80, Y:80, A:-0.02, B:0.20,
X:80, Y:81, A:-0.02, B:0.20,
X:80, Y:82, A:-0.02, B:0.20,
X:80, Y:83, A:-0.02, B:0.20,
X:80, Y:84, A:-0.02, B:0.20,
X:80, Y:85, A:-0.02, B:0.20,
X:80, Y:86, A:-0.36, B:0.04,
X:80, Y:87, A:-0.36, B:0.04,
X:80, Y:88, A:-0.36, B:0.04,
X:80, Y:89, A:-0.36, B:0.04,
X:80, Y:90, A:-0.36, B:0.04,
X:80, Y:91, A:-0.36, B:0.04,
X:80, Y:92, A:-0.36, B:0.04,
X:80, Y:93, A:-0.36, B:0.04,
X:80, Y:94, A:-0.36, B:0.04,
X:80, Y:95, A:-0.36, B:0.04,
X:80, Y:96, A:-0.36, B:0.04,
X:80, Y:97, A:-0.36, B:0.04,
X:80, Y:98, A:-0.36, B:0.04,
X:80, Y:99, A:-0.52, B:-0.12,
X:80, Y:100, A:-0.52, B:-0.12,
X:70, Y:1, A:20.74, B:21.14,
X:70, Y:2, A:19.01, B:19.41,
X:70, Y:3, A:17.29, B:17.69,
X:70, Y:4, A:17.29, B:17.69,
X:70, Y:5, A:12.21, B:12.61,
X:70, Y:6, A:9.88, B:10.28,
X:70, Y:7, A:8.88, B:9.28,
X:70, Y:8, A:7.89, B:8.29,
X:70, Y:9, A:6.91, B:7.31,
X:70, Y:10, A:6.09, B:6.49,
X:70, Y:11, A:5.27, B:5.67,
X:70, Y:12, A:4.78, B:5.18,
X:70, Y:13, A:4.30, B:4.70,
X:70, Y:14, A:3.81, B:4.21,
X:70, Y:15, A:3.49, B:3.89,
X:70, Y:16, A:3.16, B:3.56,
X:70, Y:17, A:2.84, B:3.24,
X:70, Y:18, A:2.68, B:3.08,
X:70, Y:19, A:2.52, B:2.92,
X:70, Y:20, A:2.36, B:2.76,
X:70, Y:21, A:2.20, B:2.60,
X:70, Y:22, A:2.04, B:2.44,
X:70, Y:23, A:1.88, B:2.28,
X:70, Y:24, A:1.72, B:2.12,
X:70, Y:25, A:1.72, B:2.12,
X:70, Y:26, A:1.56, B:1.96,
X:70, Y:27, A:1.56, B:1.96,
X:70, Y:28, A:1.40, B:1.80,
X:70, Y:29, A:1.24, B:1.64,
X:70, Y:30, A:1.24, B:1.64,
X:70, Y:31, A:1.08, B:1.48,
X:70, Y:32, A:1.08, B:1.48,
X:70, Y:33, A:0.92, B:1.32,
X:70, Y:34, A:0.76, B:1.16,
X:70, Y:35, A:0.76, B:1.16,
X:70, Y:36, A:0.60, B:1.00,
X:70, Y:37, A:0.60, B:1.00,
X:70, Y:38, A:0.44, B:0.84,
X:70, Y:39, A:0.44, B:0.84,
X:70, Y:40, A:0.44, B:0.84,
X:70, Y:41, A:0.44, B:0.84,
X:70, Y:42, A:0.28, B:0.68,
X:70, Y:43, A:0.28, B:0.68,
X:70, Y:44, A:0.28, B:0.68,
X:70, Y:45, A:0.28, B:0.68,
X:70, Y:46, A:0.12, B:0.52,
X:70, Y:47, A:0.12, B:0.52,
X:70, Y:48, A:0.12, B:0.52,
X:70, Y:49, A:0.12, B:0.52,
X:70, Y:50, A:0.12, B:0.52,
X:70, Y:51, A:-0.04, B:0.36,
X:70, Y:52, A:-0.04, B:0.36,
X:70, Y:53, A:-0.04, B:0.36,
X:70, Y:54, A:-0.04, B:0.36,
X:70, Y:55, A:-0.04, B:0.36,
X:70, Y:56, A:-0.04, B:0.36,
X:70, Y:57, A:-0.04, B:0.36,
X:70, Y:58, A:-0.04, B:0.36,
X:70, Y:59, A:-0.20, B:0.20,
X:70, Y:60, A:-0.20, B:0.20,
X:70, Y:61, A:-0.20, B:0.20,
X:70, Y:62, A:-0.20, B:0.20,
X:70, Y:63, A:-0.20, B:0.20,
X:70, Y:64, A:-0.20, B:0.20,
X:70, Y:65, A:-0.20, B:0.20,
X:70, Y:66, A:-0.20, B:0.20,
X:70, Y:67, A:-0.20, B:0.20,
X:70, Y:68, A:-0.20, B:0.20,
X:70, Y:69, A:-0.20, B:0.20,
X:70, Y:70, A:-0.20, B:0.20,
X:70, Y:71, A:-0.20, B:0.20,
X:70, Y:72, A:-0.20, B:0.20,
X:70, Y:73, A:-0.36, B:0.04,
X:70, Y:74, A:-0.36, B:0.04,
X:70, Y:75, A:-0.36, B:0.04,
X:70, Y:76, A:-0.36, B:0.04,
X:70, Y:77, A:-0.36, B:0.04,
X:70, Y:78, A:-0.36, B:0.04,
X:70, Y:79, A:-0.36, B:0.04,
X:70, Y:80, A:-0.36, B:0.04,
X:70, Y:81, A:-0.36, B:0.04,
X:70, Y:82, A:-0.36, B:0.04,
X:70, Y:83, A:-0.36, B:0.04,
X:70, Y:84, A:-0.36, B:0.04,
X:70, Y:85, A:-0.36, B:0.04,
X:70, Y:86, A:-0.52, B:-0.12,
X:70, Y:87, A:-0.52, B:-0.12,
X:70, Y:88, A:-0.52, B:-0.12,
X:70, Y:89, A:-0.52, B:-0.12,
X:70, Y:90, A:-0.52, B:-0.12,
X:70, Y:91, A:-0.52, B:-0.12,
X:70, Y:92, A:-0.52, B:-0.12,
X:70, Y:93, A:-0.52, B:-0.12,
X:70, Y:94, A:-0.52, B:-0.12,
X:70, Y:95, A:-0.52, B:-0.12,
X:70, Y:96, A:-0.52, B:-0.12,
X:70, Y:97, A:-0.52, B:-0.12,
X:70, Y:98, A:-0.52, B:-0.12,
X:70, Y:99, A:-0.68, B:-0.28,
X:70, Y:100, A:-0.68, B:-0.28,
X:60, Y:1, A:20.74, B:21.14,
X:60, Y:2, A:19.01, B:19.41,
X:60, Y:3, A:17.29, B:17.69,
X:60, Y:4, A:17.29, B:17.69,
X:60, Y:5, A:12.21, B:12.61,
X:60, Y:6, A:9.88, B:10.28,
X:60, Y:7, A:8.88, B:9.28,
X:60, Y:8, A:7.89, B:8.29,
X:60, Y:9, A:6.91, B:7.31,
X:60, Y:10, A:6.09, B:6.49,
X:60, Y:11, A:5.27, B:5.67,
X:60, Y:12, A:4.78, B:5.18,
X:60, Y:13, A:4.30, B:4.70,
X:60, Y:14, A:3.81, B:4.21,
X:60, Y:15, A:3.49, B:3.89,
X:60, Y:16, A:3.16, B:3.56,
X:60, Y:17, A:2.84, B:3.24,
X:60, Y:18, A:2.68, B:3.08,
X:60, Y:19, A:2.52, B:2.92,
X:60, Y:20, A:2.36, B:2.76,
X:60, Y:21, A:2.20, B:2.60,
X:60, Y:22, A:2.04, B:2.44,
X:60, Y:23, A:1.88, B:2.28,
X:60, Y:24, A:1.72, B:2.12,
X:60, Y:25, A:1.72, B:2.12,
X:60, Y:26, A:1.56, B:1.96,
X:60, Y:27, A:1.56, B:1.96,
X:60, Y:28, A:1.40, B:1.80,
X:60, Y:29, A:1.24, B:1.64,
X:60, Y:30, A:1.24, B:1.64,
X:60, Y:31, A:1.08, B:1.48,
X:60, Y:32, A:1.08, B:1.48,
X:60, Y:33, A:0.92, B:1.32,
X:60, Y:34, A:0.76, B:1.16,
X:60, Y:35, A:0.76, B:1.16,
X:60, Y:36, A:0.60, B:1.00,
X:60, Y:37, A:0.60, B:1.00,
X:60, Y:38, A:0.44, B:0.84,
X:60, Y:39, A:0.44, B:0.84,
X:60, Y:40, A:0.44, B:0.84,
X:60, Y:41, A:0.44, B:0.84,
X:60, Y:42, A:0.28, B:0.68,
X:60, Y:43, A:0.28, B:0.68,
X:60, Y:44, A:0.28, B:0.68,
X:60, Y:45, A:0.28, B:0.68,
X:60, Y:46, A:0.12, B:0.52,
X:60, Y:47, A:0.12, B:0.52,
X:60, Y:48, A:0.12, B:0.52,
X:60, Y:49, A:0.12, B:0.52,
X:60, Y:50, A:0.12, B:0.52,
X:60, Y:51, A:-0.04, B:0.36,
X:60, Y:52, A:-0.04, B:0.36,
X:60, Y:53, A:-0.04, B:0.36,
X:60, Y:54, A:-0.04, B:0.36,
X:60, Y:55, A:-0.04, B:0.36,
X:60, Y:56, A:-0.04, B:0.36,
X:60, Y:57, A:-0.04, B:0.36,
X:60, Y:58, A:-0.04, B:0.36,
X:60, Y:59, A:-0.20, B:0.20,
X:60, Y:60, A:-0.20, B:0.20,
X:60, Y:61, A:-0.20, B:0.20,
X:60, Y:62, A:-0.20, B:0.20,
X:60, Y:63, A:-0.20, B:0.20,
X:60, Y:64, A:-0.20, B:0.20,
X:60, Y:65, A:-0.20, B:0.20,
X:60, Y:66, A:-0.20, B:0.20,
X:60, Y:67, A:-0.20, B:0.20,
X:60, Y:68, A:-0.20, B:0.20,
X:60, Y:69, A:-0.20, B:0.20,
X:60, Y:70, A:-0.20, B:0.20,
X:60, Y:71, A:-0.20, B:0.20,
X:60, Y:72, A:-0.20, B:0.20,
X:60, Y:73, A:-0.36, B:0.04,
X:60, Y:74, A:-0.36, B:0.04,
X:60, Y:75, A:-0.36, B:0.04,
X:60, Y:76, A:-0.36, B:0.04,
X:60, Y:77, A:-0.36, B:0.04,
X:60, Y:78, A:-0.36, B:0.04,
X:60, Y:79, A:-0.36, B:0.04,
X:60, Y:80, A:-0.36, B:0.04,
X:60, Y:81, A:-0.36, B:0.04,
X:60, Y:82, A:-0.36, B:0.04,
X:60, Y:83, A:-0.36, B:0.04,
X:60, Y:84, A:-0.36, B:0.04,
X:60, Y:85, A:-0.36, B:0.04,
X:60, Y:86, A:-0.52, B:-0.12,
X:60, Y:87, A:-0.52, B:-0.12,
X:60, Y:88, A:-0.52, B:-0.12,
X:60, Y:89, A:-0.52, B:-0.12,
X:60, Y:90, A:-0.52, B:-0.12,
X:60, Y:91, A:-0.52, B:-0.12,
X:60, Y:92, A:-0.52, B:-0.12,
X:60, Y:93, A:-0.52, B:-0.12,
X:60, Y:94, A:-0.52, B:-0.12,
X:60, Y:95, A:-0.52, B:-0.12,
X:60, Y:96, A:-0.52, B:-0.12,
X:60, Y:97, A:-0.52, B:-0.12,
X:60, Y:98, A:-0.52, B:-0.12,
X:60, Y:99, A:-0.68, B:-0.28,
X:60, Y:100, A:-0.68, B:-0.28,
X:50, Y:1, A:20.42, B:20.82,
X:50, Y:2, A:18.69, B:19.09,
X:50, Y:3, A:16.98, B:17.38,
X:50, Y:4, A:16.98, B:17.38,
X:50, Y:5, A:11.89, B:12.29,
X:50, Y:6, A:9.56, B:9.96,
X:50, Y:7, A:8.56, B:8.96,
X:50, Y:8, A:7.57, B:7.97,
X:50, Y:9, A:6.59, B:6.99,
X:50, Y:10, A:5.77, B:6.17,
X:50, Y:11, A:4.95, B:5.35,
X:50, Y:12, A:4.46, B:4.86,
X:50, Y:13, A:3.98, B:4.38,
X:50, Y:14, A:3.49, B:3.89,
X:50, Y:15, A:3.17, B:3.57,
X:50, Y:16, A:2.85, B:3.25,
X:50, Y:17, A:2.52, B:2.92,
X:50, Y:18, A:2.36, B:2.76,
X:50, Y:19, A:2.20, B:2.60,
X:50, Y:20, A:2.04, B:2.44,
X:50, Y:21, A:1.88, B:2.28,
X:50, Y:22, A:1.72, B:2.12,
X:50, Y:23, A:1.56, B:1.96,
X:50, Y:24, A:1.40, B:1.80,
X:50, Y:25, A:1.40, B:1.80,
X:50, Y:26, A:1.24, B:1.64,
X:50, Y:27, A:1.24, B:1.64,
X:50, Y:28, A:1.08, B:1.48,
X:50, Y:29, A:0.92, B:1.32,
X:50, Y:30, A:0.92, B:1.32,
X:50, Y:31, A:0.76, B:1.16,
X:50, Y:32, A:0.76, B:1.16,
X:50, Y:33, A:0.60, B:1.00,
X:50, Y:34, A:0.44, B:0.84,
X:50, Y:35, A:0.44, B:0.84,
X:50, Y:36, A:0.28, B:0.68,
X:50, Y:37, A:0.28, B:0.68,
X:50, Y:38, A:0.12, B:0.52,
X:50, Y:39, A:0.12, B:0.52,
X:50, Y:40, A:0.12, B:0.52,
X:50, Y:41, A:0.12, B:0.52,
X:50, Y:42, A:-0.04, B:0.36,
X:50, Y:43, A:-0.04, B:0.36,
X:50, Y:44, A:-0.04, B:0.36,
X:50, Y:45, A:-0.04, B:0.36,
X:50, Y:46, A:-0.20, B:0.20,
X:50, Y:47, A:-0.20, B:0.20,
X:50, Y:48, A:-0.20, B:0.20,
X:50, Y:49, A:-0.20, B:0.20,
X:50, Y:50, A:-0.20, B:0.20,
X:50, Y:51, A:-0.36, B:0.04,
X:50, Y:52, A:-0.36, B:0.04,
X:50, Y:53, A:-0.36, B:0.04,
X:50, Y:54, A:-0.36, B:0.04,
X:50, Y:55, A:-0.36, B:0.04,
X:50, Y:56, A:-0.36, B:0.04,
X:50, Y:57, A:-0.36, B:0.04,
X:50, Y:58, A:-0.36, B:0.04,
X:50, Y:59, A:-0.52, B:-0.12,
X:50, Y:60, A:-0.52, B:-0.12,
X:50, Y:61, A:-0.52, B:-0.12,
X:50, Y:62, A:-0.52, B:-0.12,
X:50, Y:63, A:-0.52, B:-0.12,
X:50, Y:64, A:-0.52, B:-0.12,
X:50, Y:65, A:-0.52, B:-0.12,
X:50, Y:66, A:-0.52, B:-0.12,
X:50, Y:67, A:-0.52, B:-0.12,
X:50, Y:68, A:-0.52, B:-0.12,
X:50, Y:69, A:-0.52, B:-0.12,
X:50, Y:70, A:-0.52, B:-0.12,
X:50, Y:71, A:-0.52, B:-0.12,
X:50, Y:72, A:-0.52, B:-0.12,
X:50, Y:73, A:-0.68, B:-0.28,
X:50, Y:74, A:-0.68, B:-0.28,
X:50, Y:75, A:-0.68, B:-0.28,
X:50, Y:76, A:-0.68, B:-0.28,
X:50, Y:77, A:-0.68, B:-0.28,
X:50, Y:78, A:-0.68, B:-0.28,
X:50, Y:79, A:-0.68, B:-0.28,
X:50, Y:80, A:-0.68, B:-0.28,
X:50, Y:81, A:-0.68, B:-0.28,
X:50, Y:82, A:-0.68, B:-0.28,
X:50, Y:83, A:-0.68, B:-0.28,
X:50, Y:84, A:-0.68, B:-0.28,
X:50, Y:85, A:-0.68, B:-0.28,
X:50, Y:86, A:-0.84, B:-0.44,
X:50, Y:87, A:-0.84, B:-0.44,
X:50, Y:88, A:-0.84, B:-0.44,
X:50, Y:89, A:-0.84, B:-0.44,
X:50, Y:90, A:-0.84, B:-0.44,
X:50, Y:91, A:-0.84, B:-0.44,
X:50, Y:92, A:-0.84, B:-0.44,
X:50, Y:93, A:-0.84, B:-0.44,
X:50, Y:94, A:-0.84, B:-0.44,
X:50, Y:95, A:-0.84, B:-0.44,
X:50, Y:96, A:-0.84, B:-0.44,
X:50, Y:97, A:-0.84, B:-0.44,
X:50, Y:98, A:-0.84, B:-0.44,
X:50, Y:99, A:-0.99, B:-0.59,
X:50, Y:100, A:-0.99, B:-0.59,
X:40, Y:1, A:20.10, B:20.50,
X:40, Y:2, A:18.37, B:18.77,
X:40, Y:3, A:16.66, B:17.06,
X:40, Y:4, A:16.66, B:17.06,
X:40, Y:5, A:11.58, B:11.98,
X:40, Y:6, A:9.24, B:9.64,
X:40, Y:7, A:8.24, B:8.64,
X:40, Y:8, A:7.25, B:7.65,
X:40, Y:9, A:6.27, B:6.67,
X:40, Y:10, A:5.45, B:5.85,
X:40, Y:11, A:4.63, B:5.03,
X:40, Y:12, A:4.15, B:4.55,
X:40, Y:13, A:3.66, B:4.06,
X:40, Y:14, A:3.17, B:3.57,
X:40, Y:15, A:2.85, B:3.25,
X:40, Y:16, A:2.53, B:2.93,
X:40, Y:17, A:2.20, B:2.60,
X:40, Y:18, A:2.04, B:2.44,
X:40, Y:19, A:1.88, B:2.28,
X:40, Y:20, A:1.72, B:2.12,
X:40, Y:21, A:1.56, B:1.96,
X:40, Y:22, A:1.40, B:1.80,
X:40, Y:23, A:1.24, B:1.64,
X:40, Y:24, A:1.08, B:1.48,
X:40, Y:25, A:1.08, B:1.48,
X:40, Y:26, A:0.92, B:1.32,
X:40, Y:27, A:0.92, B:1.32,
X:40, Y:28, A:0.76, B:1.16,
X:40, Y:29, A:0.60, B:1.00,
X:40, Y:30, A:0.60, B:1.00,
X:40, Y:31, A:0.44, B:0.84,
X:40, Y:32, A:0.44, B:0.84,
X:40, Y:33, A:0.28, B:0.68,
X:40, Y:34, A:0.12, B:0.52,
X:40, Y:35, A:0.12, B:0.52,
X:40, Y:36, A:-0.04, B:0.36,
X:40, Y:37, A:-0.04, B:0.36,
X:40, Y:38, A:-0.20, B:0.20,
X:40, Y:39, A:-0.20, B:0.20,
X:40, Y:40, A:-0.20, B:0.20,
X:40, Y:41, A:-0.20, B:0.20,
X:40, Y:42, A:-0.36, B:0.04,
X:40, Y:43, A:-0.36, B:0.04,
X:40, Y:44, A:-0.36, B:0.04,
X:40, Y:45, A:-0.36, B:0.04,
X:40, Y:46, A:-0.52, B:-0.12,
X:40, Y:47, A:-0.52, B:-0.12,
X:40, Y:48, A:-0.52, B:-0.12,
X:40, Y:49, A:-0.52, B:-0.12,
X:40, Y:50, A:-0.52, B:-0.12,
X:40, Y:51, A:-0.68, B:-0.28,
X:40, Y:52, A:-0.68, B:-0.28,
X:40, Y:53, A:-0.68, B:-0.28,
X:40, Y:54, A:-0.68, B:-0.28,
X:40, Y:55, A:-0.68, B:-0.28,
X:40, Y:56, A:-0.68, B:-0.28,
X:40, Y:57, A:-0.68, B:-0.28,
X:40, Y:58, A:-0.68, B:-0.28,
X:40, Y:59, A:-0.84, B:-0.44,
X:40, Y:60, A:-0.84, B:-0.44,
X:40, Y:61, A:-0.84, B:-0.44,
X:40, Y:62, A:-0.84, B:-0.44,
X:40, Y:63, A:-0.84, B:-0.44,
X:40, Y:64, A:-0.84, B:-0.44,
X:40, Y:65, A:-0.84, B:-0.44,
X:40, Y:66, A:-0.84, B:-0.44,
X:40, Y:67, A:-0.84, B:-0.44,
X:40, Y:68, A:-0.84, B:-0.44,
X:40, Y:69, A:-0.84, B:-0.44,
X:40, Y:70, A:-0.84, B:-0.44,
X:40, Y:71, A:-0.84, B:-0.44,
X:40, Y:72, A:-0.84, B:-0.44,
X:40, Y:73, A:-1.00, B:-0.60,
X:40, Y:74, A:-1.00, B:-0.60,
X:40, Y:75, A:-1.00, B:-0.60,
X:40, Y:76, A:-1.00, B:-0.60,
X:40, Y:77, A:-1.00, B:-0.60,
X:40, Y:78, A:-1.00, B:-0.60,
X:40, Y:79, A:-1.00, B:-0.60,
X:40, Y:80, A:-1.00, B:-0.60,
X:40, Y:81, A:-1.00, B:-0.60,
X:40, Y:82, A:-1.00, B:-0.60,
X:40, Y:83, A:-1.00, B:-0.60,
X:40, Y:84, A:-1.00, B:-0.60,
X:40, Y:85, A:-1.00, B:-0.60,
X:40, Y:86, A:-1.15, B:-0.75,
X:40, Y:87, A:-1.15, B:-0.75,
X:40, Y:88, A:-1.15, B:-0.75,
X:40, Y:89, A:-1.15, B:-0.75,
X:40, Y:90, A:-1.15, B:-0.75,
X:40, Y:91, A:-1.15, B:-0.75,
X:40, Y:92, A:-1.15, B:-0.75,
X:40, Y:93, A:-1.15, B:-0.75,
X:40, Y:94, A:-1.15, B:-0.75,
X:40, Y:95, A:-1.15, B:-0.75,
X:40, Y:96, A:-1.15, B:-0.75,
X:40, Y:97, A:-1.15, B:-0.75,
X:40, Y:98, A:-1.15, B:-0.75,
X:40, Y:99, A:-1.31, B:-0.91,
X:40, Y:100, A:-1.31, B:-0.91,
X:30, Y:1, A:19.30, B:19.70,
X:30, Y:2, A:17.58, B:17.98,
X:30, Y:3, A:15.86, B:16.26,
X:30, Y:4, A:15.86, B:16.26,
X:30, Y:5, A:10.78, B:11.18,
X:30, Y:6, A:8.44, B:8.84,
X:30, Y:7, A:7.45, B:7.85,
X:30, Y:8, A:6.46, B:6.86,
X:30, Y:9, A:5.47, B:5.87,
X:30, Y:10, A:4.65, B:5.05,
X:30, Y:11, A:3.84, B:4.24,
X:30, Y:12, A:3.35, B:3.75,
X:30, Y:13, A:2.86, B:3.26,
X:30, Y:14, A:2.37, B:2.77,
X:30, Y:15, A:2.05, B:2.45,
X:30, Y:16, A:1.73, B:2.13,
X:30, Y:17, A:1.41, B:1.81,
X:30, Y:18, A:1.24, B:1.64,
X:30, Y:19, A:1.08, B:1.48,
X:30, Y:20, A:0.92, B:1.32,
X:30, Y:21, A:0.76, B:1.16,
X:30, Y:22, A:0.60, B:1.00,
X:30, Y:23, A:0.44, B:0.84,
X:30, Y:24, A:0.28, B:0.68,
X:30, Y:25, A:0.28, B:0.68,
X:30, Y:26, A:0.12, B:0.52,
X:30, Y:27, A:0.12, B:0.52,
X:30, Y:28, A:-0.04, B:0.36,
X:30, Y:29, A:-0.20, B:0.20,
X:30, Y:30, A:-0.20, B:0.20,
X:30, Y:31, A:-0.36, B:0.04,
X:30, Y:32, A:-0.36, B:0.04,
X:30, Y:33, A:-0.52, B:-0.12,
X:30, Y:34, A:-0.68, B:-0.28,
X:30, Y:35, A:-0.68, B:-0.28,
X:30, Y:36, A:-0.84, B:-0.44,
X:30, Y:37, A:-0.84, B:-0.44,
X:30, Y:38, A:-1.00, B:-0.60,
X:30, Y:39, A:-1.00, B:-0.60,
X:30, Y:40, A:-1.00, B:-0.60,
X:30, Y:41, A:-1.00, B:-0.60,
X:30, Y:42, A:-1.16, B:-0.76,
X:30, Y:43, A:-1.16, B:-0.76,
X:30, Y:44, A:-1.16, B:-0.76,
X:30, Y:45, A:-1.16, B:-0.76,
X:30, Y:46, A:-1.32, B:-0.92,
X:30, Y:47, A:-1.32, B:-0.92,
X:30, Y:48, A:-1.32, B:-0.92,
X:30, Y:49, A:-1.32, B:-0.92,
X:30, Y:50, A:-1.32, B:-0.92,
X:30, Y:51, A:-1.48, B:-1.08,
X:30, Y:52, A:-1.48, B:-1.08,
X:30, Y:53, A:-1.48, B:-1.08,
X:30, Y:54, A:-1.48, B:-1.08,
X:30, Y:55, A:-1.48, B:-1.08,
X:30, Y:56, A:-1.48, B:-1.08,
X:30, Y:57, A:-1.48, B:-1.08,
X:30, Y:58, A:-1.48, B:-1.08,
X:30, Y:59, A:-1.64, B:-1.24,
X:30, Y:60, A:-1.64, B:-1.24,
X:30, Y:61, A:-1.64, B:-1.24,
X:30, Y:62, A:-1.64, B:-1.24,
X:30, Y:63, A:-1.64, B:-1.24,
X:30, Y:64, A:-1.64, B:-1.24,
X:30, Y:65, A:-1.64, B:-1.24,
X:30, Y:66, A:-1.64, B:-1.24,
X:30, Y:67, A:-1.64, B:-1.24,
X:30, Y:68, A:-1.64, B:-1.24,
X:30, Y:69, A:-1.64, B:-1.24,
X:30, Y:70, A:-1.64, B:-1.24,
X:30, Y:71, A:-1.64, B:-1.24,
X:30, Y:72, A:-1.64, B:-1.24,
X:30, Y:73, A:-1.79, B:-1.39,
X:30, Y:74, A:-1.79, B:-1.39,
X:30, Y:75, A:-1.79, B:-1.39,
X:30, Y:76, A:-1.79, B:-1.39,
X:30, Y:77, A:-1.79, B:-1.39,
X:30, Y:78, A:-1.79, B:-1.39,
X:30, Y:79, A:-1.79, B:-1.39,
X:30, Y:80, A:-1.79, B:-1.39,
X:30, Y:81, A:-1.79, B:-1.39,
X:30, Y:82, A:-1.79, B:-1.39,
X:30, Y:83, A:-1.79, B:-1.39,
X:30, Y:84, A:-1.79, B:-1.39,
X:30, Y:85, A:-1.79, B:-1.39,
X:30, Y:86, A:-1.95, B:-1.55,
X:30, Y:87, A:-1.95, B:-1.55,
X:30, Y:88, A:-1.95, B:-1.55,
X:30, Y:89, A:-1.95, B:-1.55,
X:30, Y:90, A:-1.95, B:-1.55,
X:30, Y:91, A:-1.95, B:-1.55,
X:30, Y:92, A:-1.95, B:-1.55,
X:30, Y:93, A:-1.95, B:-1.55,
X:30, Y:94, A:-1.95, B:-1.55,
X:30, Y:95, A:-1.95, B:-1.55,
X:30, Y:96, A:-1.95, B:-1.55,
X:30, Y:97, A:-1.95, B:-1.55,
X:30, Y:98, A:-1.95, B:-1.55,
X:30, Y:99, A:-2.11, B:-1.71,
X:30, Y:100, A:-2.11, B:-1.71,
X:20, Y:1, A:18.18, B:18.58,
X:20, Y:2, A:16.45, B:16.85,
X:20, Y:3, A:14.74, B:15.14,
X:20, Y:4, A:14.74, B:15.14,
X:20, Y:5, A:9.65, B:10.05,
X:20, Y:6, A:7.32, B:7.72,
X:20, Y:7, A:6.32, B:6.72,
X:20, Y:8, A:5.33, B:5.73,
X:20, Y:9, A:4.35, B:4.75,
X:20, Y:10, A:3.53, B:3.93,
X:20, Y:11, A:2.71, B:3.11,
X:20, Y:12, A:2.22, B:2.62,
X:20, Y:13, A:1.74, B:2.14,
X:20, Y:14, A:1.25, B:1.65,
X:20, Y:15, A:0.93, B:1.33,
X:20, Y:16, A:0.61, B:1.01,
X:20, Y:17, A:0.28, B:0.68,
X:20, Y:18, A:0.12, B:0.52,
X:20, Y:19, A:-0.04, B:0.36,
X:20, Y:20, A:-0.20, B:0.20,
X:20, Y:21, A:-0.36, B:0.04,
X:20, Y:22, A:-0.52, B:-0.12,
X:20, Y:23, A:-0.68, B:-0.28,
X:20, Y:24, A:-0.84, B:0.44,
X:20, Y:25, A:-0.84, B:0.44,
X:20, Y:26, A:-1.00, B:-0.60,
X:20, Y:27, A:-1.00, B:-0.60,
X:20, Y:28, A:-1.16, B:-0.76,
X:20, Y:29, A:-1.32, B:-0.92,
X:20, Y:30, A:-1.32, B:-0.92,
X:20, Y:31, A:-1.48, B:-1.08,
X:20, Y:32, A:-1.48, B:-1.08,
X:20, Y:33, A:-1.64, B:-1.24,
X:20, Y:34, A:-1.80, B:-1.40,
X:20, Y:35, A:-1.80, B:-1.40,
X:20, Y:36, A:-1.96, B:-1.56,
X:20, Y:37, A:-1.96, B:-1.56,
X:20, Y:38, A:-2.12, B:-1.72,
X:20, Y:39, A:-2.12, B:-1.72,
X:20, Y:40, A:-2.12, B:-1.72,
X:20, Y:41, A:-2.12, B:-1.72,
X:20, Y:42, A:-2.28, B:-1.88,
X:20, Y:43, A:-2.28, B:-1.88,
X:20, Y:44, A:-2.28, B:-1.88,
X:20, Y:45, A:-2.28, B:-1.88,
X:20, Y:46, A:-2.44, B:-2.04,
X:20, Y:47, A:-2.44, B:-2.04,
X:20, Y:48, A:-2.44, B:-2.04,
X:20, Y:49, A:-2.44, B:-2.04,
X:20, Y:50, A:-2.44, B:-2.04,
X:20, Y:51, A:-2.60, B:-2.20,
X:20, Y:52, A:-2.60, B:-2.20,
X:20, Y:53, A:-2.60, B:-2.20,
X:20, Y:54, A:-2.60, B:-2.20,
X:20, Y:55, A:-2.60, B:-2.20,
X:20, Y:56, A:-2.60, B:-2.20,
X:20, Y:57, A:-2.60, B:-2.20,
X:20, Y:58, A:-2.60, B:-2.20,
X:20, Y:59, A:-2.76, B:-2.36,
X:20, Y:60, A:-2.76, B:-2.36,
X:20, Y:61, A:-2.76, B:-2.36,
X:20, Y:62, A:-2.76, B:-2.36,
X:20, Y:63, A:-2.76, B:-2.36,
X:20, Y:64, A:-2.76, B:-2.36,
X:20, Y:65, A:-2.76, B:-2.36,
X:20, Y:66, A:-2.76, B:-2.36,
X:20, Y:67, A:-2.76, B:-2.36,
X:20, Y:68, A:-2.76, B:-2.36,
X:20, Y:69, A:-2.76, B:-2.36,
X:20, Y:70, A:-2.76, B:-2.36,
X:20, Y:71, A:-2.76, B:-2.36,
X:20, Y:72, A:-2.76, B:-2.36,
X:20, Y:73, A:-2.92, B:-2.52,
X:20, Y:74, A:-2.92, B:-2.52,
X:20, Y:75, A:-2.92, B:-2.52,
X:20, Y:76, A:-2.92, B:-2.52,
X:20, Y:77, A:-2.92, B:-2.52,
X:20, Y:78, A:-2.92, B:-2.52,
X:20, Y:79, A:-2.92, B:-2.52,
X:20, Y:80, A:-2.92, B:-2.52,
X:20, Y:81, A:-2.92, B:-2.52,
X:20, Y:82, A:-2.92, B:-2.52,
X:20, Y:83, A:-2.92, B:-2.52,
X:20, Y:84, A:-2.92, B:-2.52,
X:20, Y:85, A:-2.92, B:-2.52,
X:20, Y:86, A:-3.08, B:-2.68,
X:20, Y:87, A:-3.08, B:-2.68,
X:20, Y:88, A:-3.08, B:-2.68,
X:20, Y:89, A:-3.08, B:-2.68,
X:20, Y:90, A:-3.08, B:-2.68,
X:20, Y:91, A:-3.08, B:-2.68,
X:20, Y:92, A:-3.08, B:-2.68,
X:20, Y:93, A:-3.08, B:-2.68,
X:20, Y:94, A:-3.08, B:-2.68,
X:20, Y:95, A:-3.08, B:-2.68,
X:20, Y:96, A:-3.08, B:-2.68,
X:20, Y:97, A:-3.08, B:-2.68,
X:20, Y:98, A:-3.08, B:-2.68,
X:20, Y:99, A:-3.23, B:-2.83,
X:20, Y:100, A:-3.23, B:-2.83,
X:10, Y:1, A:14.45, B:14.85,
X:10, Y:2, A:12.72, B:13.12,
X:10, Y:3, A:11.01, B:11.41,
X:10, Y:4, A:11.01, B:11.41,
X:10, Y:5, A:5.93, B:6.33,
X:10, Y:6, A:3.59, B:3.99,
X:10, Y:7, A:2.59, B:2.99,
X:10, Y:8, A:1.60, B:2.00,
X:10, Y:9, A:0.62, B:1.02,
X:10, Y:10, A:-0.20, B:0.20,
X:10, Y:11, A:-1.02, B:-0.62,
X:10, Y:12, A:-1.50, B:-1.10,
X:10, Y:13, A:-1.99, B:-1.59,
X:10, Y:14, A:-2.48, B:-2.08,
X:10, Y:15, A:-2.80, B:-2.40,
X:10, Y:16, A:-3.12, B:-2.72,
X:10, Y:17, A:-3.45, B:-3.05,
X:10, Y:18, A:-3.61, B:-3.21,
X:10, Y:19, A:-3.77, B:-3.37,
X:10, Y:20, A:-3.93, B:-3.53,
X:10, Y:21, A:-4.09, B:-3.69,
X:10, Y:22, A:-4.25, B:-3.85,
X:10, Y:23, A:-4.41, B:-4.01,
X:10, Y:24, A:-4.57, B:-4.17,
X:10, Y:25, A:-4.57, B:-4.17,
X:10, Y:26, A:-4.73, B:-4.33,
X:10, Y:27, A:-4.73, B:-4.33,
X:10, Y:28, A:-4.89, B:-4.49,
X:10, Y:29, A:-5.05, B:-4.65,
X:10, Y:30, A:-5.05, B:-4.65,
X:10, Y:31, A:-5.21, B:-4.81,
X:10, Y:32, A:-5.21, B:-4.81,
X:10, Y:33, A:-5.37, B:-4.97,
X:10, Y:34, A:-5.53, B:-5.13,
X:10, Y:35, A:-5.53, B:-5.13,
X:10, Y:36, A:-5.69, B:-5.29,
X:10, Y:37, A:-5.69, B:-5.29,
X:10, Y:38, A:-5.85, B:-5.45,
X:10, Y:39, A:-5.85, B:-5.45,
X:10, Y:40, A:-5.85, B:-5.45,
X:10, Y:41, A:-5.85, B:-5.45,
X:10, Y:42, A:-6.01, B:-5.61,
X:10, Y:43, A:-6.01, B:-5.61,
X:10, Y:44, A:-6.01, B:-5.61,
X:10, Y:45, A:-6.01, B:-5.61,
X:10, Y:46, A:-6.17, B:-5.77,
X:10, Y:47, A:-6.17, B:-5.77,
X:10, Y:48, A:-6.17, B:-5.77,
X:10, Y:49, A:-6.17, B:-5.77,
X:10, Y:50, A:-6.17, B:-5.77,
X:10, Y:51, A:-6.33, B:-5.93,
X:10, Y:52, A:-6.33, B:-5.93,
X:10, Y:53, A:-6.33, B:-5.93,
X:10, Y:54, A:-6.33, B:-5.93,
X:10, Y:55, A:-6.33, B:-5.93,
X:10, Y:56, A:-6.33, B:-5.93,
X:10, Y:57, A:-6.33, B:-5.93,
X:10, Y:58, A:-6.33, B:-5.93,
X:10, Y:59, A:-6.49, B:-6.09,
X:10, Y:60, A:-6.49, B:-6.09,
X:10, Y:61, A:-6.49, B:-6.09,
X:10, Y:62, A:-6.49, B:-6.09,
X:10, Y:63, A:-6.49, B:-6.09,
X:10, Y:64, A:-6.49, B:-6.09,
X:10, Y:65, A:-6.49, B:-6.09,
X:10, Y:66, A:-6.49, B:-6.09,
X:10, Y:67, A:-6.49, B:-6.09,
X:10, Y:68, A:-6.49, B:-6.09,
X:10, Y:69, A:-6.49, B:-6.09,
X:10, Y:70, A:-6.49, B:-6.09,
X:10, Y:71, A:-6.49, B:-6.09,
X:10, Y:72, A:-6.49, B:-6.09,
X:10, Y:73, A:-6.65, B:-6.25,
X:10, Y:74, A:-6.65, B:-6.25,
X:10, Y:75, A:-6.65, B:-6.25,
X:10, Y:76, A:-6.65, B:-6.25,
X:10, Y:77, A:-6.65, B:-6.25,
X:10, Y:78, A:-6.65, B:-6.25,
X:10, Y:79, A:-6.65, B:-6.25,
X:10, Y:80, A:-6.65, B:-6.25,
X:10, Y:81, A:-6.65, B:-6.25,
X:10, Y:82, A:-6.65, B:-6.25,
X:10, Y:83, A:-6.65, B:-6.25,
X:10, Y:84, A:-6.65, B:-6.25,
X:10, Y:85, A:-6.65, B:-6.25,
X:10, Y:86, A:-6.80, B:-6.40,
X:10, Y:87, A:-6.80, B:-6.40,
X:10, Y:88, A:-6.80, B:-6.40,
X:10, Y:89, A:-6.80, B:-6.40,
X:10, Y:90, A:-6.80, B:-6.40,
X:10, Y:91, A:-6.80, B:-6.40,
X:10, Y:92, A:-6.80, B:-6.40,
X:10, Y:93, A:-6.80, B:-6.40,
X:10, Y:94, A:-6.80, B:-6.40,
X:10, Y:95, A:-6.80, B:-6.40,
X:10, Y:96, A:-6.80, B:-6.40,
X:10, Y:97, A:-6.80, B:-6.40,
X:10, Y:98, A:-6.80, B:-6.40,
X:10, Y:99, A:-6.96, B:-6.56, and
X:10, Y:100, A:-6.96, B:-6.56

14. The lens control method of any one of claims 9 to 11, **characterized in that** the focal length identification information comprises a plurality of pieces of focal length identification information using temperature as a parameter.

15. A lens control program used for a lens control device comprising:
a storage unit that stores focal length identification information for identifying, in accordance with a distance from a mounting position of a variable-focus lens for an eye to a viewed object, a focal length of the variable-focus lens; and
a control unit that selectively executes an automatic control mode, in which the focal length of the variable-focus lens is controlled based on a detection distance from a distance detection unit detecting a distance from the variable-focus lens to the viewed object and the focal length identification information in the storage unit, and a manual control mode, in which the focal length of the variable-focus lens is controlled based on a command operation performed on an operation unit,
a program for executing processing of the control unit by a computer comprising a setting mode and a usage mode, wherein
the setting mode causes to execute processing comprising a step of acquiring a detection distance from the distance detection unit and a focal length of the variable-focus lens when the operation unit is command operated to bring the viewed object into focus in the manual control mode, a step of calculating a difference between a focal length of the variable-focus lens at the time of the acquired focusing operation and a focal length of the focal length identification information corresponding to the detection distance as a correction value, and a step of generating focal length identification information that has been corrected, modified, or updated based on the correction value, and storing it in the storage unit, and
the usage mode causes to execute processing comprising a step of controlling the variable-focus lens to a focal length corresponding to a distance to any viewed object detected by the distance detection unit from the updated focal length identification information.

16. The lens control program of claim 15, wherein, in the setting mode, new focal length identification information that has been corrected, modified, or updated based on the correction value for at least one distance of a viewed object that differs from the detection distance of the focal length identification information is generated and stored in the storage unit.

17. The lens control program of claim 16, wherein, in the setting mode, the same correction value is used for the correction, modification, or update for a distance to any viewed object.

18. The lens control program of any one of claims 15 to 17, wherein the setting mode comprises at least one of:
the focal length identification information including adding a refractive power such that, when the lens refractive power at a position where the distance to the viewed object is approximately 100 cm is taken as a reference, the lens refractive power at a distance of 10 cm to the observed object falls within the range of 6.96 D to 6.56 D;
the focal length identification information including adding a refractive power such that, when the lens refractive power at a position where the distance to the viewed object is approximately 100 cm is taken as a reference, the lens refractive power at a distance of approximately 50 cm to the viewed object falls within the range of 0.99 D to 0.59 D;
the focal length identification information including adding a refractive power such that, when the lens refractive power at a position where the distance to the viewed object is approximately 80 cm is taken as a reference, the lens refractive power at a distance of approximately 10 cm to the viewed object falls within the range of 6.65 D to 6.25 D;
the focal length identification information, when the lens refractive power at a position where the distance to the viewed object is approximately 80 cm is taken as a reference, adding a refractive power such that the lens refractive power at a distance of approximately 50 cm to the viewed object falls within the range of 0.68 D to 0.28 D; and
the focal length identification information including adding a refractive power such that, when the lens refractive power at a position where the distance to the viewed object is approximately 60 cm is taken as a reference, the lens refractive power at a distance of approximately 10 cm to the viewed object falls within the range of 6.49 D to 6.09 D.

19. The lens control program of any one of claims 15 to 17, **characterized by** executing processing in a state of comprising at least one of:
when the focal length identification information includes adding refractive powers such that, when the lens refractive power at a position where a distance to the viewed object is approximately X [cm] is taken as a reference, the lens refractive power at a distance of Y [cm] to the viewed object falls within the range of A to B [D],
X:100, Y:1, A:21.22, B:21.62,
X:100, Y:2, A:19.49, B:19.89,
X:100, Y:3, A:17.77, B:18.17,
X:100, Y:4, A:17.77, B:18.17,
X:100, Y:5, A:12.69, B:13.09,
X:100, Y:6, A:10.35, B:10.75,
X:100, Y:7, A:9.36, B:9.76,
X:100, Y:8, A:8.37, B:8.77,
X:100, Y:9, A:7.38, B:7.78,
X:100, Y:10, A:6.56, B:6.96,
X:100, Y:11, A:5.75, B:6.15,
X:100, Y:12, A:5.26, B:5.66,
X:100, Y:13, A:4.77, B:5.17,
X:100, Y:14, A:4.29, B:4.69,
X:100, Y:15, A:3.96, B:4.36,
X:100, Y:16, A:3.64, B:4.04,
X:100, Y:17, A:3.32, B:3.72,
X:100, Y:18, A:3.16, B:3.56,
X:100, Y:19, A:3.00, B:3.40,
X:100, Y:20, A:2.83, B:3.23,
X:100, Y:21, A:2.67, B:3.07,
X:100, Y:22, A:2.51, B:2.91,
X:100, Y:23, A:2.35, B:2.75,
X:100, Y:24, A:2.19, B:2.59,
X:100, Y:25, A:2.19, B:2.59,
X:100, Y:26, A:2.03, B:2.43,
X:100, Y:27, A:2.03, B:2.43,
X:100, Y:28, A:1.87, B:2.27,
X:100, Y:29, A:1.71, B:2.11,
X:100, Y:30, A:1.71, B:2.11,
X:100, Y:31, A:1.55, B:1.95,
X:100, Y:32, A:1.55, B:1.95,
X:100, Y:33, A:1.39, B:1.79,
X:100, Y:34, A:1.23, B:1.63,
X:100, Y:35, A:1.23, B:1.63,
X:100, Y:36, A:1.07, B:1.47,
X:100, Y:37, A:1.07, B:1.47,
X:100, Y:38, A:0.91, B:1.31,
X:100, Y:39, A:0.91, B:1.31,
X:100, Y:40, A:0.91, B:1.31,
X:100, Y:41, A:0.91, B:1.31,
X:100, Y:42, A:0.75, B:1.15,
X:100, Y:43, A:0.75, B:1.15,
X:100, Y:44, A:0.75, B:1.15,
X:100, Y:45, A:0.75, B:1.15,
X:100, Y:46, A:0.59, B:0.99,
X:100, Y:47, A:0.59, B:0.99,
X:100, Y:48, A:0.59, B:0.99,
X:100, Y:49, A:0.59, B:0.99,
X:100, Y:50, A:0.59, B:0.99,
X:100, Y:51, A:0.44, B:0.84,
X:100, Y:52, A:0.44, B:0.84,
X:100, Y:53, A:0.44, B:0.84,
X:100, Y:54, A:0.44, B:0.84,
X:100, Y:55, A:0.44, B:0.84,
X:100, Y:56, A:0.44, B:0.84,
X:100, Y:57, A:0.44, B:0.84,
X:100, Y:58, A:0.44, B:0.84,
X:100, Y:59, A:0.28, B:0.68,
X:100, Y:60, A:0.28, B:0.68,
X:100, Y:61, A:0.28, B:0.68,
X:100, Y:62, A:0.28, B:0.68,
X:100, Y:63, A:0.28, B:0.68,
X:100, Y:64, A:0.28, B:0.68,
X:100, Y:65, A:0.28, B:0.68,
X:100, Y:66, A:0.28, B:0.68,
X:100, Y:67, A:0.28, B:0.68,
X:100, Y:68, A:0.28, B:0.68,
X:100, Y:69, A:0.28, B:0.68,
X:100, Y:70, A:0.28, B:0.68,
X:100, Y:71, A:0.28, B:0.68,
X:100, Y:72, A:0.28, B:0.68,
X:100, Y:73, A:0.12, B:0.52,
X:100, Y:74, A:0.12, B:0.52,
X:100, Y:75, A:0.12, B:0.52,
X:100, Y:76, A:0.12, B:0.52,
X:100, Y:77, A:0.12, B:0.52,
X:100, Y:78, A:0.12, B:0.52,
X:100, Y:79, A:0.12, B:0.52,
X:100, Y:80, A:0.12, B:0.52,
X:100, Y:81, A:0.12, B:0.52,
X:100, Y:82, A:0.12, B:0.52,
X:100, Y:83, A:0.12, B:0.52,
X:100, Y:84, A:0.12, B:0.52,
X:100, Y:85, A:0.12, B:0.52,
X:100, Y:86, A:-0.04, B:0.36,
X:100, Y:87, A:-0.04, B:0.36,
X:100, Y:88, A:-0.04, B:0.36,
X:100, Y:89, A:-0.04, B:0.36,
X:100, Y:90, A:-0.04, B:0.36,
X:100, Y:91, A:-0.04, B:0.36,
X:100, Y:92, A:-0.04, B:0.36,
X:100, Y:93, A:-0.04, B:0.36,
X:100, Y:94, A:-0.04, B:0.36,
X:100, Y:95, A:-0.04, B:0.36,
X:100, Y:96, A:-0.04, B:0.36,
X:100, Y:97, A:-0.04, B:0.36,
X:100, Y:98, A:-0.04, B:0.36,
X:100, Y:99, A:-0.20, B:0.20,
X:100, Y:100, A:-0.20, B:0.20,
X:90, Y:1, A:21.06, B:21.46,
X:90, Y:2, A:19.33, B:19.73,
X:90, Y:3, A:17.61, B:18.01,
X:90, Y:4, A:17.61, B:18.01,
X:90, Y:5, A:12.53, B:12.93,
X:90, Y:6, A:10.19, B:10.59,
X:90, Y:7, A:9.20, B:9.60,
X:90, Y:8, A:8.21, B:8.61,
X:90, Y:9, A:7.22, B:7.62,
X:90, Y:10, A:6.40, B:6.80,
X:90, Y:11, A:5.59, B:5.99,
X:90, Y:12, A:5.10, B:5.50,
X:90, Y:13, A:4.61, B:5.01,
X:90, Y:14, A:4.13, B:4.53,
X:90, Y:15, A:3.80, B:4.20,
X:90, Y:16, A:3.48, B:3.88,
X:90, Y:17, A:3.16, B:3.56,
X:90, Y:18, A:3.00, B:3.40,
X:90, Y:19, A:2.84, B:3.24,
X:90, Y:20, A:2.68, B:3.08,
X:90, Y:21, A:2.52, B:2.92,
X:90, Y:22, A:2.35, B:2.75,
X:90, Y:23, A:2.19, B:2.59,
X:90, Y:24, A:2.03, B:2.43,
X:90, Y:25, A:2.03, B:2.43,
X:90, Y:26, A:1.87, B:2.27,
X:90, Y:27, A:1.87, B:2.27,
X:90, Y:28, A:1.71, B:2.11,
X:90, Y:29, A:1.55, B:1.95,
X:90, Y:30, A:1.55, B:1.95,
X:90, Y:31, A:1.39, B:1.79,
X:90, Y:32, A:1.39, B:1.79,
X:90, Y:33, A:1.23, B:1.63,
X:90, Y:34, A:1.07, B:1.47,
X:90, Y:35, A:1.07, B:1.47,
X:90, Y:36, A:0.91, B:1.31,
X:90, Y:37, A:0.91, B:1.31,
X:90, Y:38, A:0.75, B:1.15,
X:90, Y:39, A:0.75, B:1.15,
X:90, Y:40, A:0.75, B:1.15,
X:90, Y:41, A:0.75, B:1.15,
X:90, Y:42, A:0.60, B:1.00,
X:90, Y:43, A:0.60, B:1.00,
X:90, Y:44, A:0.60, B:1.00,
X:90, Y:45, A:0.60, B:1.00,
X:90, Y:46, A:0.44, B:0.84,
X:90, Y:47, A:0.44, B:0.84,
X:90, Y:48, A:0.44, B:0.84,
X:90, Y:49, A:0.44, B:0.84,
X:90, Y:50, A:0.44, B:0.84,
X:90, Y:51, A:0.28, B:0.68,
X:90, Y:52, A:0.28, B:0.68,
X:90, Y:53, A:0.28, B:0.68,
X:90, Y:54, A:0.28, B:0.68,
X:90, Y:55, A:0.28, B:0.68,
X:90, Y:56, A:0.28, B:0.68,
X:90, Y:57, A:0.28, B:0.68,
X:90, Y:58, A:0.28, B:0.68,
X:90, Y:59, A:0.12, B:0.52,
X:90, Y:60, A:0.12, B:0.52,
X:90, Y:61, A:0.12, B:0.52,
X:90, Y:62, A:0.12, B:0.52,
X:90, Y:63, A:0.12, B:0.52,
X:90, Y:64, A:0.12, B:0.52,
X:90, Y:65, A:0.12, B:0.52,
X:90, Y:66, A:0.12, B:0.52,
X:90, Y:67, A:0.12, B:0.52,
X:90, Y:68, A:0.12, B:0.52,
X:90, Y:69, A:0.12, B:0.52,
X:90, Y:70, A:0.12, B:0.52,
X:90, Y:71, A:0.12, B:0.52,
X:90, Y:72, A:0.12, B:0.52,
X:90, Y:73, A:-0.04, B:0.36,
X:90, Y:74, A:-0.04, B:0.36,
X:90, Y:75, A:-0.04, B:0.36,
X:90, Y:76, A:-0.04, B:0.36,
X:90, Y:77, A:-0.04, B:0.36,
X:90, Y:78, A:-0.04, B:0.36,
X:90, Y:79, A:-0.04, B:0.36,
X:90, Y:80, A:-0.04, B:0.36,
X:90, Y:81, A:-0.04, B:0.36,
X:90, Y:82, A:-0.04, B:0.36,
X:90, Y:83, A:-0.04, B:0.36,
X:90, Y:84, A:-0.04, B:0.36,
X:90, Y:85, A:-0.04, B:0.36,
X:90, Y:86, A:-0.20, B:0.20,
X:90, Y:87, A:-0.20, B:0.20,
X:90, Y:88, A:-0.20, B:0.20,
X:90, Y:89, A:-0.20, B:0.20,
X:90, Y:90, A:-0.20, B:0.20,
X:90, Y:91, A:-0.20, B:0.20,
X:90, Y:92, A:-0.20, B:0.20,
X:90, Y:93, A:-0.20, B:0.20,
X:90, Y:94, A:-0.20, B:0.20,
X:90, Y:95, A:-0.20, B:0.20,
X:90, Y:96, A:-0.20, B:0.20,
X:90, Y:97, A:-0.20, B:0.20,
X:90, Y:98, A:-0.20, B:0.20,
X:90, Y:99, A:-0.36, B:0.04,
X:90, Y:100, A:-0.36, B:0.0,
X:80, Y:1, A:20.90, B:21.30,
X:80, Y:2, A:19.17, B:19.57,
X:80, Y:3, A:17.45, B:17.85,
X:80, Y:4, A:17.45, B:17.85,
X:80, Y:5, A:12.37, B:12.77,
X:80, Y:6, A:10.04, B:10.44,
X:80, Y:7, A:9.04, B:9.44,
X:80, Y:8, A:8.05, B:8.45,
X:80, Y:9, A:7.06, B:7.46,
X:80, Y:10, A:6.25, B:6.65,
X:80, Y:11, A:5.43, B:5.83,
X:80, Y:12, A:4.94, B:5.34,
X:80, Y:13, A:4.45, B:4.85,
X:80, Y:14, A:3.97, B:4.37,
X:80, Y:15, A:3.65, B:4.05,
X:80, Y:16, A:3.32, B:3.72,
X:80, Y:17, A:3.00, B:3.40,
X:80, Y:18, A:2.84, B:3.24,
X:80, Y:19, A:2.68, B:3.08,
X:80, Y:20, A:2.52, B:2.92,
X:80, Y:21, A:2.36, B:2.76,
X:80, Y:22, A:2.20, B:2.60,
X:80, Y:23, A:2.04, B:2.44,
X:80, Y:24, A:1.87, B:2.27,
X:80, Y:25, A:1.87, B:2.27,
X:80, Y:26, A:1.71, B:2.11,
X:80, Y:27, A:1.71, B:2.11,
X:80, Y:28, A:1.55, B:1.95,
X:80, Y:29, A:1.39, B:1.79,
X:80, Y:30, A:1.39, B:1.79,
X:80, Y:31, A:1.23, B:1.63,
X:80, Y:32, A:1.23, B:1.63,
X:80, Y:33, A:1.07, B:1.47,
X:80, Y:34, A:0.91, B:1.31,
X:80, Y:35, A:0.91, B:1.31,
X:80, Y:36, A:0.76, B:1.16,
X:80, Y:37, A:0.76, B:1.16,
X:80, Y:38, A:0.60, B:1.00,
X:80, Y:39, A:0.60, B:1.00,
X:80, Y:40, A:0.60, B:1.00,
X:80, Y:41, A:0.60, B:1.00,
X:80, Y:42, A:0.44, B:0.84,
X:80, Y:43, A:0.44, B:0.84,
X:80, Y:44, A:0.44, B:0.84,
X:80, Y:45, A:0.44, B:0.84,,
X:80, Y:46, A:0.28, B:0.68,
X:80, Y:47, A:0.28, B:0.68,
X:80, Y:48, A:0.28, B:0.68,
X:80, Y:49, A:0.28, B:0.68,
X:80, Y:50, A:0.28, B:0.68,
X:80, Y:51, A:0.12, B:0.52,
X:80, Y:52, A:0.12, B:0.52,
X:80, Y:53, A:0.12, B:0.52,
X:80, Y:54, A:0.12, B:0.52,
X:80, Y:55, A:0.12, B:0.52,
X:80, Y:56, A:0.12, B:0.52,
X:80, Y:57, A:0.12, B:0.52,
X:80, Y:58, A:0.12, B:0.52,
X:80, Y:59, A:-0.04, B:0.36,
X:80, Y:60, A:-0.04, B:0.36,
X:80, Y:61, A:-0.04, B:0.36,
X:80, Y:62, A:-0.04, B:0.36,
X:80, Y:63, A:-0.04, B:0.36,
X:80, Y:64, A:-0.04, B:0.36,
X:80, Y:65, A:-0.04, B:0.36,
X:80, Y:66, A:-0.04, B:0.36,
X:80, Y:67, A:-0.04, B:0.36,
X:80, Y:68, A:-0.04, B:0.36,
X:80, Y:69, A:-0.04, B:0.36,
X:80, Y:70, A:-0.04, B:0.36,
X:80, Y:71, A:-0.04, B:0.36,
X:80, Y:72, A:-0.04, B:0.36,
X:80, Y:73, A:-0.02, B:0.20,
X:80, Y:74, A:-0.02, B:0.20,
X:80, Y:75, A:-0.02, B:0.20,
X:80, Y:76, A:-0.02, B:0.20,
X:80, Y:77, A:-0.02, B:0.20,
X:80, Y:78, A:-0.02, B:0.20,
X:80, Y:79, A:-0.02, B:0.20,
X:80, Y:80, A:-0.02, B:0.20,
X:80, Y:81, A:-0.02, B:0.20,
X:80, Y:82, A:-0.02, B:0.20,
X:80, Y:83, A:-0.02, B:0.20,
X:80, Y:84, A:-0.02, B:0.20,
X:80, Y:85, A:-0.02, B:0.20,
X:80, Y:86, A:-0.36, B:0.04,
X:80, Y:87, A:-0.36, B:0.04,
X:80, Y:88, A:-0.36, B:0.04,
X:80, Y:89, A:-0.36, B:0.04,
X:80, Y:90, A:-0.36, B:0.04,
X:80, Y:91, A:-0.36, B:0.04,
X:80, Y:92, A:-0.36, B:0.04,
X:80, Y:93, A:-0.36, B:0.04,
X:80, Y:94, A:-0.36, B:0.04,
X:80, Y:95, A:-0.36, B:0.04,
X:80, Y:96, A:-0.36, B:0.04,
X:80, Y:97, A:-0.36, B:0.04,
X:80, Y:98, A:-0.36, B:0.04,
X:80, Y:99, A:-0.52, B:-0.12,
X:80, Y:100, A:-0.52, B:-0.12,
X:70, Y:1, A:20.74, B:21.14,
X:70, Y:2, A:19.01, B:19.41,
X:70, Y:3, A:17.29, B:17.69,
X:70, Y:4, A:17.29, B:17.69,
X:70, Y:5, A:12.21, B:12.61,
X:70, Y:6, A:9.88, B:10.28,
X:70, Y:7, A:8.88, B:9.28,
X:70, Y:8, A:7.89, B:8.29,
X:70, Y:9, A:6.91, B:7.31,
X:70, Y:10, A:6.09, B:6.49,
X:70, Y:11, A:5.27, B:5.67,
X:70, Y:12, A:4.78, B:5.18,
X:70, Y:13, A:4.30, B:4.70,
X:70, Y:14, A:3.81, B:4.21,
X:70, Y:15, A:3.49, B:3.89,
X:70, Y:16, A:3.16, B:3.56,
X:70, Y:17, A:2.84, B:3.24,
X:70, Y:18, A:2.68, B:3.08,
X:70, Y:19, A:2.52, B:2.92,
X:70, Y:20, A:2.36, B:2.76,
X:70, Y:21, A:2.20, B:2.60,
X:70, Y:22, A:2.04, B:2.44,
X:70, Y:23, A:1.88, B:2.28,
X:70, Y:24, A:1.72, B:2.12,
X:70, Y:25, A:1.72, B:2.12,
X:70, Y:26, A:1.56, B:1.96,
X:70, Y:27, A:1.56, B:1.96,
X:70, Y:28, A:1.40, B:1.80,
X:70, Y:29, A:1.24, B:1.64,
X:70, Y:30, A:1.24, B:1.64,
X:70, Y:31, A:1.08, B:1.48,
X:70, Y:32, A:1.08, B:1.48,
X:70, Y:33, A:0.92, B:1.32,
X:70, Y:34, A:0.76, B:1.16,
X:70, Y:35, A:0.76, B:1.16,
X:70, Y:36, A:0.60, B:1.00,
X:70, Y:37, A:0.60, B:1.00,
X:70, Y:38, A:0.44, B:0.84,
X:70, Y:39, A:0.44, B:0.84,
X:70, Y:40, A:0.44, B:0.84,
X:70, Y:41, A:0.44, B:0.84,
X:70, Y:42, A:0.28, B:0.68,
X:70, Y:43, A:0.28, B:0.68,
X:70, Y:44, A:0.28, B:0.68,
X:70, Y:45, A:0.28, B:0.68,
X:70, Y:46, A:0.12, B:0.52,
X:70, Y:47, A:0.12, B:0.52,
X:70, Y:48, A:0.12, B:0.52,
X:70, Y:49, A:0.12, B:0.52,
X:70, Y:50, A:0.12, B:0.52,
X:70, Y:51, A:-0.04, B:0.36,
X:70, Y:52, A:-0.04, B:0.36,
X:70, Y:53, A:-0.04, B:0.36,
X:70, Y:54, A:-0.04, B:0.36,
X:70, Y:55, A:-0.04, B:0.36,
X:70, Y:56, A:-0.04, B:0.36,
X:70, Y:57, A:-0.04, B:0.36,
X:70, Y:58, A:-0.04, B:0.36,
X:70, Y:59, A:-0.20, B:0.20,
X:70, Y:60, A:-0.20, B:0.20,
X:70, Y:61, A:-0.20, B:0.20,
X:70, Y:62, A:-0.20, B:0.20,
X:70, Y:63, A:-0.20, B:0.20,
X:70, Y:64, A:-0.20, B:0.20,
X:70, Y:65, A:-0.20, B:0.20,
X:70, Y:66, A:-0.20, B:0.20,
X:70, Y:67, A:-0.20, B:0.20,
X:70, Y:68, A:-0.20, B:0.20,
X:70, Y:69, A:-0.20, B:0.20,
X:70, Y:70, A:-0.20, B:0.20,
X:70, Y:71, A:-0.20, B:0.20,
X:70, Y:72, A:-0.20, B:0.20,
X:70, Y:73, A:-0.36, B:0.04,
X:70, Y:74, A:-0.36, B:0.04,
X:70, Y:75, A:-0.36, B:0.04,
X:70, Y:76, A:-0.36, B:0.04,
X:70, Y:77, A:-0.36, B:0.04,
X:70, Y:78, A:-0.36, B:0.04,
X:70, Y:79, A:-0.36, B:0.04,
X:70, Y:80, A:-0.36, B:0.04,
X:70, Y:81, A:-0.36, B:0.04,
X:70, Y:82, A:-0.36, B:0.04,
X:70, Y:83, A:-0.36, B:0.04,
X:70, Y:84, A:-0.36, B:0.04,
X:70, Y:85, A:-0.36, B:0.04,
X:70, Y:86, A:-0.52, B:-0.12,
X:70, Y:87, A:-0.52, B:-0.12,
X:70, Y:88, A:-0.52, B:-0.12,
X:70, Y:89, A:-0.52, B:-0.12,
X:70, Y:90, A:-0.52, B:-0.12,
X:70, Y:91, A:-0.52, B:-0.12,
X:70, Y:92, A:-0.52, B:-0.12,
X:70, Y:93, A:-0.52, B:-0.12,
X:70, Y:94, A:-0.52, B:-0.12,
X:70, Y:95, A:-0.52, B:-0.12,
X:70, Y:96, A:-0.52, B:-0.12,
X:70, Y:97, A:-0.52, B:-0.12,
X:70, Y:98, A:-0.52, B:-0.12,
X:70, Y:99, A:-0.68, B:-0.28,
X:70, Y:100, A:-0.68, B:-0.28,
X:60, Y:1, A:20.74, B:21.14,
X:60, Y:2, A:19.01, B:19.41,
X:60, Y:3, A:17.29, B:17.69,
X:60, Y:4, A:17.29, B:17.69,
X:60, Y:5, A:12.21, B:12.61,
X:60, Y:6, A:9.88, B:10.28,
X:60, Y:7, A:8.88, B:9.28,
X:60, Y:8, A:7.89, B:8.29,
X:60, Y:9, A:6.91, B:7.31,
X:60, Y:10, A:6.09, B:6.49,
X:60, Y:11, A:5.27, B:5.67,
X:60, Y:12, A:4.78, B:5.18,
X:60, Y:13, A:4.30, B:4.70,
X:60, Y:14, A:3.81, B:4.21,
X:60, Y:15, A:3.49, B:3.89,
X:60, Y:16, A:3.16, B:3.56,
X:60, Y:17, A:2.84, B:3.24,
X:60, Y:18, A:2.68, B:3.08,
X:60, Y:19, A:2.52, B:2.92,
X:60, Y:20, A:2.36, B:2.76,
X:60, Y:21, A:2.20, B:2.60,
X:60, Y:22, A:2.04, B:2.44,
X:60, Y:23, A:1.88, B:2.28,
X:60, Y:24, A:1.72, B:2.12,
X:60, Y:25, A:1.72, B:2.12,
X:60, Y:26, A:1.56, B:1.96,
X:60, Y:27, A:1.56, B:1.96,
X:60, Y:28, A:1.40, B:1.80,
X:60, Y:29, A:1.24, B:1.64,
X:60, Y:30, A:1.24, B:1.64,
X:60, Y:31, A:1.08, B:1.48,
X:60, Y:32, A:1.08, B:1.48,
X:60, Y:33, A:0.92, B:1.32,
X:60, Y:34, A:0.76, B:1.16,
X:60, Y:35, A:0.76, B:1.16,
X:60, Y:36, A:0.60, B:1.00,
X:60, Y:37, A:0.60, B:1.00,
X:60, Y:38, A:0.44, B:0.84,
X:60, Y:39, A:0.44, B:0.84,
X:60, Y:40, A:0.44, B:0.84,
X:60, Y:41, A:0.44, B:0.84,
X:60, Y:42, A:0.28, B:0.68,
X:60, Y:43, A:0.28, B:0.68,
X:60, Y:44, A:0.28, B:0.68,
X:60, Y:45, A:0.28, B:0.68,
X:60, Y:46, A:0.12, B:0.52,
X:60, Y:47, A:0.12, B:0.52,
X:60, Y:48, A:0.12, B:0.52,
X:60, Y:49, A:0.12, B:0.52,
X:60, Y:50, A:0.12, B:0.52,
X:60, Y:51, A:-0.04, B:0.36,
X:60, Y:52, A:-0.04, B:0.36,
X:60, Y:53, A:-0.04, B:0.36,
X:60, Y:54, A:-0.04, B:0.36,
X:60, Y:55, A:-0.04, B:0.36,
X:60, Y:56, A:-0.04, B:0.36,
X:60, Y:57, A:-0.04, B:0.36,
X:60, Y:58, A:-0.04, B:0.36,
X:60, Y:59, A:-0.20, B:0.20,
X:60, Y:60, A:-0.20, B:0.20,
X:60, Y:61, A:-0.20, B:0.20,
X:60, Y:62, A:-0.20, B:0.20,
X:60, Y:63, A:-0.20, B:0.20,
X:60, Y:64, A:-0.20, B:0.20,
X:60, Y:65, A:-0.20, B:0.20,
X:60, Y:66, A:-0.20, B:0.20,
X:60, Y:67, A:-0.20, B:0.20,
X:60, Y:68, A:-0.20, B:0.20,
X:60, Y:69, A:-0.20, B:0.20,
X:60, Y:70, A:-0.20, B:0.20,
X:60, Y:71, A:-0.20, B:0.20,
X:60, Y:72, A:-0.20, B:0.20,
X:60, Y:73, A:-0.36, B:0.04,
X:60, Y:74, A:-0.36, B:0.04,
X:60, Y:75, A:-0.36, B:0.04,
X:60, Y:76, A:-0.36, B:0.04,
X:60, Y:77, A:-0.36, B:0.04,
X:60, Y:78, A:-0.36, B:0.04,
X:60, Y:79, A:-0.36, B:0.04,
X:60, Y:80, A:-0.36, B:0.04,
X:60, Y:81, A:-0.36, B:0.04,
X:60, Y:82, A:-0.36, B:0.04,
X:60, Y:83, A:-0.36, B:0.04,
X:60, Y:84, A:-0.36, B:0.04,
X:60, Y:85, A:-0.36, B:0.04,
X:60, Y:86, A:-0.52, B:-0.12,
X:60, Y:87, A:-0.52, B:-0.12,
X:60, Y:88, A:-0.52, B:-0.12,
X:60, Y:89, A:-0.52, B:-0.12,
X:60, Y:90, A:-0.52, B:-0.12,
X:60, Y:91, A:-0.52, B:-0.12,
X:60, Y:92, A:-0.52, B:-0.12,
X:60, Y:93, A:-0.52, B:-0.12,
X:60, Y:94, A:-0.52, B:-0.12,
X:60, Y:95, A:-0.52, B:-0.12,
X:60, Y:96, A:-0.52, B:-0.12,
X:60, Y:97, A:-0.52, B:-0.12,
X:60, Y:98, A:-0.52, B:-0.12,
X:60, Y:99, A:-0.68, B:-0.28,
X:60, Y:100, A:-0.68, B:-0.28,
X:50, Y:1, A:20.42, B:20.82,
X:50, Y:2, A:18.69, B:19.09,
X:50, Y:3, A:16.98, B:17.38,
X:50, Y:4, A:16.98, B:17.38,
X:50, Y:5, A:11.89, B:12.29,
X:50, Y:6, A:9.56, B:9.96,
X:50, Y:7, A:8.56, B:8.96,
X:50, Y:8, A:7.57, B:7.97,
X:50, Y:9, A:6.59, B:6.99,
X:50, Y:10, A:5.77, B:6.17,
X:50, Y:11, A:4.95, B:5.35,
X:50, Y:12, A:4.46, B:4.86,
X:50, Y:13, A:3.98, B:4.38,
X:50, Y:14, A:3.49, B:3.89,
X:50, Y:15, A:3.17, B:3.57,
X:50, Y:16, A:2.85, B:3.25,
X:50, Y:17, A:2.52, B:2.92,
X:50, Y:18, A:2.36, B:2.76,
X:50, Y:19, A:2.20, B:2.60,
X:50, Y:20, A:2.04, B:2.44,
X:50, Y:21, A:1.88, B:2.28,
X:50, Y:22, A:1.72, B:2.12,
X:50, Y:23, A:1.56, B:1.96,
X:50, Y:24, A:1.40, B:1.80,
X:50, Y:25, A:1.40, B:1.80,
X:50, Y:26, A:1.24, B:1.64,
X:50, Y:27, A:1.24, B:1.64,
X:50, Y:28, A:1.08, B:1.48,
X:50, Y:29, A:0.92, B:1.32,
X:50, Y:30, A:0.92, B:1.32,
X:50, Y:31, A:0.76, B:1.16,
X:50, Y:32, A:0.76, B:1.16,
X:50, Y:33, A:0.60, B:1.00,
X:50, Y:34, A:0.44, B:0.84,
X:50, Y:35, A:0.44, B:0.84,
X:50, Y:36, A:0.28, B:0.68,
X:50, Y:37, A:0.28, B:0.68,
X:50, Y:38, A:0.12, B:0.52,
X:50, Y:39, A:0.12, B:0.52,
X:50, Y:40, A:0.12, B:0.52,
X:50, Y:41, A:0.12, B:0.52,
X:50, Y:42, A:-0.04, B:0.36,
X:50, Y:43, A:-0.04, B:0.36,
X:50, Y:44, A:-0.04, B:0.36,
X:50, Y:45, A:-0.04, B:0.36,
X:50, Y:46, A:-0.20, B:0.20,
X:50, Y:47, A:-0.20, B:0.20,
X:50, Y:48, A:-0.20, B:0.20,
X:50, Y:49, A:-0.20, B:0.20,
X:50, Y:50, A:-0.20, B:0.20,
X:50, Y:51, A:-0.36, B:0.04,
X:50, Y:52, A:-0.36, B:0.04,
X:50, Y:53, A:-0.36, B:0.04,
X:50, Y:54, A:-0.36, B:0.04,
X:50, Y:55, A:-0.36, B:0.04,
X:50, Y:56, A:-0.36, B:0.04,
X:50, Y:57, A:-0.36, B:0.04,
X:50, Y:58, A:-0.36, B:0.04,
X:50, Y:59, A:-0.52, B:-0.12,
X:50, Y:60, A:-0.52, B:-0.12,
X:50, Y:61, A:-0.52, B:-0.12,
X:50, Y:62, A:-0.52, B:-0.12,
X:50, Y:63, A:-0.52, B:-0.12,
X:50, Y:64, A:-0.52, B:-0.12,
X:50, Y:65, A:-0.52, B:-0.12,
X:50, Y:66, A:-0.52, B:-0.12,
X:50, Y:67, A:-0.52, B:-0.12,
X:50, Y:68, A:-0.52, B:-0.12,
X:50, Y:69, A:-0.52, B:-0.12,
X:50, Y:70, A:-0.52, B:-0.12,
X:50, Y:71, A:-0.52, B:-0.12,
X:50, Y:72, A:-0.52, B:-0.12,
X:50, Y:73, A:-0.68, B:-0.28,
X:50, Y:74, A:-0.68, B:-0.28,
X:50, Y:75, A:-0.68, B:-0.28,
X:50, Y:76, A:-0.68, B:-0.28,
X:50, Y:77, A:-0.68, B:-0.28,
X:50, Y:78, A:-0.68, B:-0.28,
X:50, Y:79, A:-0.68, B:-0.28,
X:50, Y:80, A:-0.68, B:-0.28,
X:50, Y:81, A:-0.68, B:-0.28,
X:50, Y:82, A:-0.68, B:-0.28,
X:50, Y:83, A:-0.68, B:-0.28,
X:50, Y:84, A:-0.68, B:-0.28,
X:50, Y:85, A:-0.68, B:-0.28,
X:50, Y:86, A:-0.84, B:-0.44,
X:50, Y:87, A:-0.84, B:-0.44,
X:50, Y:88, A:-0.84, B:-0.44,
X:50, Y:89, A:-0.84, B:-0.44,
X:50, Y:90, A:-0.84, B:-0.44,
X:50, Y:91, A:-0.84, B:-0.44,
X:50, Y:92, A:-0.84, B:-0.44,
X:50, Y:93, A:-0.84, B:-0.44,
X:50, Y:94, A:-0.84, B:-0.44,
X:50, Y:95, A:-0.84, B:-0.44,
X:50, Y:96, A:-0.84, B:-0.44,
X:50, Y:97, A:-0.84, B:-0.44,
X:50, Y:98, A:-0.84, B:-0.44,
X:50, Y:99, A:-0.99, B:-0.59,
X:50, Y:100, A:-0.99, B:-0.59,
X:40, Y:1, A:20.10, B:20.50,
X:40, Y:2, A:18.37, B:18.77,
X:40, Y:3, A:16.66, B:17.06,
X:40, Y:4, A:16.66, B:17.06,
X:40, Y:5, A:11.58, B:11.98,
X:40, Y:6, A:9.24, B:9.64,
X:40, Y:7, A:8.24, B:8.64,
X:40, Y:8, A:7.25, B:7.65,
X:40, Y:9, A:6.27, B:6.67,
X:40, Y:10, A:5.45, B:5.85,
X:40, Y:11, A:4.63, B:5.03,
X:40, Y:12, A:4.15, B:4.55,
X:40, Y:13, A:3.66, B:4.06,
X:40, Y:14, A:3.17, B:3.57,
X:40, Y:15, A:2.85, B:3.25,
X:40, Y:16, A:2.53, B:2.93,
X:40, Y:17, A:2.20, B:2.60,
X:40, Y:18, A:2.04, B:2.44,
X:40, Y:19, A:1.88, B:2.28,
X:40, Y:20, A:1.72, B:2.12,
X:40, Y:21, A:1.56, B:1.96,
X:40, Y:22, A:1.40, B:1.80,
X:40, Y:23, A:1.24, B:1.64,
X:40, Y:24, A:1.08, B:1.48,
X:40, Y:25, A:1.08, B:1.48,
X:40, Y:26, A:0.92, B:1.32,
X:40, Y:27, A:0.92, B:1.32,
X:40, Y:28, A:0.76, B:1.16,
X:40, Y:29, A:0.60, B:1.00,
X:40, Y:30, A:0.60, B:1.00,
X:40, Y:31, A:0.44, B:0.84,
X:40, Y:32, A:0.44, B:0.84,
X:40, Y:33, A:0.28, B:0.68,
X:40, Y:34, A:0.12, B:0.52,
X:40, Y:35, A:0.12, B:0.52,
X:40, Y:36, A:-0.04, B:0.36,
X:40, Y:37, A:-0.04, B:0.36,
X:40, Y:38, A:-0.20, B:0.20,
X:40, Y:39, A:-0.20, B:0.20,
X:40, Y:40, A:-0.20, B:0.20,
X:40, Y:41, A:-0.20, B:0.20,
X:40, Y:42, A:-0.36, B:0.04,
X:40, Y:43, A:-0.36, B:0.04,
X:40, Y:44, A:-0.36, B:0.04,
X:40, Y:45, A:-0.36, B:0.04,
X:40, Y:46, A:-0.52, B:-0.12,
X:40, Y:47, A:-0.52, B:-0.12,
X:40, Y:48, A:-0.52, B:-0.12,
X:40, Y:49, A:-0.52, B:-0.12,
X:40, Y:50, A:-0.52, B:-0.12,
X:40, Y:51, A:-0.68, B:-0.28,
X:40, Y:52, A:-0.68, B:-0.28,
X:40, Y:53, A:-0.68, B:-0.28,
X:40, Y:54, A:-0.68, B:-0.28,
X:40, Y:55, A:-0.68, B:-0.28,
X:40, Y:56, A:-0.68, B:-0.28,
X:40, Y:57, A:-0.68, B:-0.28,
X:40, Y:58, A:-0.68, B:-0.28,
X:40, Y:59, A:-0.84, B:-0.44,
X:40, Y:60, A:-0.84, B:-0.44,
X:40, Y:61, A:-0.84, B:-0.44,
X:40, Y:62, A:-0.84, B:-0.44,
X:40, Y:63, A:-0.84, B:-0.44,
X:40, Y:64, A:-0.84, B:-0.44,
X:40, Y:65, A:-0.84, B:-0.44,
X:40, Y:66, A:-0.84, B:-0.44,
X:40, Y:67, A:-0.84, B:-0.44,
X:40, Y:68, A:-0.84, B:-0.44,
X:40, Y:69, A:-0.84, B:-0.44,
X:40, Y:70, A:-0.84, B:-0.44,
X:40, Y:71, A:-0.84, B:-0.44,
X:40, Y:72, A:-0.84, B:-0.44,
X:40, Y:73, A:-1.00, B:-0.60,
X:40, Y:74, A:-1.00, B:-0.60,
X:40, Y:75, A:-1.00, B:-0.60,
X:40, Y:76, A:-1.00, B:-0.60,
X:40, Y:77, A:-1.00, B:-0.60,
X:40, Y:78, A:-1.00, B:-0.60,
X:40, Y:79, A:-1.00, B:-0.60,
X:40, Y:80, A:-1.00, B:-0.60,
X:40, Y:81, A:-1.00, B:-0.60,
X:40, Y:82, A:-1.00, B:-0.60,
X:40, Y:83, A:-1.00, B:-0.60,
X:40, Y:84, A:-1.00, B:-0.60,
X:40, Y:85, A:-1.00, B:-0.60,
X:40, Y:86, A:-1.15, B:-0.75,
X:40, Y:87, A:-1.15, B:-0.75,
X:40, Y:88, A:-1.15, B:-0.75,
X:40, Y:89, A:-1.15, B:-0.75,
X:40, Y:90, A:-1.15, B:-0.75,
X:40, Y:91, A:-1.15, B:-0.75,
X:40, Y:92, A:-1.15, B:-0.75,
X:40, Y:93, A:-1.15, B:-0.75,
X:40, Y:94, A:-1.15, B:-0.75,
X:40, Y:95, A:-1.15, B:-0.75,
X:40, Y:96, A:-1.15, B:-0.75,
X:40, Y:97, A:-1.15, B:-0.75,
X:40, Y:98, A:-1.15, B:-0.75,
X:40, Y:99, A:-1.31, B:-0.91,
X:40, Y:100, A:-1.31, B:-0.91,
X:30, Y:1, A:19.30, B:19.70,
X:30, Y:2, A:17.58, B:17.98,
X:30, Y:3, A:15.86, B:16.26,
X:30, Y:4, A:15.86, B:16.26,
X:30, Y:5, A:10.78, B:11.18,
X:30, Y:6, A:8.44, B:8.84,
X:30, Y:7, A:7.45, B:7.85,
X:30, Y:8, A:6.46, B:6.86,
X:30, Y:9, A:5.47, B:5.87,
X:30, Y:10, A:4.65, B:5.05,
X:30, Y:11, A:3.84, B:4.24,
X:30, Y:12, A:3.35, B:3.75,
X:30, Y:13, A:2.86, B:3.26,
X:30, Y:14, A:2.37, B:2.77,
X:30, Y:15, A:2.05, B:2.45,
X:30, Y:16, A:1.73, B:2.13,
X:30, Y:17, A:1.41, B:1.81,
X:30, Y:18, A:1.24, B:1.64,
X:30, Y:19, A:1.08, B:1.48,
X:30, Y:20, A:0.92, B:1.32,
X:30, Y:21, A:0.76, B:1.16,
X:30, Y:22, A:0.60, B:1.00,
X:30, Y:23, A:0.44, B:0.84,
X:30, Y:24, A:0.28, B:0.68,
X:30, Y:25, A:0.28, B:0.68,
X:30, Y:26, A:0.12, B:0.52,
X:30, Y:27, A:0.12, B:0.52,
X:30, Y:28, A:-0.04, B:0.36,
X:30, Y:29, A:-0.20, B:0.20,
X:30, Y:30, A:-0.20, B:0.20,
X:30, Y:31, A:-0.36, B:0.04,
X:30, Y:32, A:-0.36, B:0.04,
X:30, Y:33, A:-0.52, B:-0.12,
X:30, Y:34, A:-0.68, B:-0.28,
X:30, Y:35, A:-0.68, B:-0.28,
X:30, Y:36, A:-0.84, B:-0.44,
X:30, Y:37, A:-0.84, B:-0.44,
X:30, Y:38, A:-1.00, B:-0.60,
X:30, Y:39, A:-1.00, B:-0.60,
X:30, Y:40, A:-1.00, B:-0.60,
X:30, Y:41, A:-1.00, B:-0.60,
X:30, Y:42, A:-1.16, B:-0.76,
X:30, Y:43, A:-1.16, B:-0.76,
X:30, Y:44, A:-1.16, B:-0.76,
X:30, Y:45, A:-1.16, B:-0.76,
X:30, Y:46, A:-1.32, B:-0.92,
X:30, Y:47, A:-1.32, B:-0.92,
X:30, Y:48, A:-1.32, B:-0.92,
X:30, Y:49, A:-1.32, B:-0.92,
X:30, Y:50, A:-1.32, B:-0.92,
X:30, Y:51, A:-1.48, B:-1.08,
X:30, Y:52, A:-1.48, B:-1.08,
X:30, Y:53, A:-1.48, B:-1.08,
X:30, Y:54, A:-1.48, B:-1.08,
X:30, Y:55, A:-1.48, B:-1.08,
X:30, Y:56, A:-1.48, B:-1.08,
X:30, Y:57, A:-1.48, B:-1.08,
X:30, Y:58, A:-1.48, B:-1.08,
X:30, Y:59, A:-1.64, B:-1.24,
X:30, Y:60, A:-1.64, B:-1.24,
X:30, Y:61, A:-1.64, B:-1.24,
X:30, Y:62, A:-1.64, B:-1.24,
X:30, Y:63, A:-1.64, B:-1.24,
X:30, Y:64, A:-1.64, B:-1.24,
X:30, Y:65, A:-1.64, B:-1.24,
X:30, Y:66, A:-1.64, B:-1.24,
X:30, Y:67, A:-1.64, B:-1.24,
X:30, Y:68, A:-1.64, B:-1.24,
X:30, Y:69, A:-1.64, B:-1.24,
X:30, Y:70, A:-1.64, B:-1.24,
X:30, Y:71, A:-1.64, B:-1.24,
X:30, Y:72, A:-1.64, B:-1.24,
X:30, Y:73, A:-1.79, B:-1.39,
X:30, Y:74, A:-1.79, B:-1.39,
X:30, Y:75, A:-1.79, B:-1.39,
X:30, Y:76, A:-1.79, B:-1.39,
X:30, Y:77, A:-1.79, B:-1.39,
X:30, Y:78, A:-1.79, B:-1.39,
X:30, Y:79, A:-1.79, B:-1.39,
X:30, Y:80, A:-1.79, B:-1.39,
X:30, Y:81, A:-1.79, B:-1.39,
X:30, Y:82, A:-1.79, B:-1.39,
X:30, Y:83, A:-1.79, B:-1.39,
X:30, Y:84, A:-1.79, B:-1.39,
X:30, Y:85, A:-1.79, B:-1.39,
X:30, Y:86, A:-1.95, B:-1.55,
X:30, Y:87, A:-1.95, B:-1.55,
X:30, Y:88, A:-1.95, B:-1.55,
X:30, Y:89, A:-1.95, B:-1.55,
X:30, Y:90, A:-1.95, B:-1.55,
X:30, Y:91, A:-1.95, B:-1.55,
X:30, Y:92, A:-1.95, B:-1.55,
X:30, Y:93, A:-1.95, B:-1.55,
X:30, Y:94, A:-1.95, B:-1.55,
X:30, Y:95, A:-1.95, B:-1.55,
X:30, Y:96, A:-1.95, B:-1.55,
X:30, Y:97, A:-1.95, B:-1.55,
X:30, Y:98, A:-1.95, B:-1.55,
X:30, Y:99, A:-2.11, B:-1.71,
X:30, Y:100, A:-2.11, B:-1.71,
X:20, Y:1, A:18.18, B:18.58,
X:20, Y:2, A:16.45, B:16.85,
X:20, Y:3, A:14.74, B:15.14,
X:20, Y:4, A:14.74, B:15.14,
X:20, Y:5, A:9.65, B:10.05,
X:20, Y:6, A:7.32, B:7.72,
X:20, Y:7, A:6.32, B:6.72,
X:20, Y:8, A:5.33, B:5.73,
X:20, Y:9, A:4.35, B:4.75,
X:20, Y:10, A:3.53, B:3.93,
X:20, Y:11, A:2.71, B:3.11,
X:20, Y:12, A:2.22, B:2.62,
X:20, Y:13, A:1.74, B:2.14,
X:20, Y:14, A:1.25, B:1.65,
X:20, Y:15, A:0.93, B:1.33,
X:20, Y:16, A:0.61, B:1.01,
X:20, Y:17, A:0.28, B:0.68,
X:20, Y:18, A:0.12, B:0.52,
X:20, Y:19, A:-0.04, B:0.36,
X:20, Y:20, A:-0.20, B:0.20,
X:20, Y:21, A:-0.36, B:0.04,
X:20, Y:22, A:-0.52, B:-0.12,
X:20, Y:23, A:-0.68, B:-0.28,
X:20, Y:24, A:-0.84, B:0.44,
X:20, Y:25, A:-0.84, B:0.44,
X:20, Y:26, A:-1.00, B:-0.60,
X:20, Y:27, A:-1.00, B:-0.60,
X:20, Y:28, A:-1.16, B:-0.76,
X:20, Y:29, A:-1.32, B:-0.92,
X:20, Y:30, A:-1.32, B:-0.92,
X:20, Y:31, A:-1.48, B:-1.08,
X:20, Y:32, A:-1.48, B:-1.08,
X:20, Y:33, A:-1.64, B:-1.24,
X:20, Y:34, A:-1.80, B:-1.40,
X:20, Y:35, A:-1.80, B:-1.40,
X:20, Y:36, A:-1.96, B:-1.56,
X:20, Y:37, A:-1.96, B:-1.56,
X:20, Y:38, A:-2.12, B:-1.72,
X:20, Y:39, A:-2.12, B:-1.72,
X:20, Y:40, A:-2.12, B:-1.72,
X:20, Y:41, A:-2.12, B:-1.72,
X:20, Y:42, A:-2.28, B:-1.88,
X:20, Y:43, A:-2.28, B:-1.88,
X:20, Y:44, A:-2.28, B:-1.88,
X:20, Y:45, A:-2.28, B:-1.88,
X:20, Y:46, A:-2.44, B:-2.04,
X:20, Y:47, A:-2.44, B:-2.04,
X:20, Y:48, A:-2.44, B:-2.04,
X:20, Y:49, A:-2.44, B:-2.04,
X:20, Y:50, A:-2.44, B:-2.04,
X:20, Y:51, A:-2.60, B:-2.20,
X:20, Y:52, A:-2.60, B:-2.20,
X:20, Y:53, A:-2.60, B:-2.20,
X:20, Y:54, A:-2.60, B:-2.20,
X:20, Y:55, A:-2.60, B:-2.20,
X:20, Y:56, A:-2.60, B:-2.20,
X:20, Y:57, A:-2.60, B:-2.20,
X:20, Y:58, A:-2.60, B:-2.20,
X:20, Y:59, A:-2.76, B:-2.36,
X:20, Y:60, A:-2.76, B:-2.36,
X:20, Y:61, A:-2.76, B:-2.36,
X:20, Y:62, A:-2.76, B:-2.36,
X:20, Y:63, A:-2.76, B:-2.36,
X:20, Y:64, A:-2.76, B:-2.36,
X:20, Y:65, A:-2.76, B:-2.36,
X:20, Y:66, A:-2.76, B:-2.36,
X:20, Y:67, A:-2.76, B:-2.36,
X:20, Y:68, A:-2.76, B:-2.36,
X:20, Y:69, A:-2.76, B:-2.36,
X:20, Y:70, A:-2.76, B:-2.36,
X:20, Y:71, A:-2.76, B:-2.36,
X:20, Y:72, A:-2.76, B:-2.36,
X:20, Y:73, A:-2.92, B:-2.52,
X:20, Y:74, A:-2.92, B:-2.52,
X:20, Y:75, A:-2.92, B:-2.52,
X:20, Y:76, A:-2.92, B:-2.52,
X:20, Y:77, A:-2.92, B:-2.52,
X:20, Y:78, A:-2.92, B:-2.52,
X:20, Y:79, A:-2.92, B:-2.52,
X:20, Y:80, A:-2.92, B:-2.52,
X:20, Y:81, A:-2.92, B:-2.52,
X:20, Y:82, A:-2.92, B:-2.52,
X:20, Y:83, A:-2.92, B:-2.52,
X:20, Y:84, A:-2.92, B:-2.52,
X:20, Y:85, A:-2.92, B:-2.52,
X:20, Y:86, A:-3.08, B:-2.68,
X:20, Y:87, A:-3.08, B:-2.68,
X:20, Y:88, A:-3.08, B:-2.68,
X:20, Y:89, A:-3.08, B:-2.68,
X:20, Y:90, A:-3.08, B:-2.68,
X:20, Y:91, A:-3.08, B:-2.68,
X:20, Y:92, A:-3.08, B:-2.68,
X:20, Y:93, A:-3.08, B:-2.68,
X:20, Y:94, A:-3.08, B:-2.68,
X:20, Y:95, A:-3.08, B:-2.68,
X:20, Y:96, A:-3.08, B:-2.68,
X:20, Y:97, A:-3.08, B:-2.68,
X:20, Y:98, A:-3.08, B:-2.68,
X:20, Y:99, A:-3.23, B:-2.83,
X:20, Y:100, A:-3.23, B:-2.83,
X:10, Y:1, A:14.45, B:14.85,
X:10, Y:2, A:12.72, B:13.12,
X:10, Y:3, A:11.01, B:11.41,
X:10, Y:4, A:11.01, B:11.41,
X:10, Y:5, A:5.93, B:6.33,
X:10, Y:6, A:3.59, B:3.99,
X:10, Y:7, A:2.59, B:2.99,
X:10, Y:8, A:1.60, B:2.00,
X:10, Y:9, A:0.62, B:1.02,
X:10, Y:10, A:-0.20, B:0.20,
X:10, Y:11, A:-1.02, B:-0.62,
X:10, Y:12, A:-1.50, B:-1.10,
X:10, Y:13, A:-1.99, B:-1.59,
X:10, Y:14, A:-2.48, B:-2.08,
X:10, Y:15, A:-2.80, B:-2.40,
X:10, Y:16, A:-3.12, B:-2.72,
X:10, Y:17, A:-3.45, B:-3.05,
X:10, Y:18, A:-3.61, B:-3.21,
X:10, Y:19, A:-3.77, B:-3.37,
X:10, Y:20, A:-3.93, B:-3.53,
X:10, Y:21, A:-4.09, B:-3.69,
X:10, Y:22, A:-4.25, B:-3.85,
X:10, Y:23, A:-4.41, B:-4.01,
X:10, Y:24, A:-4.57, B:-4.17,
X:10, Y:25, A:-4.57, B:-4.17,
X:10, Y:26, A:-4.73, B:-4.33,
X:10, Y:27, A:-4.73, B:-4.33,
X:10, Y:28, A:-4.89, B:-4.49,
X:10, Y:29, A:-5.05, B:-4.65,
X:10, Y:30, A:-5.05, B:-4.65,
X:10, Y:31, A:-5.21, B:-4.81,
X:10, Y:32, A:-5.21, B:-4.81,
X:10, Y:33, A:-5.37, B:-4.97,
X:10, Y:34, A:-5.53, B:-5.13,
X:10, Y:35, A:-5.53, B:-5.13,
X:10, Y:36, A:-5.69, B:-5.29,
X:10, Y:37, A:-5.69, B:-5.29,
X:10, Y:38, A:-5.85, B:-5.45,
X:10, Y:39, A:-5.85, B:-5.45,
X:10, Y:40, A:-5.85, B:-5.45,
X:10, Y:41, A:-5.85, B:-5.45,
X:10, Y:42, A:-6.01, B:-5.61,
X:10, Y:43, A:-6.01, B:-5.61,
X:10, Y:44, A:-6.01, B:-5.61,
X:10, Y:45, A:-6.01, B:-5.61,
X:10, Y:46, A:-6.17, B:-5.77,
X:10, Y:47, A:-6.17, B:-5.77,
X:10, Y:48, A:-6.17, B:-5.77,
X:10, Y:49, A:-6.17, B:-5.77,
X:10, Y:50, A:-6.17, B:-5.77,
X:10, Y:51, A:-6.33, B:-5.93,
X:10, Y:52, A:-6.33, B:-5.93,
X:10, Y:53, A:-6.33, B:-5.93,
X:10, Y:54, A:-6.33, B:-5.93,
X:10, Y:55, A:-6.33, B:-5.93,
X:10, Y:56, A:-6.33, B:-5.93,
X:10, Y:57, A:-6.33, B:-5.93,
X:10, Y:58, A:-6.33, B:-5.93,
X:10, Y:59, A:-6.49, B:-6.09,
X:10, Y:60, A:-6.49, B:-6.09,
X:10, Y:61, A:-6.49, B:-6.09,
X:10, Y:62, A:-6.49, B:-6.09,
X:10, Y:63, A:-6.49, B:-6.09,
X:10, Y:64, A:-6.49, B:-6.09,
X:10, Y:65, A:-6.49, B:-6.09,
X:10, Y:66, A:-6.49, B:-6.09,
X:10, Y:67, A:-6.49, B:-6.09,
X:10, Y:68, A:-6.49, B:-6.09,
X:10, Y:69, A:-6.49, B:-6.09,
X:10, Y:70, A:-6.49, B:-6.09,
X:10, Y:71, A:-6.49, B:-6.09,
X:10, Y:72, A:-6.49, B:-6.09,
X:10, Y:73, A:-6.65, B:-6.25,
X:10, Y:74, A:-6.65, B:-6.25,
X:10, Y:75, A:-6.65, B:-6.25,
X:10, Y:76, A:-6.65, B:-6.25,
X:10, Y:77, A:-6.65, B:-6.25,
X:10, Y:78, A:-6.65, B:-6.25,
X:10, Y:79, A:-6.65, B:-6.25,
X:10, Y:80, A:-6.65, B:-6.25,
X:10, Y:81, A:-6.65, B:-6.25,
X:10, Y:82, A:-6.65, B:-6.25,
X:10, Y:83, A:-6.65, B:-6.25,
X:10, Y:84, A:-6.65, B:-6.25,
X:10, Y:85, A:-6.65, B:-6.25,
X:10, Y:86, A:-6.80, B:-6.40,
X:10, Y:87, A:-6.80, B:-6.40,
X:10, Y:88, A:-6.80, B:-6.40,
X:10, Y:89, A:-6.80, B:-6.40,
X:10, Y:90, A:-6.80, B:-6.40,
X:10, Y:91, A:-6.80, B:-6.40,
X:10, Y:92, A:-6.80, B:-6.40,
X:10, Y:93, A:-6.80, B:-6.40,
X:10, Y:94, A:-6.80, B:-6.40,
X:10, Y:95, A:-6.80, B:-6.40,
X:10, Y:96, A:-6.80, B:-6.40,
X:10, Y:97, A:-6.80, B:-6.40,
X:10, Y:98, A:-6.80, B:-6.40,
X:10, Y:99, A:-6.96, B:-6.56, and
X:10, Y:100, A:-6.96, B:-6.56

20. The lens control program of any one of claims 15 to 17, **characterized in that** the focal length information comprises a plurality of pieces of focal length identification information using temperature as a parameter.
